(19)

**Europäisches Patentamt**

**European Patent Office**

**Office européen des brevets**

(11) **EP 4 492 748 A1**

(12) **EUROPEAN PATENT APPLICATION**

(43) Date of publication:
**15.01.2025 Bulletin 2025/03**

(21) Application number: **24187535.0**

(22) Date of filing: **09.07.2024**

(51) International Patent Classification (IPC):
**H04L 45/02** (2022.01)     **H04L 45/12** (2022.01)
**H04L 45/00** (2022.01)

(52) Cooperative Patent Classification (CPC):
**H04L 45/08; H04L 45/123; H04L 45/124;**
H04L 45/04; H04L 45/46

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.07.2023 US 202318220124**

(71) Applicant: **Source Ltd.**
**VLT1436 Valletta (MT)**

(72) Inventors:
• **UR, Shmuel**
**2016400 Shorashim (IL)**
• **ATIAS-BAR, Sharon**
**6930123 Tel Aviv (IL)**
• **DUBINSKY, Ilya**
**4464501 Kefar Sava (IL)**

(74) Representative: **Pearl Cohen Zedek Latzer Baratz
UK LLP
The Gridiron Building
One Pancras Square
London N1C 4AG (GB)**

(54) **SYSTEM AND METHOD FOR OPTIMIZING ROUTING OF TRANSACTIONS OVER A COMPUTER NETWORK**

(57)     A system and a method of optimizing a plurality of data elements including one or more nodes within a first network of nodes may include: receiving a value of one or more data transfer parameters pertaining to one or more data transfers conducted over one or more nodes of a first computer network; perturbating a value of one or more elements; creating a simulated computer network based on the one or more perturbated values; for each network of the first computer network and the simulated computer network, calculating a value of at least one performance parameter; and generating, based on the calculation, a suggestion for optimizing the data elements, wherein the suggestion may include at least one perturbated data element value.

Fig. 9

**Description**

**FIELD OF THE INVENTION**

The present invention relates to data transfer. More particularly, the present invention relates to systems and methods for optimizing data routing in a computer network.

**BACKGROUND OF THE INVENTION**

Data transfer in computer systems is typically carried out in a single format (or protocol) from a first node to a second predetermined node of the computer system. In order to transfer data of different types (or different protocols) to the same end point, different computer systems are typically required with each computer system carrying out data transfer in a different data format.

Moreover, while current computer systems have complex architecture with multiple computing nodes, for instance all interconnected via the internet (e.g., in a secure connection), data routing is not optimized. For example, transferring a video file between two computers, or transferring currency between two bank accounts, is typically carried out in a session with a single format and routed within the computer network without consideration to minimal resource consumption. There is therefore a need for optimizing data routing to enable, *inter alia,* improved utilization of computational resources.

**SUMMARY OF THE INVENTION**

Embodiments of the present invention include a system and a method for routing data transfers, or transactions, between remotely connected computer systems such as a source node and a destination node of a computer network, where each node of the computer network may be connected to at least one other node via one or more links.

Embodiments of the present invention may further include selection of one of a plurality of source nodes, and routing of a requested data transfer between the selected source node and the destination node. Selection of the source node among the plurality of source nodes may be done in real time or near real time and may be based on at least one data transfer parameter pertaining to the destination node. The term "near real time" may be used herein to refer to a short period of time (e.g., a few seconds) that may be, for example, insubstantial to a user's experience when utilizing embodiments of the invention.

Embodiments of the system may include, for example, a clustering model; at least one neural network; a routing engine; and at least one processor.

The at least one processor may be configured to: receive a request to route a data transfer between two nodes of the computer network; extract from the request, a feature vector (FV), that may include at least one feature; and associate the requested data transfer with a cluster of data transfers in the clustering model based on the extracted FV.

Embodiments of the system may calculate or determine, by any appropriate routing algorithm as known in the art a plurality of available routing paths that may connect the two nodes of the computer network.

The neural network may receive the plurality of available routing paths, and may be configured to produce a selection of an optimal route for the requested data transfer from a plurality of available routes or paths, based on the FV, and the routing engine may be configured to route the requested data transfer through the computer network according to the selection.

According to some embodiments, the clustering model may be configured to: accumulate a plurality of FVs, each including at least one feature associated with a respective received data transfer; cluster the plurality of FVs to clusters, according to the at least one feature; and associate at least one other requested data transfer with a cluster, according to a maximum-likelihood best fit of the at least one other requested data transfer's FV.

The at least one processor may be configured to attribute at least one group characteristic (GC) to the requested data transfer based on the association of the requested data transfer with the cluster. The neural network may be configured to produce a selection of an optimal route for the requested data transfer from a plurality of available routes, based on at least one of the FV and GC.

According to some embodiments, the GC may be selected from, or correspond to, for example: availability of computational resources, an expected servicing data transfer time, a probability of data transfer success, a probability of data transfer failure, etc.

According to some embodiments, the neural network may be configured to select an optimal route for the requested data transfer from a plurality of available routes, based on at least one of the FV and GC and at least one weighted source preference.

The at least one processor may be configured to calculate at least one cost metric. The neural network may be configured to select an optimal route for the requested data transfer from a plurality of available routes, based on at least one of the FV and GC, at least one weighted source preference, and the at least one calculated cost metric.

According to some embodiments, the at least one cost metric may include or correspond, for example to an expected or predicted latency of the requested data transfer per at least one available route.

According to some embodiments, each cluster of the clustering model may be associated with a respective neural network module, and each neural network module may be configured to select at least one routing path for at least one specific data transfer associated with the respective cluster.

Embodiments of the invention may include a method of routing data transfers within or across a computer network. The method may include: receiving, by a processor, a request to route a data transfer between two nodes of the computer network, each node connected to at least one other node via one or more links; extracting from the data transfer request, an FV, including at least one feature associated with the requested data transfer; associating the requested data transfer with a cluster of data transfers in a clustering model based on the extracted FV; selecting an optimal route for the requested data transfer from a plurality of available routes, based on the FV; and routing the requested data transfer according to the selection.

According to some embodiments, associating the requested data transfer with a cluster may include: accumulating a plurality of FVs, each including at least one feature associated with a respective received data transfer; clustering the plurality of FVs to clusters in the clustering model, according to the at least one feature; and associating at least one other requested data transfer with a cluster according to a maximum-likelihood best fit of the at least one other requested data transfer's FV.

According to some embodiments, attributing at least one GC to the requested data transfer may include: calculating at least one GC for each cluster; and attributing the received request the at least one calculated GC based on the association of the requested data transfer with the cluster.

According to some embodiments, selecting an optimal route for the requested data transfer from a plurality of available routes may include: providing at least one of an FV and a GC as a first input to a neural-network; providing at least one cost metric as a second input to the neural-network; providing the plurality of available routes as a third input to the neural-network; and obtaining, from the neural-network a selection of an optimal route based on at least one of the first, second and third inputs.

According to some embodiments, selecting an optimal route for the requested data transfer from a plurality of available routes may include for example providing at least one data transfer parameter (e.g., one or more of an FV, a GC and a cost metric) as a first input to a neural-network (NN); providing at least one respective source preference weight as a second input to the NN; providing the plurality of available routes as a third input to the neural-network; and obtaining, from the NN a selection of one or more optimal routing paths based on at least one of the first, second and third inputs.

Embodiments may further include receiving at least one weight or preference weight value and determining the cost metric per the at least one available route based on the calculations and the at least one weight value.

Embodiments of the present invention may include a system and a method for routing data transfers within a computer network, by at least one processor. Embodiments of the method may include:

receiving a data transfer request to route a data transfer between one of a plurality of source nodes and a destination node of the computer network;

extracting from the data transfer request one or more data transfer parameters pertaining to the destination node;

receiving a set of source preference weights wherein each source preference weight corresponds to a data transfer parameter;

selecting a source node from the plurality of source nodes based on at least one received source preference weight and at least one corresponding data transfer parameter; and

routing the requested data transfer through nodes of the computer network between the selected source node and the destination node.

Embodiments of the method may further include, for each source node:

identifying a plurality of available routing paths for propagating the data transfer between the source node and destination node based on the data transfer request;

obtaining one or more data transfer parameters for each available routing path, based on the data transfer request;

receiving a set of source preference weights where each source preference weight may correspond to a data transfer parameter; and

selecting one or more routing paths from the plurality of available routing paths as optimal, based on the one or more obtained data transfer parameters and respective source preference weights.

Embodiments of the method may further include determining the best routing path among the one or more optimal routing paths based on the received set of source preference weights.

According to some embodiments, selecting a source node from the plurality of source nodes may be based on the determined best routing path, and routing the requested data transfer between the selected source node and the destination node may be done through the determined best routing path.

According to some embodiments, obtaining one or more data transfer parameters may include extracting, from the data transfer request, a FV that may include one or more features associated with the requested data transfer.

Embodiments of the method may further include:

associating the requested data transfer with a cluster of data transfers in a clustering model based on the extracted FV; and

attributing at least one GC to the requested data transfer, based on the association of the requested data transfer with the cluster.

The one or more data transfer parameters further may include at least one of: a feature of the FV and a GC parameter.

Obtaining one or more data transfer parameters may include calculating at least one cost metric, which may include or correspond to, for example, to an expected or predicted latency of the requested data transfer per at least one available route, as well as to alternative expected or predicted quantities. Data transfer parameters may include at least one cost metric.

The one or more data transfer parameters may include at least one of: a feature of the FV, a GC parameter and a cost metric.

Selecting one or more routing paths from the plurality of available routing paths as optimal may include:

providing at least one data transfer parameter as a first input to a NN;
providing at least one respective source preference weight as a second input to the NN;
providing the plurality of available routes as a third input to the NN; and
obtaining, from the NN, a selection of one or more optimal routing paths based on at least one of the first, second and third inputs.

Embodiments of the method may include:

perturbating a value of one or more source preference weights of the received set of source preference weights, to produce one or more perturbated sets of source preference weights;
for each set of the received set of source preference weights and the one or more perturbated sets of source preference weights, providing the source preference weights as the second input to the NN and obtaining, from the NN, a selection of an optimal routing path from the plurality of available routing paths.

According to some embodiments, routing the requested data transfer through nodes of the computer network according to a routing scheme may include attempting to route the requested data transfer in a serial sequence, one routing path after the other, according to the ordered list of the one or more selected routing paths.

Alternately, or additionally, routing the requested data transfer through nodes of the computer network according to the routing scheme may include attempting to route the requested data transfer in a parallel sequence, through two or more routing paths, according to the ordered list of the one or more selected routing paths.

Alternately, or additionally, routing the requested data transfer through nodes of the computer network according to the routing scheme may include attempting to route the requested data transfer in a combination of a parallel sequence and a serial sequence, according to the ordered list of the one or more selected routing paths.

Routing the requested data transfer may be limited by a timeframe, and the ordered list may be ordered based on at least one of: the timeframe and a completion time of at least routing attempt.

Embodiments of the method may include calculating a dependent probability of success between different routing paths. The ordered list may be ordered according to the calculated dependent probability of success.

If a routing of the requested data transfer through a first routing path fails, then the routing scheme may be amended or revised according to the dependent probability of success, so that the routing scheme may include an amended ordered list of routing paths, and the requested data transfer may be routed through the computer network according to the amended ordered list of routing paths.

According to some embodiments, one or more source preference weights may correspond to one or more parameters that may be selected from a group that may include: a FV parameter; a GC parameter; a cost metric parameter; a data transfer timeframe, and the like.

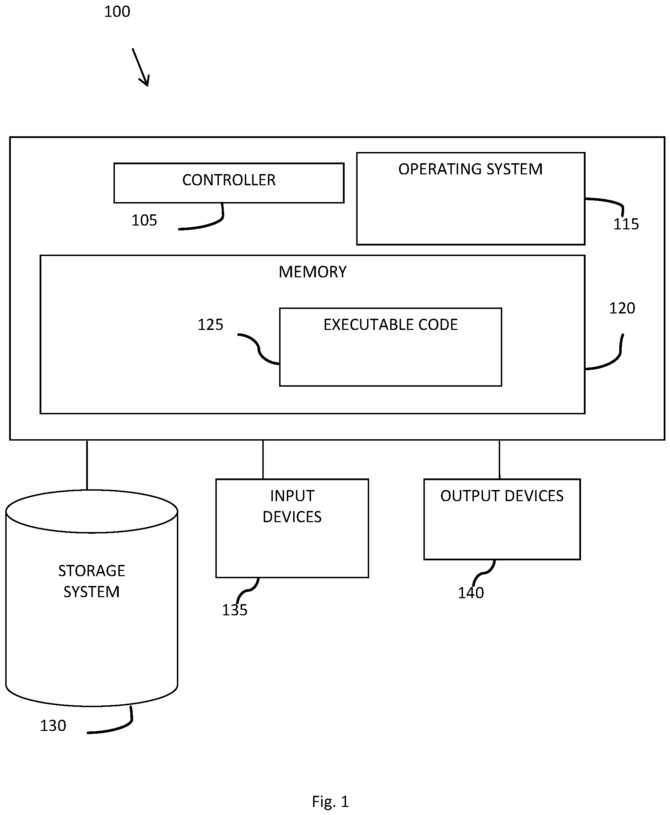

Embodiments of the present invention may include a system and a method of routing data transfers between nodes of a computer network, by at least one processor, or controller (e.g., element 105 of Fig. 1). Embodiments of the method may include:

receiving a destination feature vector (DFV) for at least one destination node of a plurality of destination nodes of the computer network;

receiving a data transfer request to route a data transfer between a source node of the computer network and the at least one destination node;

extracting from the data transfer request one or more data transfer parameters; and

selecting a destination node from the plurality of destination nodes based on one or more of the data transfer parameters and the DFV of the at least one destination node.

Embodiments of the present invention may include routing the requested data transfer through nodes of the computer network between the source node and the selected destination node.

Embodiments of the present invention may include receiving a set of destination preference weights, where each preference weight may correspond to a data transfer parameter. According to some embodiments, selecting a destination node from the plurality of destination nodes may be further based on the received set of destination preference weights.

Embodiments of the present invention may include receiving an event indication corresponding to occurrence of a real-world event. According to some embodiments, selecting a destination node from the plurality of destination nodes may be further based on the event indication.

Embodiments may further include:

selecting a first destination node;

receiving a second data transfer request to route a data transfer between a source node of the computer network and a second destination node;

extracting at least one data transfer parameter from the second data transfer request;

analyzing at least one of a data transfer parameter of the first data transfer request and a data transfer parameter of the second data transfer request; and

selecting a destination node between the first destination node and the second destination node in near real-time, based on the analysis.

Embodiments may further provide optimizing a plurality of data elements which may for example describe or represent nodes in a computer network, and may include for example performing, for one or more of the data elements:

perturbating a value of one or more of the data elements to add an additional element;

creating a simulated computer network including the additional element based on the one or more perturbated values;

for each network of the first computer network and the simulated computer network, calculating a value of at least one performance parameter, wherein the calculating of the at least one performance parameter comprises:

identifying one or more available routing paths for propagating the data transfer between one or more first nodes and one or more second nodes;

selecting, by at least one neural network (NN), an optimal routing path from the one or more available routing paths, wherein the selecting of a routing path comprises emitting, by at least one of the NNs, a binary selection vector on an output layer of neural nodes; and

generating, based on the calculation, a suggestion for optimizing the plurality of data elements, wherein the suggestion comprises at least one perturbated data element value.

Embodiments of the present invention include a system for routing data transfers between nodes of a computer network. Embodiments of the system may include: one or more non-transitory memory devices where modules of instruction code are stored, and one or more processors, respectively associated with the one or more memory devices. The one or more processors may be configured to execute the modules of instruction code, such that upon execution of said modules of instruction code, the one or more processors are further configured to perform at least one method of routing data transfers between nodes of a computer network, as elaborated herein.

BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

Fig. 1 shows a block diagram of an exemplary computing device, according to some embodiments of the invention;

Fig. 2 is a block diagram of a general data transfer routing system, according to some embodiments of the invention;

Fig. 3A and Fig. 3B are block diagrams, presenting two different examples for routing of data transfers through or via nodes of a computer network, according to some embodiments of the invention;

Fig. 4 is a block diagram of a data transfer routing system, according to some embodiments of the invention;

Fig. 5 is a block diagram, depicting an exemplary implementation of a neural network according to some embodiments of the invention;

Fig. 6 is a flow diagram, depicting a method of routing data transfers through a computer network according to some embodiments of the invention;

Fig. 7 is a block diagram presenting an example for routing a requested monetary exchange (ME) data transfer through nodes of a computer network, based on data transfer parameters, according to some embodiments;

Fig. 8 is a flow diagram depicting a method for routing a requested data transfer through a computer network by at least one processor, according to some embodiments.

Fig. 9 is a block diagram depicting a data transfer routing system, according to some embodiments of the invention;

Fig. 10 is a flow diagram depicting a method of routing data transfers through a computer network according to some embodiments of the invention;

Fig. 11 is a block diagram, presenting a system for routing a requested data transfer through nodes of a computer network, according to some embodiments;

Fig. 12 is a flow diagram depicting a method of routing data transfers through a computer network according to some embodiments of the invention;

Fig. 13 is a block diagram, presenting a system for optimizing a plurality of data items which may describe an organizational structure, according to some embodiments of the invention;

Fig. 14A is a block diagram, presenting a simplified, non-exhaustive example representation of an organizational structure (OS) network, according to some embodiments of the invention;

Fig. 14B is a block diagram, presenting an example simulated computer network, according to some embodiments of the invention; and

Fig. 15 is a flow diagram depicting a method of optimizing a plurality of data items which may describe or represent an organizational structure, according to some embodiments of the invention.

Fig. 16, depicts possible routing paths for Example 1 using some embodiments of the invention.

Fig. 17 is a flowchart describing an example calculation of a cost metric according to some embodiments of the invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

## DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention.

In the following detailed description, numerous specific details are set forth in order to provide a thorough understanding of the invention. However, it will be understood by those skilled in the art that the present invention may be practiced without these specific details. In other instances, well-known methods, procedures, and components have not been described in detail so as not to obscure the present invention. Some features or elements described with respect to one embodiment may be combined with features or elements described with respect to other embodiments. For the sake of clarity, discussion of same or similar features or elements may not be repeated.

Although embodiments of the invention are not limited in this regard, discussions utilizing terms such as, for example, "processing," "computing," "calculating," "determining," "establishing", "analyzing", "checking", or the like, may refer to operation(s) and/or process(es) of a computer, a computing platform, a computing system, or other electronic computing device, that manipulates and/or transforms data represented as physical (e.g., electronic) quantities within the computer's registers and/or memories into other data similarly represented as physical quantities within the computer's registers and/or memories or other information non-transitory storage medium that may store instructions to perform operations and/or processes. Although embodiments of the invention are not limited in this regard, the terms "plurality" and "a plurality" as used herein may include, for example, "multiple" or "two or more". The terms "plurality" or "a plurality" may be used throughout the specification to describe two or more components, devices, elements, units, parameters, or the like.

The term set when used herein may include one or more items. Unless explicitly stated, the method embodiments described herein are not constrained to a particular order or sequence. Additionally, some of the described method embodiments or elements thereof can occur or be performed simultaneously, at the same point in time, or concurrently.

According to some embodiments, methods and systems are provided for routing data transfers in a computer network. The method may, for example, be mostly based on: (1) specific characteristics of a requested data transfer; (2) network architecture of remotely connected computer systems which may take part in the transfer process; and (3) possible session and/or format considerations or user preferences - include: receiving a request to route a data transfer between two nodes of the computer network, each node connected via a link; automatically determining at least one characteristic and / or type of the requested data transfer; and selection of an optimal route from a plurality of available routes for the requested data transfer, in accordance with the determined characteristic and / or type and in accordance with available resources of the computer network to route data between the two nodes. In some embodiments, the calculated at least one route includes at least one node other than the two nodes.

The following Table 1 includes a list of terms used throughout this document, alongside respective definitions of the terms, for the reader's convenience:

Table 1

| Node | The term 'Node' may be used herein to refer to a computerized system, used for processing and/or routing data transfers within a network of nodes. Nodes may include, for example: an individual computer, a server in an organization, a mobile communication device and the like. |
|---|---|
| Data transfer/transaction | The term 'data transfer' or 'network transaction' may be used herein to refer to communication of data between a source node and a destination node of a computer network. According to some embodiments, data transfers may include a single, one-way transfer of data between the source node and the destination node. For example: a first server (source node) may propagate at least one data file to a second server (destination node) as a data transfer or part of a data transfer. As used herein, a "data transfer" may generally include a plurality of individual transfers or exchanges of data between the source node and the destination node. For example, a given data transfer may be or may include a an exchange of data between two remotely connected computer systems or nodes where in order to carry out the data transfer, a plurality of data needs to be transferred between the servers and other computer equipment physically or remotely connected to the two systems or nodes. In general, data transfer, or network communication as used herein may correspond to various operations, such as for example uploading a file (such as, e.g., a video file), sending an email or message using the internet, using phone data, sending a request to upload a file, to send a message or email, wanting to start synchronic communication (e.g., phone or video call) and many options are possible such as phone, the WhatsApp platform, the Zoom platform, ... and so forth. |
| Data transfer request | The term "Data transfer request" may be used herein to refer to a request placed by a user or computer system, for a data transfer between a source node and a destination node of a computer network. A data transfer request may be provided in various formats, for example as demonstrated herein. |
| User | The term 'User' may be used herein to refer to, e.g., an individual or an organization that places at least one data transfer request. According to some embodiments, the user may be associated with a profile, including at least one user preference, and data pertaining to previous data transfer requests placed by the user. |
| Data transfer feature vector (FV) | The term "Feature Vector" (FV) may be used herein to refer to a data structure, including parameters associated with a data transfer request. For example, data transfers may be characterized by parameters such as: a data transfer protocol, size, priority, |
| | number of recipients or destinations, an identification (e.g., an IP address) of a source node, an identification (e.g., an IP address) of a destination node, etc. The FV may include at least one of these parameters in a data structure for further processing. A vector may be for example an ordered list of data items, but the data in the FV may be stored in a different structure. |

(continued)

| | | |
|---|---|---|
| Data transfer cluster | The term "Data transfer cluster" may be used herein to refer to an aggregation of data transfers according to data transfer FVs. Data transfer clusters may, for example, be obtained by inputting a plurality of FVs, each associated with a specific data transfer request, to an unsupervised clustering model. | |
| | Embodiments may subsequently associate at least one other (e.g. new) requested data transfer to one cluster of the clustering model, as known to persons skilled in the art. | |
| Group Characteristics (GCs) | The term "Group characteristics" may be used herein to refer to at least one characteristic of a group of data transfers. GCs may include for example availability of computational resources, an expected data transfer time, a probability of data transfer success, a probability of data transfer failure, etc. | |
| | According to some embodiments, at least one GC may be attributed to at least one data transfer cluster. For example, a processor may analyze the characteristics, such as for example timings of all data transfers within a cluster and may attribute these data transfers as having a long expected servicing time. | |
| Routing path | The term "Routing path" may be used herein to refer to a path through or via nodes and links of the computer network, specified by embodiments of the system for propagation of a data transfer between a source node and a target or destination node of a computer network. | |
| | Embodiments may include identifying a plurality of available routing paths for propagation of a data transfer between a source node and a target or destination node of a computer network, as known to persons skilled in the art of computer networks. | |
| Cost metrics | The term "Cost metrics" may be used herein to refer to a set of metrics that may be used to evaluate different available routing paths, to select an optimal routing path. | |
| | In some embodiments, cost metrics may include or correspond to, for example, an expected or predicted latency of the requested data transfer per at least one available route. Alternative example cost metrics and related parameters are specified herein. | |
| | In some embodiment, cost may refer to or include, for example, expected, calculated or predicted computer network load or usage for requested data transfers, which may, e.g., be associated with potential strain on or slowing down of a network; to computer storage or electricity requirements, packet losses (e.g., using the User Datagram Protocol), and the like. | |
| | The calculation of some cost metrics by some embodiments may require measuring and/or querying different informative quantities, such as for example measuring or querying load balancing on a network. Such measuring or querying may itself be associated with additional cost (e.g., slowing down the network). | |
| Data transfer parameters | The term "Data transfer parameters" may be used herein to refer to one or more data elements associated with a parameter or characteristic of a data transfer. | |
| | Data transfer parameters may include for example one or more of: an FV (e.g., an identification (e.g., an IP address) of a source node, an identification (e.g., an IP address) of a destination node, etc.) a GC (e.g., a probability of data transfer success), and the like. | |

(continued)

| Preference, preference weight | The terms "preference" and "user preference" may be used herein interchangeably to refer to a user's preference or requirement in relation to at least one parameter of at least one data transfer. |
|---|---|
| | As elaborated herein, embodiments of the invention may enable associating a weight value (e.g., a preference weight, such as element 251-a, 251-b of Fig. 5, described in detail herein) to one or more parameters of at least one data transfer, and thus express the importance, significance or preference that the user may relate to the respective data transfer parameter. |
| | Embodiments of the invention may consider the one or more preference weights, as elaborated herein (e.g., in relation to Fig. 5 and/or Fig. 14B, described in detail herein), for example to route a data transfer through an optimal routing path, to enable routing of a data transfer via the best routing path. |
| | Non-limiting examples for preference weights (PW) 251 (e.g., 251-a, 251-b) that may be applicable to respective data transfer parameters may include: a PW for minimal data transfer time, a PW for the likelihood or probability of data transfer success or failure, and the like. |

Reference is made to Fig. 1, which shows a block diagram of an exemplary computing device, according to some embodiments of the invention. A device 100 may include a controller 105 that may be, for example, a central processing unit processor (CPU), a chip or any suitable computing or computational device, an operating system 115, a memory 120, executable code 125, a storage system 130 that may include input devices 135 and output devices 140. Controller 105 (or one or more controllers or processors, possibly across multiple units or devices) may be configured to carry out methods described herein, and/or to execute or act as the various modules, units, etc. More than one computing device 100 may be included in, and one or more computing devices 100 may act as the components of, a system according to embodiments of the invention.

Operating system 115 may be or may include any code segment (e.g., one similar to executable code 125 described herein) designed and/or configured to perform tasks involving coordination, scheduling, arbitration, supervising, controlling or otherwise managing operation of computing device 100, for example, scheduling execution of software programs or tasks or enabling software programs or other modules or units to communicate. Operating system 115 may be a commercial operating system. It will be noted that an operating system 115 may be an optional component, e.g., in some embodiments, a system may include a computing device that does not require or include an operating system 115. For example, a computer system may be, or may include, a microcontroller, an application specific circuit (ASIC), a field programmable array (FPGA) and/or system on a chip (SOC) that may be used without an operating system.

Memory 120 may be or may include, for example, a Random Access Memory (RAM), a read only memory (ROM), a Dynamic RAM (DRAM), a Synchronous DRAM (SD-RAM), a double data rate (DDR) memory chip, a Flash memory, a volatile memory, a non-volatile memory, a cache memory, a buffer, a short term memory unit, a long term memory unit, or other suitable memory units or storage units. Memory 120 may be or may include a plurality of, possibly different memory units. Memory 120 may be a computer or processor non-transitory readable medium, or a computer non-transitory storage medium, e.g., a RAM.

Executable code 125 may be any executable code, e.g., an application, a program, a process, task or script. Executable code 125 may be executed by controller 105 possibly under control of operating system 115. Although, for the sake of clarity, a single item of executable code 125 is shown in Fig. 1, a system according to some embodiments of the invention may include a plurality of executable code segments similar to executable code 125 that may be loaded into memory 120 and cause controller 105 to carry out methods described herein.

Storage system 130 may be or may include, for example, a flash memory as known in the art, a memory that is internal to, or embedded in, a micro controller or chip as known in the art, a hard disk drive, a CD-Recordable (CD-R) drive, a Blu-ray disk

(BD), a universal serial bus (USB) device or other suitable removable and/or fixed storage unit. Content may be stored in storage system 130 and may be loaded from storage system 130 into memory 120 where it may be processed by controller 105. In some embodiments, some of the components shown in Fig. 1 may be omitted. For example, memory 120 may be a non-volatile memory having the storage capacity of storage system 130. Accordingly, although shown as a separate component, storage system 130 may be embedded or included in memory 120.

Input devices 135 may be or may include any suitable input devices, components or systems, e.g., a detachable keyboard or keypad, a mouse and the like. Output devices 140 may include one or more (possibly detachable) displays or monitors, speakers and/or any other suitable output devices. Any applicable input/output (I/O) devices may be connected to computing device 100 as shown by blocks 135 and 140. For example, a wired or wireless network interface card (NIC), a universal serial bus (USB) device or external hard drive may be included in input devices 135 and/or output devices 140. It will be recognized that any suitable number of input devices 135 and output device 140 may be operatively connected to computing device 100 as shown by blocks 135 and 140. For example, input devices 135 and output devices 140 may be used by a technician or engineer in order to connect to a computing device 100, update software and the like. Input and/or output devices or components 135 and 140 may be adapted to interface or communicate.

Embodiments of the invention may include a computer readable medium in transitory or non-transitory form that may include instructions, e.g., computer-executable instructions, which, when executed by a processor or controller, cause the processor or controller to carry out methods disclosed herein. For example, embodiments of the invention may include an article such as a computer or processor non-transitory readable medium, or a computer or processor non-transitory storage medium, such as for example a memory, a disk drive, or a USB flash memory, encoding, including or storing instructions, e.g., computer-executable instructions, which, when executed by a processor or controller, carry out methods disclosed herein. For example, a storage medium such as memory 120, computer-executable instructions such as executable code 125 and a controller such as controller 105.

The storage medium may include, but is not limited to, any type of disk including magneto-optical disks, semiconductor devices such as read-only memories (ROMs), random access memories (RAMs), such as a dynamic RAM (DRAM), erasable programmable read-only memories (EPROMs), flash memories, electrically erasable programmable read-only memories (EEPROMs), magnetic or optical cards, or any type of media suitable for storing electronic instructions, including programmable storage devices.

Embodiments of the invention may include components such as, but not limited to, a plurality of central processing units (CPU) or any other suitable multi-purpose or specific processors or controllers (e.g., controllers similar to controller 105), a plurality of input units, a plurality of output units, a plurality of memory units, and a plurality of storage units. A system may additionally include other suitable hardware components and/or software components. In some embodiments, a system may include or may be, for example, a personal computer, a desktop computer, a mobile computer, a laptop computer, a notebook computer, a terminal, a workstation, a server computer, a Personal Digital Assistant (PDA) device, a tablet computer, a network device, or any other suitable computing device.

In some embodiments, a system may include or may be, for example, a plurality of components that include a respective plurality of central processing units, e.g., a plurality of CPUs as described, a plurality of chips, FPGAs or SOCs, a plurality of computer or network devices, or any other suitable computing device. For example, a system as described herein may include one or more devices such as the computing device 100.

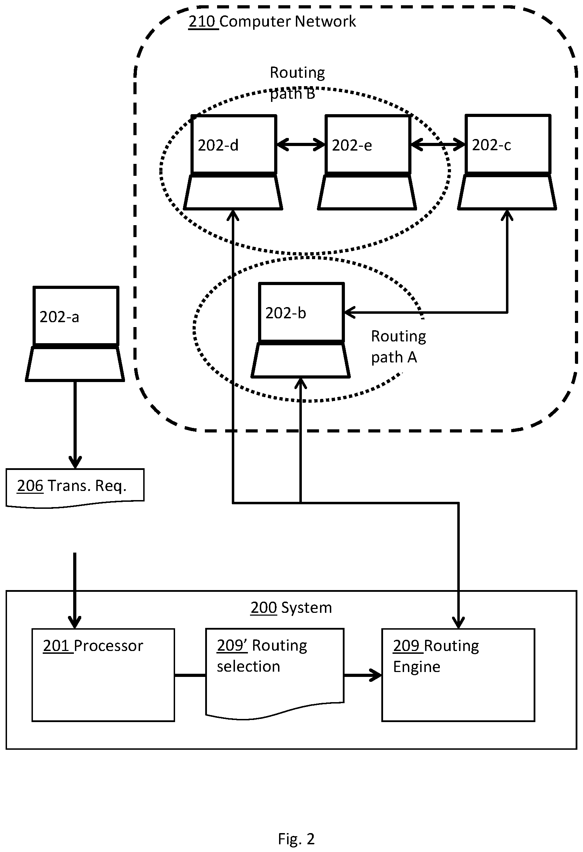

Reference is made to Fig. 2 which is a block diagram, depicting a non-limiting example of a general data transfer routing system 200, according to some embodiments of the invention. The direction of arrows in Fig. 2 may indicate the direction of information flow in some embodiments. Of course, other information may flow in ways not according to the depicted arrows.

System 200 may include at least one processor 201 (such as controller 105 of Fig. 1) in communication (e.g., via a dedicated communication module) with at least one computing node (e.g. element 202-a). Processor 201 is shown for simplicity, and may include or be embodied in more than one computing device, computer, etc. Thus, reference below to processor 201 performing certain functions may in some embodiments mean that multiple computing systems perform the function if appropriate.

According to some embodiments, system 200 may be centrally placed, to control routing of a data transfer over network 210 from a single location. For example, system 200 may be implemented as an online server, communicatively connected (e.g. through secure internet connection) to computing node 202-a. Alternately, system 200 may be directly linked to at least one of nodes 202 (e.g. 202-a).

In yet another embodiment, system 200 may be implemented as a plurality of computational devices (e.g. element 100 of Fig. 1) and may be distributed among a plurality of locations. System 200 may include any duplication of some or all of the components depicted in Fig. 2. System 200 may be communicatively connected to a plurality of computational nodes (e.g. 202-a) to control routing of data transfers over network 210 from a plurality of locations.

In some embodiments, computing nodes 202-a thru 202-e of computer network 210 may be interconnected, where each node may be connected to at least one other node via one or more links, to enable communication therebetween. In some embodiments, each computing node 202 may include memory and a dedicated operating system (e.g., similar to memory 120 and a dedicated operating system 115 as shown in Fig. 1).

As shown in Fig. 2, system 200 may receive a data transfer request 206, to perform a data transfer between a source node (e.g., 202-a) and a destination node (e.g.: 202-c). According to some embodiments, processor 201 may be configured to: analyze data transfer request 206 (as explained further below); identify one or more available routing paths (e.g. route A and route B) that connect the source node and destination node; and select an optimal routing path (e.g. route A) for the requested data transfer.

According to some embodiments, processor 201 may be configured to produce a routing path selection 209', associating the requested data transfer with the selected routing path. System 200 may include a routing engine 209, configured to receive routing path selection 209' from processor 201, and determine or dictate the routing of requested data transfer 206 in computer network 210 between the source node (e.g.: 202-a) and destination node (e.g.: 202-c) according to the routing path selection.

In some embodiments of the invention, an entity initiating or requesting the data transfer or computer network based communication (which may be for example the source node) may have multiple options or preferences for channels or protocols using which the data transfer may be performed, such as for example VoIP, cellular network, Wi-Fi, satellite network, and the like. A path for routing data may have available multiple networks for each channel type, multiple providers, and generally, multiple protocols or procedures available to send information over the channel (including, for example, multiple channels - such as peer-to-peer, direct and cellular network based, multiple channels of similar or different types such as two cellular channels and one direct channel, and so forth). Similarly, the receiving entity (e.g., the destination node) may have various options and/or preferences for receiving a data transfer. In such manner available routing paths or of possible options for performing the data transfer may be all possible combinations of data transfer protocols and procedures set for the sending and/or receiving nodes. In some embodiments, a user or user ID associated with network usage (for example in a content delivery network) may be among the modifiable variables or options available to the sending and/or receiving nodes.

As known to persons skilled in the art of computer networking, dictation of specific routes for data transfers over computer networks is common practice. In some embodiments, routing engine 209 may determine or dictate a specific route for data transfer by utilizing low-level functionality of an operating system (e.g. element 115 of Fig. 1) of a source node (e.g. 202-a) to transmit the data transfer over a specific network interface (e.g. over a specific communication port) to an IP address and port of a destination node (e.g. 202-c). For example, routing engine 209 may include specific metadata in the data transfer (e.g. in an internet protocol (IP) packet, a Transmission Control Protocol (TCP) packet, and IP/TCP packet, and the like) and send the packet over a specific pre-established connection (e.g. TCP connection) to ensure that data is delivered by lower-tier infrastructure to the correct destination node (e.g. 202-c), via a selected route.

Embodiments of the present invention present an improvement to routing algorithms known in the art, by enhancing the selection of an optimal routing path from a plurality of available routes. Routing algorithms known in the art are normally configured to select a routing path according to a predefined set, consisting a handful of preselected parameters (e.g. a source node address, a destination node address, a type of a service and a desired Quality-of-Service (QoS)). Embodiments of the present invention may employ algorithms of artificial intelligence (AI) to dynamically select optimal routing paths for requested data transfers, according to constantly evolving machine learning (ML) models that may not be limited to any set of input parameters, or to any value of a specific input parameter, as explained further below.

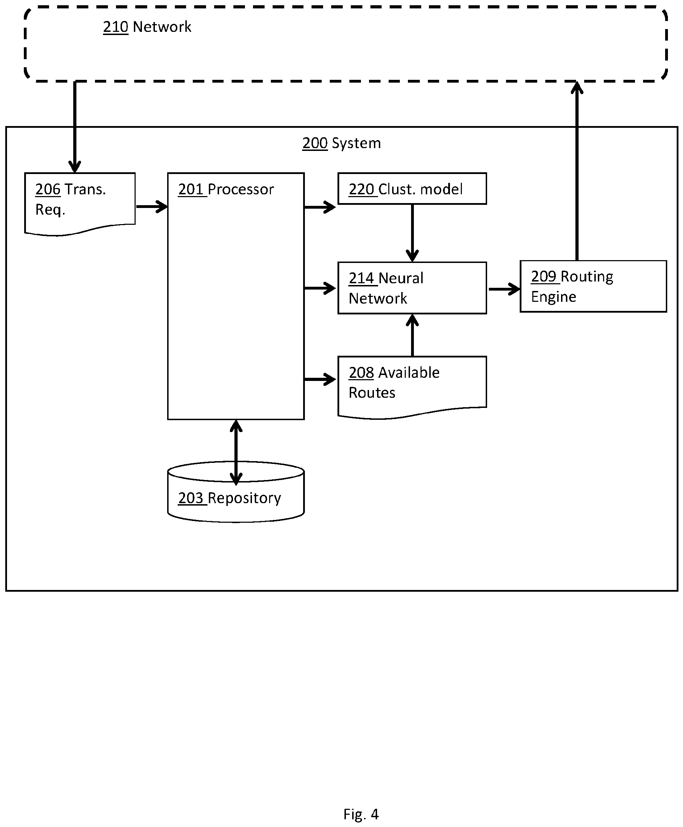

Reference is made to Fig. 4 which shows a block diagram of a data transfer routing system 200, according to some embodiments of the invention. The direction of arrows in Fig. 4 may indicate the direction of information flow.

System 200 may include at least one repository 203, in communication with the at least one processor 201. Repository 203 may be configured to store information relating to at least one data transfer, at least one user and at least one route, including for example: Data transfer FV (which may include additionally or alternatively, destination feature vectors as further described herein), Data transfer GC, cost metrics associated with specific routes, and User preferences. In some embodiments, routing of data transfers between the computing nodes 202 of computer network 210 may be optimized in accordance with the data stored in repository 203, as explained further below.

According to some embodiments, processor 201 may be configured to receive at least one data transfer request (e.g., from a remote computer, over computer network 210 which may be a communication network), including one or more data elements, to route a data transfer between two nodes of the computer network.

According to some embodiments, processor 201 may extract from the data transfer request an FV, including at least one feature associated with the requested data transfer. For example, the FV may include an ordered list of items, where each item represents at least one data element of the received data transfer request. Similar principles may be used to extract different FVs, for example from data items received from or describing potential destination nodes (such as for destination feature vectors as described herein).

Examples for representation of data element of the received data transfer request as items in an FV may include, for example: destination nodes or terminals that may be represented by their geographic location (e.g. the destination node or terminal's geographical longitude and latitude as stored in a terminal database); and/or the data transfer type, source, subtype and the like, that may be represented by mapping them into a binary indicator vector, where each position of the vector may correspond to a specific sort of data transfer type/source/subtype and may be assigned a '1' value if the data transfer belongs to a specific type/source/subtype and '0' otherwise.

According to some embodiments, system 200 may include a clustering model 220, consisting of a plurality of data transfer clusters. Clustering model 220 may be configured to receive a plurality FVs, each associated with a respective data transfer request, and each including at least one feature associated with the respective data transfer request. Clustering model 220 may cluster the plurality of data transfer requests to at least one data transfer cluster, according to the at least one feature.

As known to persons skilled in the art of AI, the outcome of non-supervised clustering may not be predictable. However, clusters may be expected to group together items of similar features.

According to some embodiments, clustering module 220 may be implemented as a software module, and may be executed, for example, by processor 201. Alternately, clustering module 220 may be implemented on a computational system that is separate from processor 201 and may include a proprietary processor communicatively connected to processor 201.

According to some embodiments, clustering module 220 may apply an unsupervised, machine learning expectation-maximization (EM) algorithm to the plurality of received FVs, to produce a set of data transfer clusters, where each of the plurality of received FVs is associated with one cluster, as known to persons skilled in the art of machine learning.

According to some embodiments, producing a set of data transfer clusters by clustering module 220 may include: (a) assuming an initial number of K multi-variant gaussian distributions of data; (b) selecting K initial values (e.g. mean and standard-deviation values) for the respective K multi-variant gaussian distributions; (c) calculating the expected value of log-likelihood function (e.g. calculating the probability that an FV belongs to a specific cluster, given the K mean and standard-deviation values); and (d) adjusting the K mean and standard-deviation values to obtain maximum-likelihood. According to some embodiments, steps (c) and (d) may be repeated iteratively, until the algorithm converges, in the sense that the adjustment of the K values does not exceed a predefined threshold between two consecutive iterations.

According to some embodiments, processor 201 may be configured to extract an FV from at least one incoming requested data transfer and associate the at least one requested data transfer with a cluster in the clustering model according to extracted FV. For example, the extracted FV may be associated with a cluster according to a maximum-likelihood best fit algorithm, as known to persons skilled in the art of ML.

According to some embodiments, processor 201 may be configured to calculate at least one GC for each cluster and attribute the calculated GC to at least one received request, based on the association of the requested data transfer with the data transfer cluster.

For example, the GC may include or correspond to or be selected from a list consisting of: availability of computational resources, a probability of transaction data transfer success/failure, decline probability or propensity, fraud probability (for example based on past data transfers found to be requested by a fraudulent entity and involving a set of routing paths - see non-limiting examples further provided herein) and the like. Clusters of data transfers may be attributed such GC, and consequently incoming data transfer requests that are associated with specific data transfer clusters may also be attributed the same GC.

According to some embodiments, processor 201 may be configured to: (a) receive at least one incoming requested data transfer, including a source node and a destination node; (b) produce a list, including a plurality of available routes for communicating the requested data transfer in accordance with available resources of computer network 210 (e.g. by any dynamic routing protocol such as a "next-hop" forwarding protocol, as known to persons skilled in the art of computer networks); and (c) calculate at least one cost metric (e.g.: an expected latency) for each route between the source node and destination node in the computer network.

According to some embodiments, system 200 may include at least one neural network module 214, configured to produce at least one routing path selection (e.g. element 209' of Fig. 2), associating at least one data transfer with a routing path between a source node and a destination node of the computer network.

Embodiments may include a plurality of neural network modules 214, each dedicated to one respective cluster of clustering model 220, and each cluster of the clustering model associated with a one respective neural network module. Each neural network module 214, may be configured to select at least one routing path for at least one specific data transfer associated with the respective cluster. This dedication of neural network modules 214 to respective clusters of clustering model 220 may facilitate efficient production of routing path selections for new data transfer requests, according to training of the neural network modules on data derived from similar data transfers.

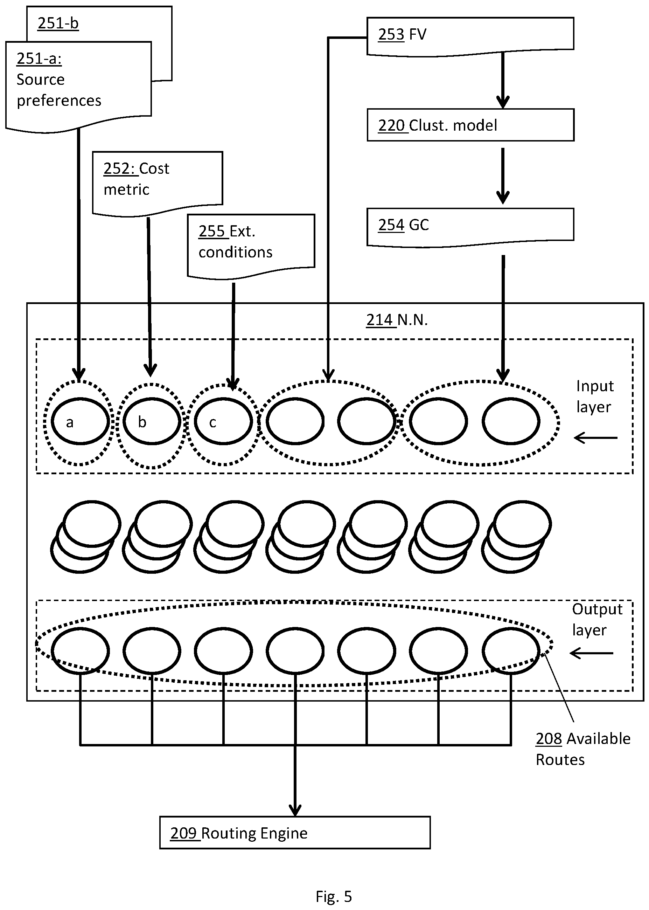

Reference is now made to Fig. 5, which is a block diagram depicting an exemplary implementation of neural network 214, including a plurality of network nodes (e.g. a, b, c etc.) according to some embodiments. In one embodiment a neural network may include an input layer of neurons, and an output layer of neurons, respectively configured to accept input and produce output, as known to persons skilled in the art of neural networks. The neural network may be a deep-learning neural network and may further include at least one internal, hidden layer of neurons, intricately connected among themselves (not shown in Fig. 5), as also known to persons skilled in the art of neural networks. Other structures of neural networks may be used.

According to some embodiments, neural network 214 may be configured to receive at least one of: a list that may include a plurality of available routing paths 208 from processor 201; at least one cost metric 252 associated with each available route; at least one requested data transfer's FV 253; the at least one requested data transfer's GC 254; at least one source preference weight 251; and at least one external condition 255 (e.g. the time of day). Neural network 214 may be configured to generate at least one routing path selection according to or based on the received input, to select at least one routing path for the at least one requested data transfer from the plurality of available routing paths. As shown in the embodiment depicted in Fig. 5, source preference weight 251 (e.g., 251A, 251B), cost metric 252, FV 253, GC 254 and external condition 255 may be provided to neural network 214 as inputs at an input layer, as known to persons skilled in the art of machine learning.

As shown in the embodiment depicted in Fig. 5, neural network 214 may have a plurality of nodes at an output layer. According to some embodiments, neural network 214 may implicitly contain routing selections for each possible data transfer, encoded as internal states of neurons of the neural network 214. For example, neural network 214 may be trained to emit or produce a binary selection vector on an output layer of neural nodes. Each node may be associated with one available route, as calculated by processor 201. The value of the binary selection vector may be indicative of a selected routing path. For example, neural network 214 may emit a selection vector with the value '001' on neural nodes of the output layer that may signify a selection of a first routing path in a list of routing paths 208, whereas a selection vector with the value '0 11' may signify a selection of a third routing path in the list of routing paths.

According to some embodiments, neural network 214 may be configured to generate at least one routing path selection of an optimal routing path according to at least one cost metric 252.

The term 'weight' may be used herein in relation to one or more specific data transfer parameters (e.g., cost metrics, FV and GC) to refer to a level of importance that may be attributed (e.g., by a user's preference) to the respective data transfer parameters. System 200 may be configured to choose an optimal routing path according to the values of data transfer parameters and respective attributed weights.

For example, system 200 may be configured to receive a first source preference weight (e.g., PW1) for a fist data transfer parameter, and a second source preference weight (e.g., PW2) for a second data transfer parameter. System 200 may be configured to obtain:

a first value (e.g., VA1) of the first data transfer parameter (e.g., a cost metric) corresponding to a routing path;
a second value (e.g., VB1) of the second data transfer parameter corresponding to the first routing path;
a third value (e.g., VA2) of the first data transfer parameter corresponding to a second routing path; and
a fourth value (e.g., VB2) of the second data transfer parameter corresponding to the second routing path.

One weight or preference may correspond to multiple specific instances of a certain value. System 200 may be configured to subsequently choose an optimal routing path according to the products of corresponding source preference weights and parameter values. For example:

if [(PW1 * VA1) + (PW2 * VB1)] > [(PW1 * VA2) + (PW2 * VB2)] then system 200 may choose to route the data transfer via the first routing path, and
if [(PW1 * VA1) + (PW2 * VB1)] < [(PW1 * VA2) + (PW2 * VB2)] then system 200 may choose to route the data transfer via the second routing path.

According to some embodiments, one or more source preference weights (e.g., PW1) may be assigned a default value, and system 200 may be configured to choose an optimal routing path according to the products of corresponding default source preference weights and parameter values. Alternately, or additionally, system 200 may be configured to receive (e.g., from input device 135) at least one value for at least one source preference weight and may override the at least one default source preference weight, to choose an optimal routing path according to the products of corresponding received source preference weights and parameter values.

In some embodiments, system 200 may be configured to select an optimal routing path according to a weighted plurality of data transfer parameters (e.g., cost metrics such as for example expected data transfer latency, and the like).

According to some embodiments, system 200 may include a routing engine 209, configured to receive at least one requested data transfer from processor 201, and a respective routing path selection from neural network 214, and route the requested data transfer through network 210 according to the respective routing path selection.

Routing engine 209 may use any type of routing protocol to facilitate or cause routing the requested data transfer through network 210, as known in the art, including for example: The Interior Gateway Routing Protocol (IGRP), the Enhanced Interior Gateway Routing Protocol (EIGRP), the Routing Information Protocol (RIP), the Border Gateway Protocol (BGP) and the Exterior Gateway Protocol (EGP).

Routing engine 209 may employ any suitable routing protocol known to a person skilled in the art of computer networks, to route at least one communication between the source node and the destination node via the selected optimal routing path, including for example: a network-based message from the source node to the destination node, and a corresponding confirmation message from the destination node back to the source node. In some embodiments, routing engine 209 may dictate or control a specific route for data transfer by utilizing low-level functionality of an operating system (e.g. element 115 of Fig. 1) of a source node to transmit the data transfer over a specific network interface to an IP address and port (e.g. a TCP socket) of a destination node.

According to some embodiments, processor 201 may be configured to accumulate historic information regarding the status of data transfers and may store the accumulated information in a storage device (e.g. repository 203 of Fig. 4). Processor 201 may calculate at least one GC for at least one cluster of clustering model 220 according to the stored information and attribute the at least one calculated GC to at least one received data transfer request, based on the association of the requested data transfer with the data transfer cluster. Neural network 214 may consequently determine an optimal routing path according the at least one calculated GC, thereby reducing processing power after initial training of clustering model 220.

GC may be selected from a list including for example decline probability or propensity, data transfer failure probability, data transfer dependent success probability, data transfer dependent failure probability, fraud probability or propensity (for example describing past data transfers involving a routing path which were found to be requested by a fraudulent entity, such as in the non-limiting example of ME data transfers as demonstrated below), and expected service time.

For example, processor 201 may accumulate status data per each data transfer, including information regarding whether the data transfer has been declined $P_{decline}$, and may calculate the decline propensity of each cluster as the ratio between the number of declined data transfers (e.g., #{declined data transfers}) and the total number of data transfers (e.g., #{all data transfers}), as expressed for example below, in Eq. 1:

$$P_{decline} = \frac{\#\{declined\ data\ transfers\}}{\#\{all\ data\ transfers\}}$$

Eq. 1

In another example, processor 201 may accumulate status data per each data transfer, including information regarding whether the data transfer has been fraudulent (for example, suggesting that it has been requested by a fraudulent entity; see, in this context, discussion below regarding fraud in data transfers associated with a few example embodiments of the invention), and may calculate the fraud propensity (e.g., $P_{fraud}$) of each cluster as the ratio between the number of fraudulent data transfers (e.g., as determined by an administrator and/or a security system, as known in the art) and the number of non-declined data transfers, as expressed by one example below, in Eq. 2:

$$P_{fraud} = \frac{\#\{fraudulent\ data\ transfers\}}{\#\{all\ non-declined\ data\ transfers\}}$$

Eq. 2

Where:

#{fraudulent data transfers} may represent the number of fraudulent data transfers; and
#{non-declined data transfers} may represent the total number of non-declined data transfers.

In another example, processor 201 may calculate an overall probability of data transfer success (e.g., without being denied and/or attributed to a fraudulent attempt) for each cluster (e.g., through routing path A) as expressed, for example, by equation Eq. 3A:

$$P_{success,A}$$
$$= \frac{\#\{all\ data\ transfers\} - \#\{declined\ data\ transfers\} - \#\{fraudulent\ data\ transfers\}}{\#\{all\ data\ transfers\}}$$

**Eq. 3A**

Where:

$P_{success,A}$ may represent the overall probability of data transfer success when being routed through routing path A;
#{all data transfers} may represent the total number of data transfers routed through the respective routing path (e.g., path A);
#{declined data transfers} may represent the number declined data transfers routed through the respective routing path (e.g., path A);
#{fraudulent data transfers} may represent the total number of data transfers that have been routed through the respective routing path (e.g., path A), and that may have been determined as fraudulent.

In another example, processor 201 may calculate an overall probability of data transfer failure for each cluster (e.g., through routing path A), one example being expressed in equation Eq. 3B:

$$P_{failure,\,A} = (1 - P_{success,\,A})$$

Eq. 3B

Where:

$P_{success,A}$ may represent the overall probability of data transfer success when being routed through routing path A; and

$P_{failure,\,A}$ may represent the probability of data transfer failure for each cluster (e.g., through routing path A).

In another example, processor 201 may accumulate information regarding conditions in which more than one attempt to route a requested data transfer has taken place, to calculate a dependent success probability (e.g., when a first attempt, through routing path A has failed, and a second attempt, through path B has succeeded), one example being expressed by Eq. 4A:

$$P_{success\,B\,|\,failure\,A} =$$

$$[$$

$$\#\{\text{data transfers}_{B\,|\,failure\,A}\} -$$

$$\#\{\text{declined data transfers}_{B\,|\,failure\,A}\} -$$

$$\#\{\text{fraudulent data transfers}_{B\,|\,failure\,A}\}$$

$$]$$

$$/\,\#\{\text{data transfers}_{B\,|\,failure\,A}\}$$

Eq. 4A

Where:

$P_{success\,B\,|\,failure\,A}$ may represent the dependent probability of a successful routing attempt through routing path B, following a failure of a routing attempt through routing path A;

$\#\{\text{data transfers}_{B\,|\,failure\,A}\}$ may represent the total number of data transfer attempts through routing path B following a failed routing attempt through routing path A;

$\#\{\text{declined data transfers}_{B\,|\,failure\,A}\}$ may represent the number of declined data transfer attempts through routing path B following a failed routing attempt through routing path A; and

$\#\{\text{fraudulent data transfers}_{B\,|\,failure\,A}\}$ may represent the number of fraudulent data transfer attempts through routing path B following a failed routing attempt through routing path A.

In yet another example, processor 201 may accumulate information regarding conditions in which more than one attempt to route a requested data transfer has taken place, to calculate a dependent failure probability (e.g., when a first attempt, through routing path A has failed, and a second attempt, through path B has also failed), one example being expressed by Eq. 4B:

$$P_{failure\,B\,|\,failure\,A} = (1 - P_{success\,B\,|\,failure\,A})$$

Eq. 4B

Where:

$P_{failure\,B\,|\,failure\,A}$ may represent the dependent probability of a failed routing attempt through routing path B, following a failure of a routing attempt through routing path A; and

$P_{success\,B\,|\,failure\,A}$ may represent the dependent probability of a successful routing attempt through routing path B, following a failure of a routing attempt through routing path A.

According to some embodiments, at least one GC may be attributed to at least one subset of the overall group of data transfers. For example, processor 201 may analyze a subset of data transfers which is characterized by at least one common feature or denominator (e.g. a common destination node) and attribute all data transfers within this subset with a common GC (e.g. as having a high decline propensity).

According to some embodiments, at least one combination of at least one source preference weight 251, at least one cost metric 252 and at least one GC 254 may affect a selection of an optimal routing path by the neural network.

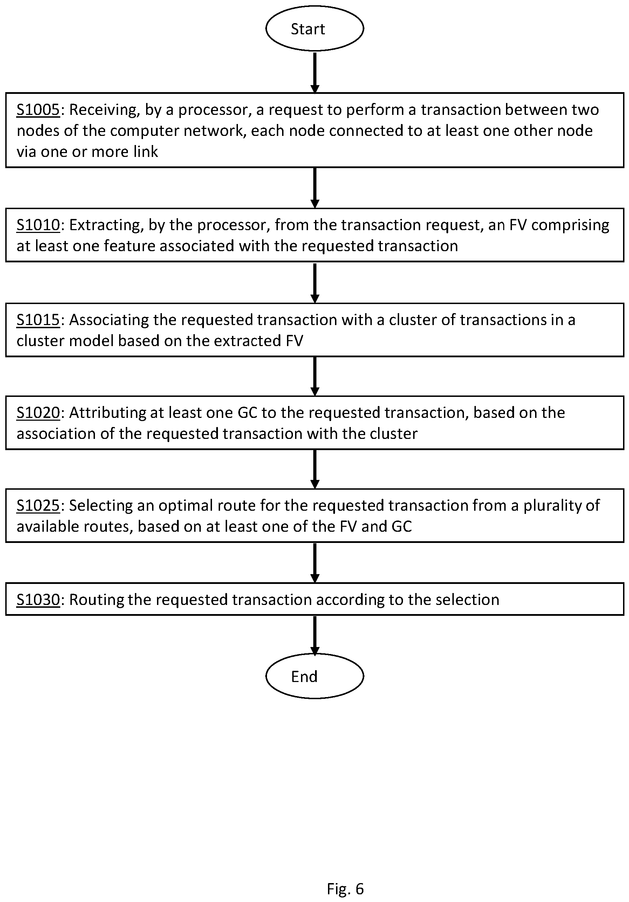

Reference is now made to Fig. 6, which is a flow diagram, depicting a method of routing data transfers through a computer network according to some embodiments.

In step S1005, a processor may receive a request to perform a data transfer between two nodes of a computer network, where each node may be connected to at least one other node via one or more links.

In step S1010, the processor may extract from the data transfer request, a FV. The FV may include at least one feature associated with the requested data transfer.

In step S1015, the processor may associate the requested data transfer with a cluster of data transfers in a clustering model based on the extracted FV. For example, the processor may implement a clustering module that may include a plurality of data transfer clusters, clustered according to at least one FV feature. The clustering module may be configured to associate the requested data transfer with a cluster by a best fit maximum likelihood algorithm.

In step S1020, the processor may attribute at least one GC (e.g.: expected latency or fraud propensity) to the requested data transfer, based on the association of the requested data transfer with the cluster, as explained herein.

In step S1025, the processor may select an optimal route for the requested data transfer from a plurality of available routes, based on at least one of the FV and GC as explained herein.

In step S1030, the processor may route the requested data transfer according to the selection. For example, the processor may emit a routing path selection, associating the requested data transfer with a selected routing path within the computer network. According to some embodiments, a routing engine may receive the routing path selection from the processor and may dictate or control the routing of the requested data transfer via the selected routing path.

In some embodiments, system 200 may be configured to select an optimal routing path according to a weighted combination of elements, including cost metrics and/or GC.

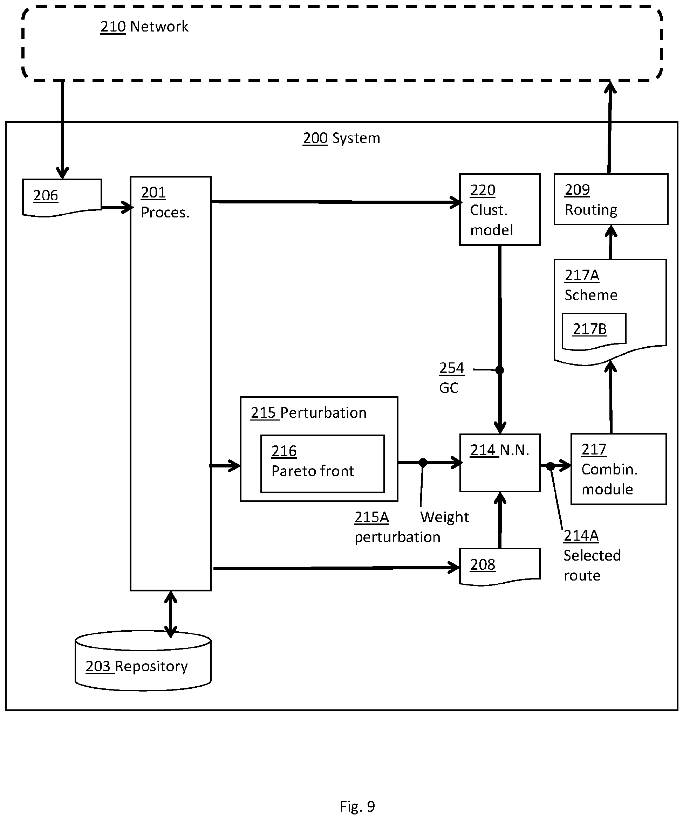

Reference is now made to Fig. 9, which shows a block diagram of a data transfer routing system 200, according to some embodiments of the invention. System 200 may be configured to receive a data transfer request 206 to route a data transfer between a source node and destination node of a computer network 210, where each node may be connected to at least one other node via one or more links, as known in the art. System 200 may be configured to produce a routing scheme 217A that may include one or more routing paths and/or combinations of routing paths that may be for example ordered in an ordered list. System 200 may route the requested data transfer according to the ordered list 217B of routing paths. As elaborated herein, the ordering of routing paths and/or combinations of routing paths in routing scheme 217A may facilitate dynamic and optimal routing of requested data transfer 206 through network 210 according to predefined preferences.

According to some embodiments, system 200 may identify a plurality of available routing paths, for routing, sending or propagating the data transfer between the source node and destination node based on the data transfer request. For example, processor 201 may be configured to identify one or more routing paths, each including one or more computing devices that may be communicatively connected or linked by any type of computer communication and may connect the source node and destination node.

System 200 may obtain or receive one or more data transfer parameters for each available routing path, based on the data transfer request, as explained herein. For example, a user may want to transfer or route a data transfer through network 210, from a source node to a destination node. System 200 may obtain one or more data transfer parameters (e.g., cost metrics, FV, GC) for each of the plurality of available routing paths. The one or more data transfer parameters may include, for example, one or more of: an FV parameter (e.g., an identity of a source node, an identity of a destination node, etc.), a GC parameter (e.g., a probability of data transfer success) and a cost metric parameter (e.g., a likelihood of failure).

According to some embodiments, system 200 may receive a set of source preference weights that may include one or more source preference weights (e.g., 251-A, 251-B of Fig. 5), where each source preference weight of the received set of source preference weights corresponds to a data transfer parameter. The source preference weights may correspond to or indicate a user's preference or valuation in regard to one or more data transfer parameters (e.g., a minimal fraud propensity, and the like).

According to some embodiments, NN 214 may be configured to select or choose one or more routing paths from the plurality of available routing paths, based on the one or more data transfer parameters and respective source preference weights.

For example, NN 214 may receive at least one of:

a list including a plurality of available routing paths 208 from processor 201;

at least one data transfer parameter (including for example: a cost metric 252 associated with each available route; at least one requested data transfer's FV 253; the at least one requested data transfer's GC 254);
a set of source preference weights that may include one or more user source preference weight values 251, where each user preference 251 may correspond to a respective data transfer parameter;
and at least one external condition 255 (e.g. the time of day).

Neural network 214 may generate at least one routing path selection according to the received input, to select at least one optimal routing path for the at least one requested data transfer from the plurality of available routing paths, as discussed in relation to Fig. 5. The selected routing path may be optimal in a sense that it may best accommodate the routing of the requested data transfer in view of user preference (as manifested in the received source preference weights 251).

In some embodiments, neural network 214 may be configured to repeat the selection of an optimal routing path a predefined number of times, each time excluding the selected routing path from the list of available paths 208, so as to produce a predefined number of selected optimal (e.g., in descending order) routing paths.

System 200 may include a perturbation module 215, configured to receive the first set of source preference weights 251 and perturbate the value of one or more source preference weights 251 so as to produce one or more perturbated sets of source preference weights 251 (e.g., perturbated source preference weights 215A), where each source preference weight corresponds to a data transfer parameter.

Pertaining to the same example, perturbation module 215 may receive the first set of source preference weights, that may include the first source preference weight value 251A, associated with the GC (e.g., the probability of success), and the second source preference weight value 251B, associated with the cost metric. Perturbation module 215 may perturbate or change the values of one or more source preference weights to produce at least one perturbated set of source preference weights, that may include different source preference weight values than those of the first set of source preference weights.

In some embodiments, perturbation module 215 may include a Pareto front module 216. Pareto front module 216 may be configured to receive a plurality of source preference weight sets (e.g., the first set of source preference weights 251 and/or the one or more second, perturbated set of source preference weights 215A) and extract a Pareto front of the source preference weight sets. In other words, Pareto front module 216 may be configured to extract a minimal number of source preference weight sets 215A that may still include the information diversity of the plurality of source preference weight sets 215A.

For example:

A first set of source preference weights may include weights such as [4, 7 and 10], and may respectively correspond to data transfer parameters [A, B and C];
A second set of source preference weights may include weights such as [4, 8 and 10], and may correspond to the same data transfer parameters; and
A third set of source preference weights may include weights such as [4, 19 and 10], and may correspond to the same data transfer parameters.

Pareto module may omit the second data set, as it may not provide additional information regarding selection of an optimal routing path in view of a user's preference for specific data transfer parameters.

According to some embodiments, NN 214 may be configured to select an optimal routing path from the plurality of available routing paths, for each set of source preference weights, as elaborated herein in relation to Fig. 5.

For example, the received set of source preference weights and the one or more perturbated sets of source preference weights 251 (e.g., 251A, 251-B) may be input to NN 214, and NN 214 may produce a selection of an optimal routing path from the plurality of available routing paths.

Thus, NN 214 may select one or more optimal routing paths, where each such selection may be optimal in a sense that it may best accommodate a user's preferences in view of the available routing paths 208 and the specific respective set of perturbations 215A of source preference weights 251.

In some embodiments, system 200 may include a combinatorial module 217, that may be configured to receive at least one of: the one or more selected routing paths from NN 214, and the first set of source preference weights 251 (e.g., before perturbation), and to produce therefrom a routing scheme 217A, as elaborated herein.

Routing scheme 217A may include or may be a data structure (e.g., a table, a list or the like) that may include a list, e.g. an ordered list 217B, or group of the one or more selected routing paths, that may each have been selected by NN 214 as optimal routing paths in view of respective, specific source preference weight sets (e.g., 251). Routing module 209 may subsequently route the requested data transfer through network 210 according to the routing scheme 217A, as elaborated herein, in relation to Fig. 5.

According to some embodiments of the invention, system 200 may be configured to attempt to route the requested data transfer according to routing scheme 217A in a serial routing sequence (e.g., one after the other, according to ordered list 217B) of the one or more selected routing paths. For example, routing scheme 217A may include the following ordered list of routing paths 217B: e.g., routes [A, B and C]. Routing module 209 may be configured to attempt routing the requested data transfer from the source node (e.g., element 202-a of Fig. 2) to the destination node (e.g., element 202-a of Fig. 2), according to the order of ordered list 217B. For example, routing module 209 may first try routing path A. If routing through routing path A fails, routing module 209 may attempt routing the requested data transfer through the next routing path of ordered list 217B (e.g., routing path B) and then through C, etc. Routing module 209 may persist with the routing attempts in the order of ordered list 217B until a termination condition has been met.

The termination condition may be, for example, one of:

one of the routing attempts has been successful (e.g., a positive acknowledgement response from the destination node has been received by the source node);
a total timeframe (e.g., a "data transfer timeframe") for routing the requested data transfer has elapsed;
a user has terminated the routing process (e.g., via input element 135 of Fig. 1); and the like.

The routing of the requested data transfer may be regarded as failed in a sense that the source node may be in a condition where it lacks information on a successful reception of the data transfer by the destination node. For example, a failure may be defined as a condition in which: no acknowledgement has been received from the destination within a predefined timeframe; a refusal has been received from one or more nodes included in the routing path (including the destination node); and/or the like.

Alternately or additionally, system 200 may be configured to attempt to route the requested data transfer according to routing scheme 217A in a parallel routing sequence. For example, routing module 209 may be configured to attempt to route the requested data transfer from the source node to the destination node through two or more routing paths concurrently or at substantially the same time (e.g., without awaiting an acknowledgement and/or refusal from any node in any of routing paths A, B and C).

In some embodiments, routing module 209 may be configured to implement any combination of such serial and/or parallel routing through network 210. For example, combinatorial module 217 may produce routing scheme 217A so as to configure routing module 209 to perform parallel routing (e.g., through both routing paths B and C) after a previous attempt to route the requested data transfer via a single routing path (e.g., path A) has failed.

In some embodiments, routing module 209 may be configured to limit the routing of the requested data transfer by one or more timeframes.

For example, a first timeframe may define a time period in which a single attempt to route the requested data transfer (e.g., via routing path A) must be completed, so as not to be rendered as failed.

In another example, a second timeframe may define a total time period in which routing the data transfer according to routing scheme 217A (e.g., through routing path A, and then through routing path B, etc.) must be completed, so as not to be declared or rendered as failed.

In some embodiments, the one or more timeframes may be set according to a configuration of network 210 (e.g., according to timeout definitions), as known in the art. Additionally, or alternately, one or more timeframes may be determined and input by a user (e.g., via element 135 of Fig. 1).

Combinatorial module 217 may produce routing scheme 217A, and set the order of the ordered list of routing paths 217B based on one or more of:

the value of the one or more timeframes;
the routing sequence (e.g., serial, parallel and/or combination thereof);
one or more data transfer parameters; and
one or more source preference weights, so as to optimize the routing of the requested data transfer through network 210 in view of a user's preference.

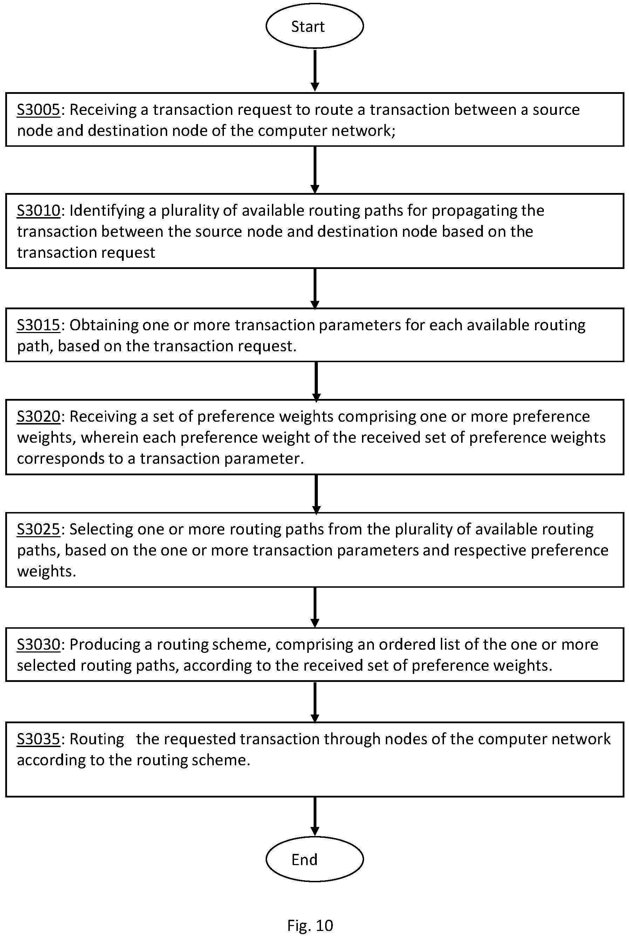

Reference is now made to Fig. 10, which is a flow diagram depicting a method of routing data transfers through a computer network, by at least one processor, according to some embodiments of the invention.

As shown in step 3005, a processor (e.g., element 105 of Fig. 1) may receive a data transfer request (e.g., element 206 of Fig. 2) to route a data transfer between a source node (e.g., 202-a) and a destination node (e.g.: 202-c) of the computer network 210.

As shown in step 3010, the processor may identify a plurality of available routing paths (e.g., path A, path B of Fig. 2) for propagating the data transfer between the source node and destination node based on the data transfer request.

As shown in step 3015, the processor may obtain one or more data transfer parameters (e.g., cost metric 252 of Fig. 5, FV 253 of Fig. 5, GC of Fig. 5) for each available routing path, based on the data transfer request. For example, the processor may obtain at least one GC for each available routing path based on a membership of the routing path in a cluster, as explained herein in relation to Fig. 4.

As shown in step 3020, the processor may receive (e.g., from input element 135 of Fig. 1) a set of source preference weights 251. Each source preference weight 251 may correspond to a data transfer parameter.

As shown in step 3025, the processor may select (e.g., by NN module 214 of Fig. 9) one or more routing paths from the plurality of available routing paths, based on the one or more data transfer parameters and respective source preference weights, as explained herein.

As shown in step 3030, the processor may produce (e.g., by combinatorial module 217 of Fig. 9) a routing scheme (e.g., element 217A of Fig. 9). The routing scheme may include an ordered list (e.g., 217B) of the one or more selected routing paths, according to the received set of source preference weights, as explained herein in relation to Fig. 9.

As shown in step 3035, the processor may route (e.g., by routing module 209) the requested data transfer through nodes of the computer network according to the routing scheme. Routing module 209 may route the requested data transfer through by any appropriate routing protocol (e.g., RIP) as known in the art.

While embodiments of the invention may generally be used for improving and/or optimizing the routing and execution of data transfer among nodes or computers in computer network, some embodiments of the invention may prove useful for data transfers relating to monetary exchanges or financial transactions. Some such embodiments will be discussed below. It should be noted that the relevant example embodiments should be considered non-limiting. Those skilled in the art of computer networks would recognize that while the below examples may relate to various specific applications in finance-related contexts - they may equally be applied in alternative contexts where the data transferred is unrelated to finance. Embodiments presented herein as relating to, e.g., financial transactions or organizational structures including entities involved in such transactions, monetary exchanges, and the like, should thus be considered in light of the disclosure, relating to the general routing and transferring of data in a computer network, for example while taking user preferences and system or network constraints into account. While data transfers in the context of financial transactions may involve particular constraints and variables, embodiments of the invention do not consider such transactions as different in essence from data transfers unrelated to finance. Terms such as, for example, "data transfer fee" "net/future value" "interest rate" "data transfer amount/cost/revenue", and the like, should be generally considered as particular, non-limiting examples of parameters and functions which may be input and/or output (e.g., be for example minimized or maximized, and/or generally optimized) to, or by, embodiments of the invention - for example to enable a corresponding desired data transfer related outcome.

In particular, examples relating to an "organizational structure" or to optimizing such structure should be considered, more generally, as relating to a plurality of data elements or items regardless of their possible use in, e.g., data transfer, network usage, or a financial transaction. Such data elements or items may include or represent, for example, nodes in a network - for which values of performance parameters, and/or identifying routing paths, and/or selecting an optimal routing path may be performed by embodiments of the invention. In general, network activity and elements - including nodes, data transfer requests, data transfers, and the like, as described herein - may be considered as or represented by corresponding data elements and structures (including, e.g., FVs, GCs, PWs, etc.) in different embodiments of the invention. Embodiments may for example relate to perturbating or changing or modifying a first set of data elements (which may represent for example nodes and/or data transfers and/or requests in a computer network) to create a second set of data elements (which may include for example nodes in a simulated computer network). The second set of data elements may, in turn, be used for optimizing the first set of data elements (for example improve or optimize the data transfers and/or data transfer requests managed or processed within the computer network). It should be noted that a plurality of sets of data elements (pertaining, e.g., to a plurality of simulated computer networks, data transfers, and the like) may be used in different embodiments of the invention.

Modern merchants, in both online and offline stores, often transfer data using a payment services provider that supports a single, uniform interface (with a single format) towards the merchant but can connect to multiple payment methods and schemes on the back end. Payment service providers relay data transfers to other processing entities and, ultimately, transaction or data processing is handled by one or more banks that collect the funds, convert currency, handle possible disputes around data transfers and finally transfer the money to merchant account(s).

A payment service provider may be connected to multiple banks located in different geographic areas, which can process the same payment instruments but under varying local rules. Furthermore, different banks can provide different currency conversion rates and pay merchants at varying frequencies and with varying fund reserve requirements. In addition to financial differences, banks and processing solutions may differ in quantity of approved data transfers (decline rates), quantity of fraud-related data transfers that solutions fail to identify and quantity of disputes that occur with regard to these data transfers later.

Data transferrers such as merchants may have different preferences with regards to the characteristics of their processing solution. Some would prefer to pay as little as possible, dealing with occasional fraud cases but seeing higher approval rates, while others would prefer to be conservative with regards to fraud, even at expense of higher processing fees and/or, for example, reduced completion (approval rate) of data transfers.

Some embodiments of the invention may consider Monetary Exchange (ME) data transfers, where nodes may include a server in a banking system, a computer of a paying-card issuer, etc. In addition, nodes may include for example a site operated by an organization (e.g. a data center or a server farm operated by an organization) as well as for example a user mobile device.

The term 'Payload' may be used herein to refer to at least one content of a data transfer that may be sent from the source node to the destination node. Payloads may include, for example: a data file sent over the data transfer, information included within the data transfer (e.g. a video file, parameters of a financial data transfer, such as a sum and a currency of a monetary exchange) , etc.

Individuals and organizations may use or may have a constellation or structure (e.g., an organizational structure) of interconnected entities that may support or facilitate a variety of organizational functions. For example, an organization (e.g., a merchant) may be associated with a one or more legal entities, physical entities, enabling entities (see corresponding definition below) and computing devices (e.g., nodes) that may be included in a computer network, and may facilitate transfer or routing of at least one data transfer (e.g., a monetary exchange transaction) between a first computing device (e.g., a first node) and a second computing device (e.g., a second node).

The term "Legal Entity" (LE) may be used herein to refer to one or more organizational assets that may be associated with the organization but may still be managed independently as a separate commercial entity. For example, a global merchant (e.g., "Big_Company") may have a plurality of subsidiary representative commercial LEs around the world (e.g., "Big_Company USA", "Big_Company UK", "Big_Company China", etc.), conducting business and serving customers in respective countries and territories.

The term "Physical Entity" (PE) may be used herein to refer to one or more organizational assets that may be associated with an organizational LE and may include a physical representation or manifestation of the organization. Pertaining to the same example, at least one LE (e.g., "Big_Company Germany") may include one or more PEs such as shops, representative offices, warehouses, servers, server farms, towers, various physical network infrastructure components, etc.

The term "Enabling Entity" (EE) may be used herein to refer to one or more organizational assets that may be associated with an organizational LE and may include at least one element that may be required (e.g., by law, by regulation, by an agreement and the like) so as to enable an LE of the organization to perform one or more data transfers. For example, an EE may include a bank account in a bank, that may be requires so as to perform a monetary data transfer through the respective bank.

The term "Organizational structure" (OS) may thus be used herein to refer to one or more data elements that may correspond to one or more respective assets of an organization. For example, an organizational structure may include references to, or identifications of organizational assets such as: one or more nodes, one or more LEs, one or more PEs and one or more EEs, as elaborated herein.

Some of the example embodiments considered herein may include entities of different types, such as LEs, PEs, and EEs, for example as nodes in a computer network. It should be noted that different embodiments of the invention which may be used in different network environments and contexts may include different node types which may or may not be similar or equivalent to the three entity types of LEs, PEs, and EEs.

The term "OS performance parameter" may be used herein to indicate at least one parameter that may be used to evaluate an OS in view of one or more predefined preferences. For example, in an embodiment where at least one data transfer is an ME data transfer, a user may define a preference (e.g., by setting a high value to a respective preference weight) such as a maximal, expected data transfer revenue (e.g., the maximal revenue that may be expected for an ME data transfer among a plurality of available paths) and a maximal, overall expected data transfer revenue (e.g., the maximal revenue that may be expected from a plurality of data transfers). The OS performance parameter may respectively be a calculated value of the maximal, overall expected data transfer revenue pertaining to a plurality of OSs and may be utilized by embodiments of the invention to evaluate the OSs in view of the user's preference.

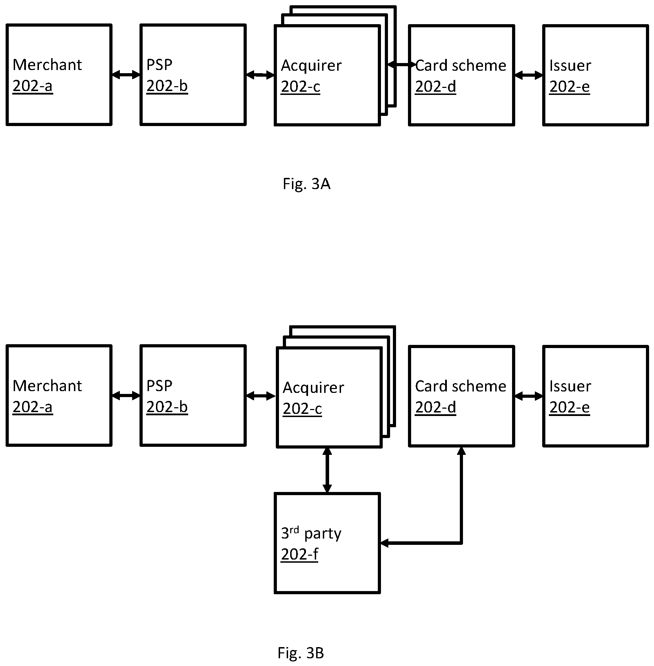

Reference is made to Fig. 3A and Fig. 3B, which are block diagrams presenting two different examples for routing data transfers through nodes of a computer network, according to parameters of the payload, e.g. financial data transfer. In each of the depicted examples, a data transferrer such as a merchant may require settling a financial data transfer through transfer of a monetary value, between the merchant's bank account, handled by node 202-c in an acquirer bank and a consumer's bank account handled by node 202-e in an issuer bank.

The examples depicted in Fig. 3A and Fig. 3B may differ in the selected route due to different parameters of the financial data transfer, including for example: a method of payment, predefined security preferences as dictated by the merchant, a maximal NPV of the financial data transfer (e.g. due to delays in currency transfer imposed by policies of a payment card issuer), etc.

Fig. 3A depicts a non-limiting example of an e-commerce data transfer involving a payment card (e.g. a credit card or a debit card), in which the merchant has dictated a high level of security. For example: the merchant may have preselected to verify the authenticity of the paying card's Card Verification Code (CVC), perform 3D Secure authentication, perform address verification, etc. The data transfer may therefore be routed according to the routing path, as described below.

From the merchant's computer 202-a, the data transfer may be routed to a payment service provider (PSP) 202-b, which offers shops online services for accepting electronic payments by a variety of payment methods, as known to persons skilled in the art of online banking methods.

From PSP 202-b, the data transfer may be routed to the acquirer node 202-c, where, for example, the merchant's bank account is handled. In some embodiments, the merchant may be associated with a plurality of acquirer nodes 202-c and may select to route the data transfer via one of the acquirer nodes 202-c for example to maximize profit from a financial data transfer.

For example: the paying-card holder may have his account managed in US dollars. The merchant may be associated with two bank accounts, (e.g. two respective acquirer nodes 202-c), in which the merchant's accounts are managed in Euros. Embodiments may enable the merchant to select a route that includes an acquirer node 202-c that provides the best US Dollar to Euro currency exchange rate.

In another example, a card holder may perform payment through various methods, including for example, a merchant's website or a telephone order (e.g. a consumer may order pizza through a website, or by dictating the paying-card credentials through the phone). Banks may associate a different level of risk to each payment method and may charge a different percentage of commission per each financial data transfer, according to the associated risk. For example, the merchant may be associated with two bank accounts, (e.g. two respective acquirer nodes 202-c), where a first bank imposes lower commission for a first payment method, and a second bank imposes lower commission for a second payment method. Embodiments may enable the merchant to route the data transfer through an acquirer node 202-c according to the payment method, to cause the minimal commission for each data transfer.

From acquirer node 202-c, the data transfer may be routed to a card scheme 202-d, which, as known to persons familiar in the art of online banking, is a payment computer network linked to the payment card, and which facilitates the financial data transfer, including for example transfer of funds, production of invoices, conversion of currency, etc., between the acquirer bank (associated with the merchant) and the issuer bank (associated with the consumer). Card scheme 202-d may be configured to verify the authenticity of the paying card as required by the merchant (e.g. verify the authenticity of the paying card's Card Verification Code (CVC), perform 3D Secure authentication, perform address verification, etc.).

From card scheme 202-d, the data transfer may be routed to issuer node 202-e, in which the consumer's bank account may be handled, to handle the payment.

From issuer node 202-e, the data transfer may follow in the track of the routing path all the way back to merchant node 202-a, to confirm the payment.

Fig. 3B depicts a non-limiting example for a card-on-file ME data transfer, in which a consumer's credit card credentials may be stored within a database or a secure server accessible by the merchant, (e.g. in the case of an autopayment of recurring utilities bills, or a recurring purchase in an online store). As known to persons skilled in the art of online banking, card-on-file data transfer do not require the transfer paying-card credentials from the merchant to the acquirer 202-c. Instead, a token indicative of the paying-card's number may be stored on merchant 202-a, and a table associating the token with the paying-card number may be stored on a third-party node 202-f.

As shown in Fig. 3B, PSP 202-b addresses 202-f and requests to translate the token to a paying-card number, and then forwards the number to acquirer 202-c, to authorize payment.

It should be noted that different embodiments of the invention may consider data transfers requiring similar auxiliary tables or similar tools for, e.g., authentication purposes, regardless of any financial implications which may associated with the data transfer. Thus, the present ME data transfer examples should be considered non-limiting.

In some embodiments of the invention relating to ME transactions, processor 201 may receive ME data transfer requests, which may be for example associated with a paying card (e.g. a credit card or debit card). The ME request may include data pertaining to parameters such as for example:

Data transfer sum;
Data transfer currency;
Data transfer date and time (e.g.: in Coordinated Universal Time (UTC) format);
Bank Identification Number (BIN) of the paying card's issuing bank;
Country of the paying card's issuing bank;
Paying card's product code;
Paying card's Personal Identification Number (PIN);
Paying card's expiry date;
Paying card's sequence number;
Destination node or terminal identifier (e.g. data pertaining to a terminal in a banking computational system, which is configured to maintain the payment recipient's account);
Target merchant (e.g. data pertaining to the payment recipient);
Merchant category code (MCC) of the payment recipient;

Data transfer type (e.g.: purchase, refund, reversal, authorization, account validation, capture, fund transfer);
Data transfer source node;
Data transfer subtype (which may, in the context of the present example, be, e.g.: magnetic stripe, magnetic stripe fallback, manual key-in, chip, contactless and Interactive Voice Response (IVR)); and
Data transfer authentication (e.g.: no cardholder verification, signature, offline PIN, online PIN, no online authentication, attempted 3D secure, authenticated 3D secure).
Other or different information may be used, and different data transfers may be processed and routed. As explained herein, such information may be extracted and used by embodiments of the invention, for example in the context of calculating FVs, etc.

In accordance with the discussion herein regarding system 200 and pertaining to the example of ME data transfers, clusters which may be used in some embodiments of the invention (see above discussion regarding clustering model 220) may evolve to group together e-commerce purchase data transfers made with payment cards of a particular issuer, data transfers involving similar amounts of money, data transfers involving specific merchants, etc. Additionally or alternatively, the various ME related parameters may be input to neural network 214. For example: A user may purchase goods online through a website. The purchase may be conducted as an ME data transfer between a source node (e.g. a banking server that handles the user's bank account) and a destination node (e.g. the merchant's destination terminal, which handles the merchant's bank account). The purchase may require at least one conversion of currency, and the user may prefer to route a data transfer through a routing path that would minimize currency conversion costs. Processor 201 may calculate a plurality of available routing paths for the requested data transfer (e.g. routes that pass via a plurality of banking servers, each having different currency conversion spread and markup rates) and calculate cost metrics (e.g. the currency conversion spread and markup) per each available data transfer routing path. Neural network 214 may select a route that minimizes, for example, network usage or currency conversion costs according to or based on these cost metrics.

It should be noted that different embodiments may enable to require the some or all of the receiving or sending nodes to bear the various costs calculated using the cost metrics disclosed herein, depending for example on the different preferences associated with a given data transfer request.

Pertaining to the example above: the user may require, in addition to a minimal currency conversion cost, that the data transfer's service time (e.g.: the period between sending an order to transfer funds and receiving a confirmation of payment) would be minimal. The user may provide a weight for each preference (e.g. minimal currency conversion cost and minimal service time), to determine an optimal routing path according to the plurality of predefined cost metrics.

In some embodiments, processor 201 may be configured to dynamically calculate a Net Present Value (NPV) cost metric per each available routing path. For example, consider two available routing paths for an ME data transfer, where the first path includes at least a first intermediary node that is a banking server in a first country and the second path includes at least a second intermediary node that is a banking server in a second country. The first and second banking servers may operate at different times and work days, so the decision of a routing path may cause considerable delay on one path in relation to the other. This relative delay of the data transfer may, for example, affect the nominal amount and the NPV of the financial settlement.

In another example of an ME data transfer, processor 201 may be configured to: determine a delay, in days (d), by which money will be released to a merchant according to each available routing path; obtain at least one interest rate (i) associated with at least one available routing path; and calculate a present value (PV) loss value for the settlement currency used over each specific route, one example being expressed by Eq. 5 below:

$$PVLoss = Amount \times (1 + i)^d$$

Where:

'$PV_{Loss}$' may represent the PV loss value;
'Amount' may represent the original monetary value of the ME data transfer;
'd' may represent the delay (e.g., in days); and
'i' may represent the respective interest.

Eq. 5

In some embodiments, processor 201 may be configured to calculate a cost metric relating to transaction-fees per at least one available route. For example, in ME data transfers, processor 201 may calculate the data transfer fees incurred by routing the data transfer through a specific route-path, by taking into account, for example: (a) a paying card's interchange fee (e.g.: as dictated by its product code and its issuing bank country); (b) additional fees applicable for specific data transfer types (e.g.: purchase, refund, reversal, authorization, account validation, capture, fund transfer); (c) discount rate percentage applicable for specific data transfer types; and (d) fixed fee as applicable for the specific type of data transfer. The data transfer or transaction fee cost metric may be calculated, in one example as expressed below, in Eq. 6:

$$TransactionFee = interchange + AdditionalFees + (Amount \times DiscountRatePercentage) + FixedFee$$

Where:

'TransactionFee' may represent the calculated cost metric relating to a specific available routing path;
'interchange' may represent the paying card's interchange fee;
'AdditionalFees' may represent the additional fees applicable for specific data transfer types;
'Amount' may represent the original monetary value of the ME data transfer;
'DiscountRatePercentage' may represent the discount rate percentage applicable for specific data transfer types; and
'FixedFee' may represent the fixed fee applicable for the specific type of ME data transfer.

Eq. 6

In another example regarding ME data transfers, the cost metric may be one of a cancellation fee, which may be incurred by an owner of a credit card following cancellation of a purchase.

In the context of ME transactions and in accordance with the above discussion regarding preference weights, processor 201 may calculate various ME-related preference weights such as for example the sum-weighted fraud propensity $PW_{fraud}$ of each cluster according to a ratio, as expressed by one example below, in Eq. 7:

$$PW_{fraud} = \frac{\sum(\{fraudulent\ data\ transfers\} * amount)}{\sum(\{non-declined\ data\ transfers\} * amount)}$$

Eq. 7

Where:

'amount' may represent a monetary value of an ME data transfer;
$\sum(\{fraudulent\ data\ transfers\} * amount)$ may represent a weighted sum of all fraudulent data transfers; and
$\sum(\{non-declined\ data\ transfers\} * amount)$ may represent a weighted sum of all non-declined data transfers.

Alternative preference weights may be used in different embodiments of the invention.

Pertaining to the example of ME data transfers, a user may be, for example an individual (e.g. a consumer, a merchant, a person trading online in an online stock market, and the like), or an organization or institution (e.g. a bank or another financial institution). Each such user may define at least one source preference weight 251 according to their inherent needs and interests. For example: a user may define a first preference 251-a for an ME data transfer to maximize the NPV and define a second preference 251-b for the ME data transfer to be performed with minimal fraud propensity. The user may define a source preference weight for each of preferences 251-a and 251-b, that may affect the selection of an optimal routing path. For example:

If the weighted value for preference 251-a is larger than that of preference 251-b, a route that provides maximal NPV may be selected.
If the weighted value for preference 251-a is smaller than that of preference 251-b, a route that provides minimal fraud propensity may be selected.

In the example of ME data transfers, the FV may include data pertaining to a type of the ME data transfer (e.g.: purchase, refund, reversal, authorization, account validation, capture, fund transfer, etc.), a source node, a destination node, etc.

In one example, a user may want to perform an ME data transfer that may incur minimal currency conversion costs and where the data transfer's service time (e.g., the period between sending an order to transfer funds and receiving a confirmation of payment) would be minimal. The user may provide (e.g., via input device 135 of Fig. 1) a weight for each preference (e.g., a source preference weight). For example, the user may provide a first source preference weight for a cost metric element (e.g., minimal currency conversion cost) and a second source preference weight for a GC element (e.g., minimal service time). NN 214 may be configured to determine an optimal routing path according to the weighted combination of elements (e.g., one or more cost metrics 252 such as minimal currency conversion cost and/or one or more GC elements 254, such as minimal service time).

In another example, a user may want to perform an ME data transfer that may incur minimal data transfer fees, and that may have a maximal probability for being successfully completed (e.g., have minimal fraud and/or decline propensities). The user may provide (e.g., via input device 135 of Fig. 1) a weight for each preference. For example, the user may provide a first source preference weight for a cost metric element (e.g., minimal data transfer fees) and a second source preference weight for a GC element (e.g., minimal fraud and/or decline propensities). NN 214 may be configured to determine an optimal routing path according to the weighted combination of elements (e.g., one or more cost metrics 252 such as minimal data transfer fees and/or one or more GC elements 254, such as fraud and/or decline propensities).

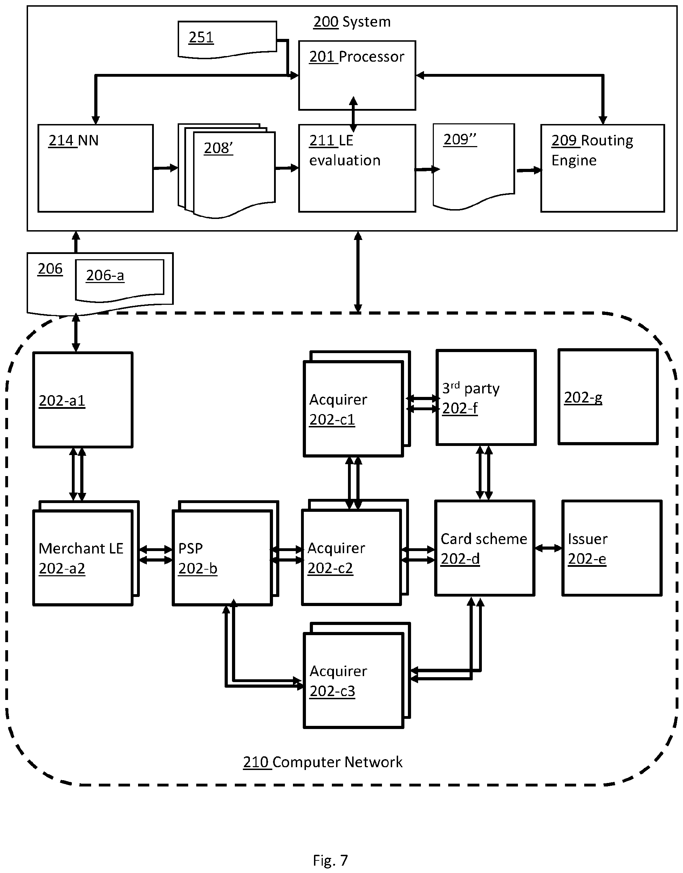

Reference is made to Fig. 7 which is a block diagram presenting an example for routing a requested ME data transfer through nodes of a computer network, based on data transfer parameters, according to some embodiments. One or more numbered elements depicted in Fig. 7 may be similar to or substantially equivalent to respective numbered elements depicted in Fig. 3 as discussed herein, and their individual description will not be repeated here for the purpose of brevity.

The example depicted in Fig. 7 may differ from that of Fig. 3 by at least the introduction of one or more merchant LE nodes (e.g., LE 202-a2) and possibly in other ways.

As explained in relation to Fig. 3, a merchant may require settling a financial data transfer through transfer of a money or currency of a certain monetary value, between a bank account that may be associated with the merchant (e.g., handled by a node 202-c in an acquirer bank) and a customer's bank account (e.g., handled by a node 202-e in an issuer bank).

In some embodiments, a merchant may be associated with a plurality of legal entities (e.g., nodes 202-a2), each optionally associated with a separate acquirer node 202-c (and a respective bank account). The merchant may want to select the optimal legal entity 202-a2 for settling the ME data transfer.

For example, the merchant may be a global company, represented in a plurality of countries and/or territories by a respective plurality of stores. The stores of each country and/or territory may be associated with a different legal entity, such as a local company that may be a subsidiary of the global company. The merchant may, for example, want to select the legal entity optimally, so as to maximize their revenue from the ME data transfer. Each legal entity may be associated with one or more computing devices (e.g., nodes 202-a2) that may pertain to one or more legal entities of the merchant. Pertaining to the subsidiary companies' example, nodes 202-a2 may be computing devices (e.g., servers) that may be included in a computing infrastructure of the subsidiary companies.

In another example, the merchant may be a company for online purchase of goods from a plurality of suppliers. The merchant may choose to settle the ME data transfer using their own legal entity (and respective bank account), or the legal entity of one or more of the suppliers (e.g., in return for a commission fee). The merchant may want to select the legal entity optimally, for example, so as to maximize their revenue from the financial data transfer, in view of a respective commission. Pertaining to this example, nodes 202-a2 may be computing devices (e.g., servers) that may be included in a computing infrastructure of the company for online purchase of goods and/or computing devices included in a computing infrastructure of the one or more suppliers. Thus by selecting a legal entity, or other parameters, physical nodes and links may also be selected.

As shown in the example of Fig. 7, a merchant may have at least one computing device such as an online server (e.g., node 202-a1) that may facilitate a commercial customer interface (e.g., an online shopping website), and one or more computing devices (e.g., nodes 202-a2) that may pertain to one or more legal entities of the merchant.

Embodiments of the present invention may include a system and method of selecting at least one extremum node (e.g., a source node and/or a destination node, or an end node) to optimally route the requested data transfer between extremum nodes of network 210. The selection of the extremum node may be optimal in a sense that it may provide the best option or selection for routing the requested data transfer, from a plurality of available routing paths, in view of at least one predefined preference (e.g., source preference weight 251) dictated by a user (such as e.g., a merchant).

For example, as explained herein, a merchant may have at least one first source node (e.g., 202-a2) that may be associated with a first legal entity (e.g., a first store) and at least one second source node (e.g., 202-a2) that may be associated with a second legal entity (e.g., a second store). The merchant may conduct a sale (e.g., of commodities and/or services) to a client (e.g., via an online website server such as node 202-a1) using a paying card (e.g., a credit card or a debit card).

According to some embodiments, processor 210 may be configured to select an optimal routing path to route a requested data transfer between a source node and a destination node according to for example one of the following schemes:

In a first scheme, processor 201 may first select a source node from the plurality of source nodes 202-a2, and then select an optimal routing path between the selected source node and the destination node (e.g., as explained herein in relation to any source node).

Alternately, or additionally, in a second scheme, processor 201 may (a) identify a plurality of routing paths connecting the destination node with each of the source nodes, (b) select an optimal routing path per each of the source nodes (c) select the best routing paths from the plurality of optimal routing paths and (d) select the source node corresponding to the best routing path.

Processor 201 may receive (e.g., from node 202-a1) a data transfer request 206 to route a data transfer between one of the plurality of source nodes (e.g., 202-a2) and a destination node (e.g., 202-e) of the computer network to settle the payment. For example, data transfer request 206 may be an ME data transfer request for settling a payment between one of the source nodes (e.g., at least one of the first store and the second store) and a destination node (e.g., a node associated with a client's paying card issuer).

Data transfer request 206 may include one or more data transfer parameters pertaining to one or more source nodes. For example, data transfer request 206 may include at least one identifier (e.g., an IP address) of one or more source nodes.

Data transfer request 206 may include one or more data transfer parameters pertaining to the destination node. For example, data transfer request 206 may include at least one data element pertaining to issuance of the paying card by the paying card issuer (e.g., details of the paying card of the client such as the Bank Identification Number (BIN) of the paying card's issuing bank).

Processor 201 may extract or identify from data transfer request 206 one or more data transfer parameters pertaining to or associated with the destination node. Pertaining to the same example, as known in the art, information pertaining to the country of origin may be included in the first (e.g., the first 4 to 9) digits of the BIN number. Processor 201 may extract the paying card's BIN number from the data transfer request and obtain the paying card's country and/or bank of issuance therefrom. In some embodiments, processor 201 may obtain the first digits of the BIN number substantially at the same time they are entered in a commercial web page (e.g., before the entire BIN number is entered) and ascertain the paying card's country and/or bank of issuance therefrom.

Additionally, or alternately, data transfer request 206 may in some embodiments include a rule table 206-a that may associate or link between identification of one or more source nodes and respective identifications of one or more destination nodes, and processor 201 may be configured to select a source node of a plurality of source nodes according to rule table 206-a.

For example, the data transfer may be an ME data transfer that may include an online purchase of one or more products from a website (e.g., on merchant's server 202-a1). The merchant may be associated with one or more legal entities (e.g., stores) that may be manifested on network 210 as respective one or more source nodes 202-a2. A client may be using their computer (e.g., 202-g) to browse the merchant's website (202-a1), and may be using a paying card that may be associated with one of a plurality of issuers, manifested in network 210 as a destination node 202-e. The merchant may be restricted from shipping the products due to shipping costs, custom regulations etc. Rule table 206-may for example, manifest such restrictions by associating between a specific combination of a product (e.g., P1, P2, etc.) and a paying card's country and/or bank of issuance (e.g., COI-1, COI-2, etc.) and a specific source node (e.g., 202-a2(1), 202-a2(2), etc.). Processor 201 may be configured to select a source node of a plurality of source nodes according to rule table 206-a: for example, for a specific combination of a product (e.g., P1) and a paying card's country and/or bank of issuance (e.g., COI-1), .). Processor 201 may select a specific source node (e.g., 202-a2(1)).

Additionally, or alternately, processor 201 may be configured to select the source node based on the rule table and respective source preference weights. For example, processor 201 may receive a plurality of source preference weights corresponding to one or more respective data transfer parameters and/or rule table 206-a and may select a source node of the plurality of source nodes according to the received source preference weights, as elaborated herein.

In some embodiments, processor 201 may receive (e.g., from input device 135) an initial default selection of a legal entity (and hence a respective default selection of a source node). Pertaining to the same example of online shopping from a website, processor 201 may select, by default, a specific source node (e.g., 202-a2(1)). Alternately, or additionally, the default source selection may be based, for example, on previous information pertaining to the same client computer 202-g, to a previous ME data transfer (e.g., a pre-recorded issuer identity) and/or current information pertaining to the client's computer 202-g (e.g., content of a cookie, an IP address and the like).

Processor 201 may be configured to change the selection of the source node from the default node (e.g., 202-a2(1)), corresponding to the first legal entity, to a different source node (e.g., 202-a2(2)), corresponding to a second legal entity in real-time or near real-time, based on at least one data transfer parameter pertaining to the destination node (e.g., during the course of filling in the paying card's details by the client). For example, as the client enters the first digits (e.g., 4 to 9 first digits) of the paying card's BIN number, processor 201 may determine the paying card's country and/or bank of issuance and may select the legal entity (and respective source node) accordingly (e.g., according to rule table 206-a). Processor 201 may subsequently instruct computer 202-a1 to inform the client, via the website, of the change made to the legal entity.

For example, computer 202-a1 may present a notification of the changed legal entity (e.g., store) at the bottom of the presented website. In another example, computer 202-a1 may present a separate window prompting the client's approval of the changed legal entity. In yet another example, when given all the data required for the ME data transfer, computer 202-a1 may present the selected legal entity on a web page alongside other data (e.g., expected charge of the paying card), for the client to approve before finalizing the data transfer.

According to some embodiments, processor 201 may receive (e.g., from input device 135 of Fig. 1) at least one source preference weight 251 that may correspond to one or more data transfer parameters. Processor 201 may select a source node from the plurality of source nodes based on the at least one received source preference weight and corresponding data transfer parameter.

Pertaining to the same example, as explained herein, at least one data transfer parameter may include an FV data element. The FV data element may in turn include data transfer data that may be included in the data transfer request, such as one or more data elements pertaining to issuance of a paying card, including for example the paying card's BIN number. A user may assign high priority (e.g., by assigning a high value to a respective source preference weight) to select a legal entity according to the paying card's country of issuance. The user may thus attribute a high source preference weight to associate a paying card's country and/or bank of issuance with a preferred legal entity (e.g., manifested by a specific source node (202-a2)). In other words, processor 201 may be configured to assign high priority for selecting a specific source node (202-a2) according to a data transfer parameter of the destination node such as the paying card's country of issuance. As known in the art, a paying card's country and/or bank of issuance may be directly associated to the value of the card's BIN number, and so processor 201 may be configured to select a specific source node (202-a2) according to a paying card's BIN number.

According to some embodiments, routing engine 209 may subsequently route the requested data transfer through nodes of computer network 210, between the selected source node (202-a2) and the destination node (202-e), by any routing protocol as known in the art.

According to some embodiments, processor 201 may calculate a leverage for selection of the optimal source node, and may prompt the merchant (e.g., via node 202-a1) to offer a financial benefit to the client, as part of a negotiation between the merchant and the client. For example, if a default source node may have yielded a first revenue and the selected source may have yielded an improved revenue to the merchant, processor 201 may calculate the difference in revenue, and produce at least one suggestion for sharing the additional revenue with the client, as a way to gain client satisfaction.

As explained herein, processor 210 may be configured to first select an optimal routing path per each of the source nodes and then select an optimal source node corresponding to the best of the optimal routing paths.

According to some embodiments, processor 201 may be configured, per each source node of the plurality of source nodes (e.g., for each node 202-a2 of the plurality of merchant legal entity nodes 202-a2) to identify zero, one or a plurality of available routing paths for routing, sending or propagating requested data transfer 206 between the respective source node and the destination node through network 210, based on the data transfer request.

For example, the data transfer request may include, as described herein, at least one identification (e.g., an IP address) of a source node (e.g., 202-a2), at least one identification (e.g., an IP address) of a destination node (e.g., 202-e), a data transfer payload, etc. For each source node of the plurality of source nodes (e.g., 202-a2), processor 201 may be configured to identify, by any appropriate routing protocol as known in the art, zero, one or more available routing paths. Each available routing path may include one or more computing devices that may be communicatively connected or linked by any type of computer communication and may connect the respective source node (e.g., 202-a2) and destination node (e.g., element 202-e).

For each available routing path of each source node of the plurality of source nodes, processor 201 may obtain or receive one or more data transfer parameters, based on the data transfer request, as explained herein. For example, a user may want to transfer or route an ME data transfer through network 210, from a source node 202-a2 to destination node 202-e. Processor 201 may obtain one or more data transfer parameters (e.g., cost metrics, FV, GC) for each of the plurality of available routing paths.

The one or more data transfer parameters may include, for example, one or more of: an FV parameter (e.g., an identity of a source node, an identity of a destination node, a data transfer sum, a data transfer currency, a data transfer date and time, a paying card's BIN, a paying card's expiration date, etc.), a GC parameter (e.g., a probability of data transfer success, a decline propensity, a fraudulent propensity, etc.) and a cost metric parameter (e.g., a cost of the ME data transfer, a cost for cancellation of the ME data transfer, and the like).

As depicted in the ME data transfer example of Fig. 7, the plurality of available routing paths may differ, for example by a plurality of data transfer parameters including for example: probability of data transfer success (e.g., not being denied by a card issuer), NPV of the ME data transfer (e.g. due to delays in currency transfer), currency conversion costs, etc.

According to some embodiments, system 200 may receive a set of source preference weights that may include one or more source preference weights (e.g., 251-A, 251-B of Fig. 5), where each source preference weight may correspond to a data transfer parameter. The source preference weights may correspond to or indicate a user's (e.g., a merchant's) preference or valuation in regard to one or more data transfer parameters (e.g., a minimal service time, a minimal fraud propensity, and the like).

A user (such as e.g., a merchant) may value or prefer a first data transfer parameter over a second data transfer parameter. For example, the merchant may value a GC parameter (e.g., a probability of data transfer success) of the ME data transfer more than a cost metric parameter (e.g., a currency conversion cost). The merchant may thus input (e.g., via element 135 of Fig. 1) a first set of source preference weights, including a first source preference weight value 251-A, associated with the GC (e.g., the probability of data transfer success), and a second source preference weight value 251-B, associated with the cost metric (e.g., the currency conversion cost), where the first source preference weight value 251-A may be larger than the second source preference weight value 251-B.

According to some embodiments, for each source node 202-a2 of the plurality of source nodes 202-a2, NN 214 may be configured to select or choose one or more routing paths from the plurality of available routing paths as optimal based on the one or more data transfer parameters and respective source preference weights, as explained herein in relation to Fig. 5.

For example, for each source node 202-a2, NN 214 may receive at least one of:

a list including a plurality of available routing paths 208;
at least one data transfer parameter (including for example: a cost metric 252 associated with each available route;
at least one requested data transfer's FV 253, including for example an identification (e.g., an IP address) of the respective source node 202-a2 and an identification (e.g., an IP address) of the destination node (e.g., 202-e);
at least one requested data transfer's GC 254;
a set of source preference weights that may include one or more user source preference weight values 251, where each user preference 251 may correspond to a respective data transfer parameter; and
at least one external condition 255 (e.g. the time of day).

Neural network 214 may generate, for each source node 202-a2 at least one routing path selection according to the received input. The generated selection may include one or more optimal routing path 208' from the plurality of available routing paths, to route requested data transfer 206 through network 210, as discussed in relation to Fig. 5.

The selected routing path may be optimal in a sense that it may best accommodate the routing of the requested data transfer from the respective source node 202-a2 to the destination node (e.g., 202-e) in view of user preference (as manifested in the received source preference weights 251).

System 200 may include a LE evaluation module 211 that may be configured to receive from NN 214 one or more selected, optimal routing paths 208' (Each of which may be optimally selected by NN 214 in respect to a specific source node 202-a2).

LE evaluation module 211 may determine the best routing path among the one or more selected routing paths 208' in view of the received source preference weights 251. For example, a user (e.g., a merchant) may attribute high priority to a specific cost metric such as maximal revenue. LE evaluation module 211 may determine the best routing path 209" by selecting a routing path and a respective source node 202a-2 that provides the highest revenue among all optimal routing paths.

According to some embodiments, processor 201 may select a source node 202-a2 from the plurality of source nodes based on the determined best routing path. For example, LE evaluation module 211 may determine the best routing path 209" as elaborated herein, and processor 201 may select a source node 202-a2 that corresponds with the best routing path 209".

LE evaluation module 211 may propagate the selected, best routing path, including at least one of the best routing path and respective source node 202-a2 to routing module 209.

Routing module 209 may subsequently route the requested data transfer through network 210, between the selected source node and the destination node, according to the selected optimal routing path and respective source node.

For example, a merchant may be associated with a plurality of legal entities (e.g., a plurality of different shops), each associated with a separate computing device 202-a2 (e.g., a computing device, such as a server, that may be included in a respective computing infrastructure). Each LE may optionally be associated with a different banking account that may optionally be handled by a different acquirer node 202-c (e.g., 202-c1, 202-c2 and 202-c3).

The merchant may sell an item via an online website (e.g. node 202-a of Fig. 7). The merchant may need to settle the financial data transfer through transfer of a monetary value, between the merchant's bank account handled in an acquirer bank (e.g. node 202-c of Fig. 3) and a consumer's bank account handled in an issuer bank (e.g. node 202-e of Fig. 3).

The expected revenue of the data transfer or transaction, when routed through a specific routing path may be calculated according to an expected revenue function, one example being expressed below, in Eq. 8:

$$\text{Expected Revenue }_A=$$

$$[P_{success, A} \cdot (\text{Payment} - \text{successful\_transaction\_fee}_A)] -$$

$$[P_{failure, A} \cdot \text{failed\_transaction\_fee}_A].$$

$$\text{Eq. 8}$$

where:

'Expected Revenue $_A$' may represent the expected revenue for an ME data transfer that is routed via a specific routing path (e.g., path A);
'Price' may represent the monetary sum that the client is required to pay;
'successful_transaction_fee$_A$' may represent, for example, one of: any function of the price (e.g., percentage of the price), a fixed sum, and/or a data transfer fee as described in Eq. 6, in relation to the respective routing path (e.g., path A);
failed_transaction_fee$_A$ may represent, for example, one of: a function of the price (e.g., a percentage of the price) and/or a fixed sum, in relation to the respective routing path (e.g., path A); and
$P_{success, A}$ and $P_{failure, A}$ are the overall probabilities of a data transfer success and failure through the respective routing path (e.g., path A), for example as described in Eq. 3A and Eq. 3B respectively.

A first routing path (e.g., path A) may be characterized by a high probability of success (e.g., a high clearing rate by the credit card issuer, such as 80%) and a high successful data transfer fee (e.g., 5% of the price, resulting in low revenue in the case of success) and a second routing path (e.g., path B) is characterized by a low probability of success (e.g., a low clearing rate by the credit card issuer, such as 60%) and a low successful data transfer fee (e.g., 2% of the price, resulting in high revenue in the case of success).

In one example, a merchant may prefer to settle the data transfer so as to maximize the expected revenue and may thus set a high source preference weight 251 to require maximal revenue. NN 214 may thus be configured to select, per each source node 202-a2 an optimal routing path 208' that may facilitate maximal revenue, as preferred by the merchant. LE evaluation module 211 may determine the best routing path among the one or more selected routing paths 208' and the respective source node 202a-2, in view of the preferred revenue. LE evaluation module 211 may produce a routing selection 209" that may include the optimal source node 202-a2 and the optimal routing path that would provide maximal revenue when routing requested data transfer 206 through network 210.

In another example, the merchant may place higher preference to the realization of the sale over the revenue (and sets source preference weights accordingly). In this condition, since the source preference weights place higher importance to fruition or realization of the data transfer over the revenue, NN 214 may thus be configured to select, per each source node 202-a2 an optimal routing path 208' that may accommodate the highest probability for realization of the sale (e.g., regardless of the revenue), as preferred by the merchant. LE evaluation module 211 may determine the best routing path among the one or more selected routing paths 208' and the respective source node 202a-2, in view of the preferred probability of data transfer success. LE evaluation module 211 may produce a routing selection 209" that may include the optimal source node 202-a2 and the optimal routing path that would correspond with a maximal probability that the routing of requested data transfer 206 through network 210 would succeed (e.g., not be declined by card issuer 202e).

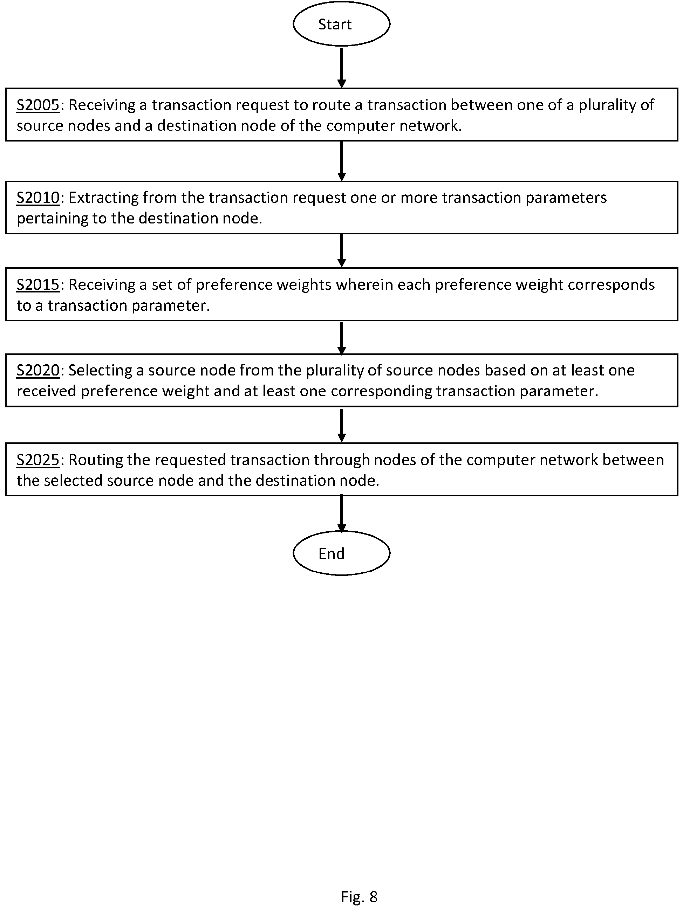

Reference is now made to Fig. 8, which is a flow diagram depicting a method for routing a requested data transfer through a computer network by at least one processor, according to some embodiments.

As shown in step 2005, the at least one processor (e.g., element 105 of Fig. 1) may receive a data transfer request (e.g., element 206 of Fig. 6) to route a data transfer between one of a plurality of source nodes (e.g., 202-a2 of Fig. 6) and a destination node (e.g., 202-e of Fig. 6) of the computer network (e.g., 210).

As shown in step 2010, the at least one processor may extract from data transfer request 206 one or more data transfer parameters pertaining to the destination node.

For example, in the case of ME data transfers, the one or more data transfer parameters may include an FV, including one or more features associated with the requested data transfer, such as a data transfer protocol, a payload type, an identification (e.g., an IP address) of a source node, an identification (e.g., an IP address) of a destination node, a data transfer sum, a data transfer currency, a data transfer date and time and one or more data elements associated with a paying card (e.g. a credit card or debit card), such as a BIN number, a paying card product code, a PIN number, etc.

In another example, the one or more data transfer parameters may include at least one GC, such as an expected time of service, a fraud propensity and a success propensity, as elaborated herein, in relation to Fig. 4.

In yet another example, the one or more data transfer parameters may include at least one cost metric, including for example an NPV, a data transfer fee, etc., as elaborated herein.

As shown in step 2015, the at least one processor may receive a set (e.g., at least one) of source preference weights (e.g., element 251-a, 251-b of Fig. 5) that correspond to one or more data transfer parameters.

As shown in step 2020, the at least one processor may select a source node (202-a2) from the plurality of source nodes (202-a2) based on at least one received source preference weight and at least one corresponding data transfer parameter, as elaborated herein in relation to Fig. 7.

As shown in step 2020, the at least one processor may instruct a routing engine (e.g., 209) to route the requested data transfer through nodes of the computer network between the selected source node and the destination node.

In another example, a user may perform an ME data transfer, such as a credit card, online purchase from an online web site of a specific merchant. The user may value or prefer a first data transfer parameter over a second data transfer parameter. For example, the user may value a GC parameter (e.g., a probability of data transfer success) of the ME data transfer more than a cost metric parameter (e.g., a currency conversion cost). The user may thus input (e.g., via element 135 of Fig. 1) a first set of source preference weights, including a first source preference weight value 251-A, associated with the GC (e.g., the probability of success), and a second source preference weight value 251-B, associated with the cost metric (e.g., the currency conversion cost), where the first source preference weight value 251-A may be larger than the second source preference weight value 251-B.

In another example, a merchant may sell an item via an online website (e.g. node 202-a of Fig. 3). The merchant may need to settle the financial data transfer through transfer of a monetary value, between the merchant's bank account handled in an acquirer bank (e.g. node 202-c of Fig. 3) and a consumer's bank account handled in an issuer bank (e.g. node 202-e of Fig. 3). The merchant may prefer to settle the data transfer so as to maximize the expected revenue and may thus set a high source preference weight to require maximal revenue.

For example, a first routing path (e.g., path A) may be characterized by a high probability of success (e.g., a high clearing rate by the credit card issuer, such as 80%) and a high successful data transfer fee (e.g., 5% of the price, resulting in low revenue in the case of success) and a second routing path (e.g., path B) is characterized by a low probability of success (e.g., a low clearing rate by the credit card issuer, such as 60%) and a low successful data transfer fee (e.g., 2% of the price, resulting in high revenue in the case of success). Combinatorial module 217 may consequently produce a scheme 217A that may have a serial routing sequence (e.g., one routing attempt after another), and have list, e.g. an ordered list, of routing paths 217B where path B is attempted before path A. In that way, path B that may be attempted by routing module 209 first, benefitting from the successful data transfer fee and thus satisfying the merchant's preference of maximal revenue (as manifested by the high source preference weight for revenue). Only if and after routing through path B fails, routing module 209 may attempt to route the requested ME data transfer, to ensure that the sale will be materialized (albeit producing a reduced revenue).

In another example:

the merchant may place higher preference to the realization of the sale over the revenue (and sets source preference weights accordingly);
a third routing path (e.g., path C) may be characterized by a medium probability of success (e.g., a medium clearing rate by the credit card issuer, such as 70%) and a medium successful data transfer fee (e.g., 3% of the price, resulting in medium revenue in the case of success);
the probabilities of success for each of the routing paths may be unrelated;
the total time for performing the ME data transfer may be limited by a timeframe (e.g., 30 seconds) that may be dictated by one or more components of network 210, as known in the art; and
routing paths A, B and C may be respectively characterized by respective eservice time of 25, 15 and 10 seconds.

In this condition, combinatorial module 217 may not serially attempt routing the data transfer through routing paths B and A, as in the previous example, because the overall amount of their expected service time (e.g., 25 + 15 seconds) may surpass the limit dictated timeframe (e.g., 30 seconds). The two options for serial routing may be [A] alone or [C followed by B]. Since the source preference weights place higher importance to fruition or realization of the data transfer over the revenue, an optimal selection of a routing scheme may accommodate a higher probability for realization of the sale (e.g., regardless of the revenue). As the probabilities of success for each of the routing paths are unrelated, the combined probability of success of either one of channels C or B may be calculated as 1- [(1-0.7) · (1-0.6)] = 88%. So, even though routing path A has the highest probability of success (e.g., 80%) of the three paths, combinatorial module 217 may produce a scheme 217A that may include a serial sequence of routing, and an ordered routing list 217B that may include path C followed by path B, to obtain a routing scheme that is optimal in view of the merchant's preferences (e.g., as manifested in a high source preference weight for realization of the ME data transfer or transaction).

In another example, as elaborated in relation to Eq. 4A and Eq. 4B, processor 201 may accumulate information regarding conditions in which more than one attempt to route a requested data transfer such as the transfer of a video file or other data has taken place and to calculate a dependent success probability among the two routes. Pertaining to the example above, success of routing of a requested data transfer through network 210 may be dependent among two or more paths. Such dependency may arise, for example, from a common hidden parameter. In one example, the client may have insufficient funds in their bank account, so an ME data transfer may be declined by the destination node regardless of the selected routing path.

Combinatorial module 217 may receive one or more of the calculated dependent success probabilities and produce the routing scheme and configure ordered list 217B according to the dependent probability of success. Taking the calculated dependent probabilities into account may change one or more metrics for decision, upon which combinatorial module 217 may produce routing scheme 217A. For example, the calculation of revenue as elaborated in the example of Eq. 8, given the dependent success probability of two routing paths (e.g., first routing path A and second routing path B) may change, as expressed in one example below, in Eq. 9:

$$\text{Expected Revenue }_A=$$

$$[P_{success, A} \cdot (Payment - successful\_transaction\_fee_A)] -$$

$$[P_{failure, A} \cdot failed\_transaction\_fee_A] +$$

$$[P_{failure, A} \cdot \{(Prob_{success\,B\,|\,Failure\,A}) \cdot (Payment - successful\_transaction\_fee_B) -$$

$$\cdot (P_{failure\,B\,|\,failure\,A}) \cdot failed\_transaction\_fee_B]\}]$$

$$Eq.\ 9$$

Of course, as more routing paths may be introduced into ordered list 217B, Eq. 9 may become increasingly complex, to include the contribution of additional components corresponding to the introduced routing paths.

Pertaining to the previous example of an ME data transfer, if the probability of failure of routing data transfers through routing paths C and B is high, combinatorial module 217 may deduce that attempting to route the data transfer through path B after it had failed via path C may be pointless. Hence, combinatorial module 217 may configure ordered list 217B to include a different list of routing paths. For example, ordered list 217B may include a first attempt, to route the data transfer through path C, and a second attempt, to route the data transfer through path D, where D may have a lesser correlation to path C than the correlation of path B to path C. In other words, the dependent probability of success of path D in view of a failure of routing over path C may be higher than the dependent probability of success of path B upon failure of routing through routing path C.

According to some embodiments, combinatorial module 217 may be configured to edit or amend the routing scheme during the attempts to route the requested data transfer through network 210.

Pertaining to the example above, if a routing of the requested data transfer through a first routing path (e.g., path C) succeeds, then system 200 may cease and may not continue with additional routing attempts. If, on the other hand, the routing of the requested data transfer through the first routing path (e.g., path C) fails, then combinatorial module 217 may amend the routing scheme 217 (e.g., a scheme that may include ordered routing list 217B [path C, path B]) according to the dependent probability of success of routing paths (e.g., Prob $_{Success\,B\,|\,failure\,C}$, Prob $_{Success\,D\,|\,failure\,C}$), so as to include an amended ordered list of routing paths 217B (e.g., [path C, path D]). Routing module 209 may subsequently route the requested data transfer through the computer network according to amended ordered list of routing paths 217B (e.g., run the second attempt through path D, rather than through path B).

In another example of data transfer from source node A to destination node B, the a transfer attempt may first be carried out using network X, and in case the transfer fails another network Y may subsequently be chosen. Each attempt or sending of information may have a probability of success P, and P(X) may be the probability of success of using network X, P(Y) may be the probability of success of using network Y, and the like. In the case a data transfer attempt using network X fails, P(X) may be updated based on the failed attempt (for example, from 80% to 20%) and, for example, historical data and/or information (for example determining that after a first failed attempt of using network X, the probability of success for a subsequent attempt may be 25% of the initial probability). P(Y) may be updated in a similar manner (for example, from 75% to 90%, based on historical data determining that when network X is down, data transfers using network Y is, in fact, a robust alternative). In some embodiments, dependent or conditional probabilities of success may include or involve a data or information transfer value (which may or may not be associated with a monetary value and may be for example parametrized or calculated based on user preferences and/or historic data transfer information or statistics). In some embodiments, data transfer values may be calculated using the appropriate equations provided herein as well as analogous equations (which may be adapted to particular kinds of data transfers which may or may not be ME data transfers).

According to some embodiments, ordered list 217B may be ordered based on for example at least one of: a timeframe and/or a completion time of at least routing attempt.

For example, if a routing of the requested data transfer through a first routing path (e.g., path C) fails, then combinatorial module 217 may amend or alter the routing scheme 217 (e.g., a scheme that may include ordered routing list 217B [path C, path B]) according to the expected time of service. For example, if the attempt to route the requested data transfer through path C has taken longer than the expected service time for path C, and path B is characterized by a long expected service time that may surpass the data transfer's timeframe, combinatorial module 217 may replace path B in ordered list 217B with another routing path (e.g., path D) that may be characterized by a shorter expected service time.

In another example, routing scheme 217A may include a parallel routing sequence, so as to attempt to route an ME data transfer through a plurality (e.g., two or more) paths, substantially simultaneously (e.g., without awaiting a timeout to elapse or any type of an acknowledgement from a node of network 210), as elaborated herein.

For example, a merchant may have placed high preference to performing the data transfer with maximal revenue (e.g., set a high value to a respective source preference weight 251), and that a cancellation fee may be caused in case of a data transfer cancellation. In this condition, combinatorial module 217 may add an additional factor to the calculation of the revenue function, including a probability in which the data transfer may succeed on more than one routing path, and an expected cancellation fee that the merchant may subsequently incur. Combinatorial module 217 may subsequently produce a routing scheme, that may include one or more routing paths that may be routed in a parallel sequence and may be selected upon the expected cancellation fee.

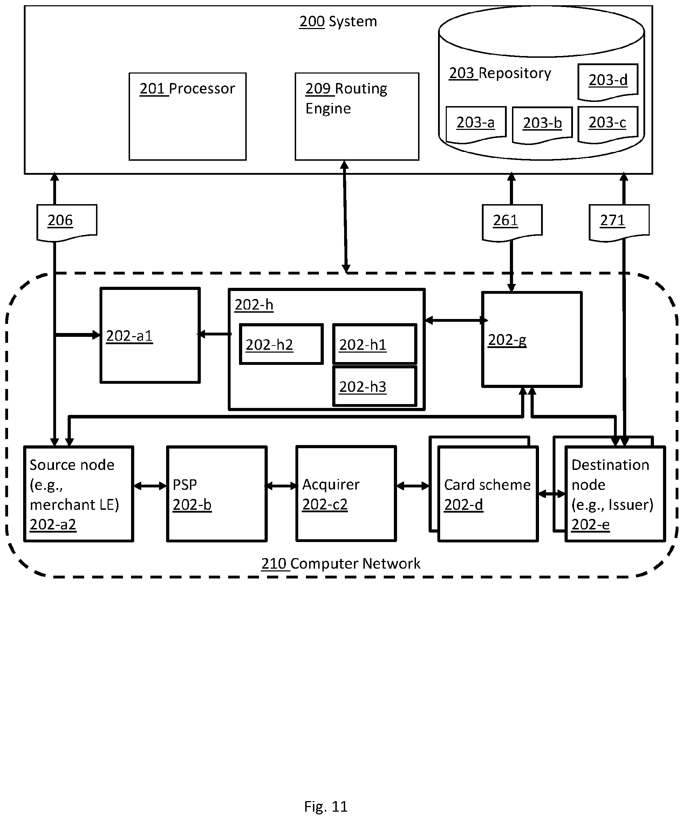

Reference is now made to Fig. 11, which is a block diagram, presenting a system 200 for routing a requested data transfer through nodes of a computer network, according to some embodiments. It is noted that system 200, as depicted in Fig. 11 is shown in a simplified format. System 200 may include elements and modules that may be discussed elsewhere herein in relation to other figures and will not be repeated here for the purpose of brevity.

According to some embodiments, system 200 may be connected, through any type of computer connection, to one or more destination nodes 202-e. For example, one or more destination nodes 202-e may be a computing device, such as a server, associated with a paying card issuer and/or a bank server that may hold information pertaining to a bank account of one or more clients. System 200 may be connected to the one or more destination nodes 202-e by any appropriate communication network as known in the art, such as the internet and/or a cellular communication network.

in some embodiments, system 200 may receive, from the one or more destination nodes 202-e, one or more destination feature vectors (DFV) 271, each associated with or being for a destination node. Pertaining to the above example, wherein the one or more destination nodes 202-e is associated with a paying card issuer or a bank server, DFV 271 may be or may include a data structure including one or more data elements pertaining to or describing the issuance of a specific paying card (e.g., credit card, debit card, etc.) associated with a specific user or client, and/or parameters of the respective user's bank account, including for example:

a user's details (e.g., name, address, phone number, etc.)
details of one or more credit cards (e.g., a BIN number);
details of one or more a bank accounts (e.g., bank account associated with the paying card);
an issuer's identification;
a credit settlement date;
a bank account credit limit;
a bank account balance;
an overdraft interest rate, etc.

As elaborated herein, system 200 may receive, from one or more source nodes 202-a2 of the computer network 210, a data transfer request 206 to route a data transfer (e.g., an ME data transfer or transaction) between the source node 202-a2 and the at least one destination node. For example, as elaborated herein for embodiments where the requested data transfer 206 is an ME data transfer, source node 202-a2 may be or may include a computing device (e.g., element 100 of Fig. 1), associated with a legal entity (e.g., a shop) of a merchant, and the data transfer request may include one or more data elements pertaining to data transfer parameters, including for example:

a type of an ME data transfer (e.g.: purchase, refund, reversal, authorization, fund transfer, etc.);
an ME sum and currency of the ME data transfer;
one or more paying options (e.g., credit cards, debit cards, 'PayPal', etc.) that may be acceptable by source node 202-a2 (e.g., a merchant LE) to perform the ME data transfer;
an identification of a source node 202-a (e.g., a merchant LE); and
an identification of a destination node 202-e (e.g., an issuer of a paying card presented by a user during a purchase of goods from a merchant LE), etc.

System 200 may be configured to extract or determine the one or more data transfer parameters from data transfer request 206. Extraction of the one or more data transfer parameters, including for example FV, GC and cost metrics is elaborated elsewhere herein, and will not be repeated here for the purpose of brevity.

According to some embodiments, system 200 may maintain and/or store (e.g., on a repository such as element 203), a user list 203-a. User list 203-a may be or may include a data structure, such as one or more tables of a database, and may include data pertaining to one or more users. For example, in embodiments where destination nodes 202-e are, or are associated with, credit card issuer servers and/or bank servers, user list 203-a may include an association between one or more users and respective values of DFV parameters (e.g., user's details such as name and phone number, details of one or more credit cards, details of one or more a bank accounts, etc.), as elaborated in the example of table 2, below:

**Table 2**

| User | Name | User computing device (e.g., Smartphone) Identification (e.g., phone number) | Paying card identification (e.g., BIN number) | Bank account identification (e.g., IBAN number) | Credit limit |
|------|------|------|------|------|------|
| User1 | UN1 | U1-PH1 | U1-PC1 | U1-IBAN1 | U1-CL1 |
| | | | U1-PC2 | U1-IBAN2 | U1-CL2 |
| | | | U1-PC3 | U1-IBAN3 | U1-CL3 |
| User2 | UN2 | U1-PH2 | U2-PC1 | U2-IBAN1 | U2-CL1 |

According to some embodiments, system 200 may include or store (e.g., on element 203) a selection-rule list 203-b, and may be configured to select or determine a destination node 202-e (e.g., an issuer node) from the plurality of destination nodes of network 210 that may be associated with the same user on user list 203-a, based on one or more of, for example: the data transfer parameters and the one or more received DFVs of the one or more destination nodes, and according to selection-rule list 203-b, as elaborated herein.

In other words, in embodiments where the data transfer request 206 is an ME data transfer request, system 200 may select a computing device (e.g., element 100 of Fig. 1) that may be associated with a paying card issuer (e.g., 202-e) of the plurality of paying card issuers based on one or more of the received ME data transfer request and the received DFV.

In some embodiments a user may present a paying card 202-h to a merchant's computing device 202-a1 (e.g., physically, at a POS in a store or via an online shopping website), to perform a purchase. ME data transfer request 206 may include a payment of a specific sum of money in a specific currency, and an identification of the user's paying card. The user may have a plurality of paying options (e.g., a plurality of paying cards, a plurality of bank accounts, etc.), associated with or supported by a respective plurality of source nodes (e.g., card issuer servers, banking servers, etc.). System 200 may select an appropriate destination node 202-e from the plurality of destination nodes 202-e of that may be associated with the same user on user list 203-a. This selection may be performed as a rule-based selection, according to one or more of: the ME data transfer parameters and the one or more received DFVs of the one or more destination nodes.

For example:

ME data transfer 206 may include a specific payment sum at a specific currency;
the user (e.g., a customer purchasing goods via a merchant's online shopping server 202-a1) may be associated (e.g., by user list 203-a, as in the example of Table 2) with a first paying card, associated with a first destination node 202-e (e.g., a first banking server and/or a first card issuer server);
the user may also be associated (e.g., by user list 203-a, as in the example of Table 2) with a second paying card, associated with a second destination node 202-e (e.g., a second banking server and/or a second card issuer server);
selection-rule list 203-b may include a rule that dictates that surpassing a predefined percentage (e.g., 90 percent) of credit limit must be avoided before the middle of a calendar month; and
performance of the ME data transfer by a first paying card may cause the user to surpass the predefined percentage, but performance of the ME data transfer by the second paying card may keep the paying card within the predefined percentage of the credit limit.

System 200 may subsequently select the destination node 202-e associated with the second paying card, based on the data transfer parameters (e.g., the payable sum) and parameters of the received DFVs (e.g., paying card identification and credit limits) and according to the rule-based selection (e.g., prohibiting surpassing the predefined percentage of credit limit).

In another example:

selection-rule list 203-b may include a rule that dictates that an overdraft must be avoided before the last week of a calendar month; and
performance of the ME data transfer via a first bank account may cause the account to be overdrawn, but performance of the ME data transfer via the second bank account may keep account positively balanced.

System 200 may subsequently select a destination node 202-e associated with the second bank account, based on the data transfer parameters (e.g., the payable sum) and parameters of the received DFVs (e.g., bank account identification and bank account balance) and according to the rule-based selection (e.g., prohibiting a condition of account overdraft). System 200 may be configured, following selection of a destination node 202-e from one or more destination nodes associated with the user (e.g., a customer performing an ME data transfer or transaction) and as elaborated herein, to route the requested data transfer through nodes of the computer network between the source node and the selected destination node. For example, routing engine 209 may route the requested data transfer 206 through network 210 by any appropriate routing protocol (e.g., RIP) as known in the art.

According to some embodiments, system 200 may be connected to one or more computing devices 202-g (e.g., element 100 of Fig. 1), such as user smartphones, laptop computers, tablet computers and the like, that may be associated (e.g., as presented in the example of table 2) with one or more users in user list 203-a. System 200 may be connected to the one or more computing devices 202-g via any appropriate data communication network, including for example the internet and a cellular network.

According to some embodiments, following a selection of a destination node 202-e from one or more destination nodes associated with the user, system 200 may instruct or configure the one or more computing devices 202-g associated with the user (e.g., the user's smartphone) to present on a user interface (e.g., element 140 of Fig. 1, such as a smartphone's touchscreen) one or more data elements pertaining to the selection of destination node 202-e. For example, when requested data transfer 206 is for an ME data transfer, computing devices 202-g may present:

the one or more payment options available for the user (e.g., one or more paying cards belonging to the user, that may be acceptable by the source node 202-a2;
the one or more bank accounts associated with the user; and
the selected destination node 202-e (e.g., a paying card issuer, associated with a paying card belonging to the user).

System 200 may instruct or configure the one or more computing devices 202-g to prompt the user to confirm the selection, and/or override the selection by marking and/or selecting a different payment option and/or destination node (e.g., associated with a different bank account and/or paying card).

According to some embodiments, system 200 may receive from one or more computing devices 202-g associated with a specific user, a set of one or more destination preference weights (DPWs) 203-c, where each DPW may correspond to one or more a data transfer parameters. A user may define, for example via a user interface (UI) on their computing devices 202-g (e.g., their smartphone), one or more DPWs 203-c, to reflect their preference for selection of a destination node. For example, when data transfer 206 is an ME data transfer, DPW 203-c may include, for example:

a preference to divide a financial data transfer to as many payments as possible;
a preference to pay as little interest (e.g., due to postponing of payments) as possible;
a general preference to use a specific paying card;
a general preference to use a specific bank account, etc.

System 200 may be configured to further base the selection of destination node 202-e from the plurality of destination nodes 202-e associated with the user, on the received set of destination preference weights.

In some embodiments of the invention, receiver or destination nodes may send preferences to sender or source nodes, suggesting an incentive to change its preferences for choosing a routing path.

Pertaining to a previously presented example of a selection rule that may dictate that surpassing a predefined percentage (e.g., 90 percent) of credit limit must be avoided before the middle of a calendar month (thus selecting the second destination node 202-e):

a low preference (e.g., a low DPW value) may be assigned to the predefined percentage selection rule;
performance of the ME data transfer by the second paying card may cause a high interest due to delayed payments and
a high preference (e.g., a high DPW value) may be assigned to paying a minimal interest due to delayed payments.

In this condition, the selection of a destination node may be overturned (e.g., from the second destination node 202-e to the first destination node 202-e).

According to some embodiments, system 200 may receive from one or more computing device (e.g., a smartphone associated with a specific user via user list 203-a) an event indication 261, corresponding to occurrence of a real-world event, including for example:

connecting to a specific cellular and/or geolocation network, indicating a geographic location (e.g., roaming from a first country to another);

connecting to a specific wireless communication network (e.g., a Wi-Fi network associated with a specific destination node 202-a1, such as a merchant LE, when a user walks into the merchant's shop);

receiving information via a short range communication network, such as a near field communication (NFC) network. The information may for example, pertain to a product or a service that the user of computing device 202-g may indicate intent to purchase (e.g., by 'tapping' their smartphone on a point of sale (POS) of the required product).

System 200 may further base the selection of a destination node from the plurality of destination nodes associated with the user on event indication 261.

For example, smartphone 202-g may indicate 261 that a user has traversed a border between a first country to a second country. Subsequently system 200 may select a first destination node (e.g., a first banking server) that may handle a first bank account of the user, that is managed in the currency of the second country over a second destination node (e.g., a second banking server) that may handle a second bank account of the user, that is managed in the currency of the first country, thereby selecting a destination node 202-e according to indication 261.

In another example, System 200 may store (e.g., on repository 203) a list 203-d that may associate at least one merchant with a respective at least one wireless network identifier (e.g., a service set identifier (SSID)). For example:

at least one source preference weight 251 may include a preference of a merchant's payment option. For example, a source preference weight 251 may dictate that a merchant may accept a first credit card, associated with a first issuer 202-e, but not accept a second credit card associated with a second issuer 202-e;

a specific user may own both the first credit card and the second credit card; and

the user may walk into a store of the merchant, and smartphone 202-g may indicate 261 a connection to a wireless network (e.g., a Wi-Fi network) of the merchant.

System 200 may determine (e.g., according to indication 261 and list 203-d) that the user is located at a store of the respective merchant. System 200 may exclude the second credit card and the associated second issuer 202-e, thereby selecting a destination node 202-e according to indication 261.

In yet another example a user may approach a POS of a merchant, and connect their smartphone 202-g (e.g., by a 'tapping' gesture, as known in the art) to a short range communication network, such as NFC. The user's smartphone may receive, via the short range communication network information pertaining to a product and/or a service that the user may be interested in purchasing or acquiring. For example, the information may include an identification of a product (e.g., a name, a code number and the like), a price, one or more payment options (e.g., acceptable paying cards), additional fees and/or interest rates pertaining to each payment option, and the like. Smartphone 202-g may indicate 261 the received information to system 200.

The user may then proceed to purchase the service or product, and thus system 200 may receive a data transfer request 206 as elaborated herein. System 200 may subsequently further base a selection of a destination node 202-e (e.g., a paying card issuer, a banking server, etc.) based on the information included in indication 261 (e.g., take into consideration fees and/or interest rates that pertain to each payment option).

According to some embodiments, system 200 may facilitate a negotiation between a first entity associated with one or more source nodes 202-a2 and a second entity, associated with one or more destination nodes 202-e, and may select a destination node or change a selection of a previously selected destination node following the negotiation.

In an example of an ME data transfer, the first entity may be a merchant that may be associated with one or more source nodes 202-a2. The one or more source nodes may be for example, a server, associated with a legal entity such as a store of the merchant. The second entity may be a user who may be interested in purchasing a product or service from the merchant. The user may be associated with one or more destination nodes 202-e such as bank servers and/or card issuer servers, as elaborated here.

System 200 may select a first destination node according to one or more of: data transfer parameters, destination feature vector 271, destination preference weight 203-c and event indication 261, and route a first requested data transfer 206 between source node 202-a2 and destination node 202-e as elaborated herein.

Source node 202-a2 may be configured (e.g., via input device 135 of Fig. 1) to prefer a second destination node over the selected, first destination node. For example, source node 202-a2 (e.g., merchant LE server) may prefer not to conduct a sale using a first paying option (e.g., a first paying card) associated with the first destination node 202-e (e.g., a first card issuer) and prefer conducting the sale using a second paying option (e.g., a second paying card) associated with the second destination node 202-e (e.g., a second card issuer).

Following selection of destination node 202-e (e.g., a card issuer server), source node 202-a2 (e.g., merchant LE server) may produce a second data transfer request to incentivize selection of the destination node 202-e that may be preferred by the source node 202-a2, thus initiating a negotiation between the first entity (e.g., the merchant) and the second entity (e.g., the user). The second data transfer request may include for example, a reduced price for using the preferred payment option (e.g., the second paying card).

System 200 may extract at least one data transfer parameter from the second data transfer request (e.g., the reduced price for the second paying card), and may analyze (e.g., compare) at least one of a data transfer parameter of the first data transfer request (e.g., an original price included in the first ME data transfer or transaction request) and a data transfer parameter of the second data transfer request (e.g., the reduced price included in the second ME data transfer transaction request).

System 200 may select a destination node between the first destination node 202-e and the second destination node 202-e in real time or near real-time, based on the analysis. For example system 200 may compare the suggested prices included in the first ME data transfer and the second data transfer, in view of destination preference weights (e.g., manifesting preference of a user to use a specific bank account or credit card), and select a destination node that may yield an optimal selection from the user's perspective.

According to some embodiments, the negotiation process described herein may be iterative, and may proceed until a data transfer may optimally accommodate the preferences of the first entity and the second entity. Pertaining to the same example, a plurality of ME data transfers may be produced iteratively by the merchant's source node until the payment option preferred by the merchant is selected, whereas the user may enjoy a reduction of price in the process.

As elaborated herein, requested data transfer 206 may be an ME data transfer involving at least one paying card and at least one destination node may be associated with a respective at least one paying card issuer.

According to some embodiments, at least one paying 202-h card may be a multiple-entity paying card and may represent a plurality of paying card entities 202-h1 (e.g., Visa, Master-card, American Express, etc.), where each paying card entity 202-h1 may be associated with a specific paying card issuer. In other words, at least one paying card 202-h may be associated with a plurality of paying card issuers, that may in turn be associated with a respective plurality of destination nodes 202-e (e.g., a server of Visa's issuer, a server of Master-cards' issuer, etc.). DFV 271 may subsequently include at least one data element (e.g., a BIN number) regarding to issuance of at least one of the multiple entities (e.g., Visa, Master-card, American Express) of paying card 202-h by at least one of the plurality of paying card issuers.

According to some embodiments, paying card 202-h may include a short-distance communication module (e.g., NFC) 202-h3, and may be configured to communicate (e.g., by 202-h3) with a user's computing device 202-g (e.g., a user's smartphone).

Following selection, as elaborated herein, of a destination node 202-e (a server of Visa's issuer) that may be associated with a paying card issuer (e.g., Visa's issuer) and hence with a paying card entity (e.g., Visa), computing device 202-g may receive the determined selection (e.g., Visa's issuer) from system 200. Computing device 202-g may communicate (e.g., via short-distance communication module 202-h3) with paying card 202-h and configure or alter the paying card 202-h to represent the selected paying card issuer (e.g., Visa). The term 'represent' may be used in this context to imply that when using multiple entity paying card 202-h with a computer 202-a1 of a merchant (e.g., at a POS of the merchant), the multiple entity paying card 202-h will perform as if it is a single paying card, issued by the selected issuer (e.g., a Visa paying card).

According to some embodiments, multiple-entity paying card 202-h may include an entity indicator 202-h2 and paying card 202-h may be configured to representing an identification of the selected paying card issuer by the entity indicator.

For example, entity indicator 202-h2 may include a light emitting diode (LED), configured to generate light according to or indicating the represented paying card issuer (e.g., produce light in a first color to represent a first paying card issuer and produce light in a second color to represent a second paying card issuer).

In another example, entity indicator 202-h2 may be or may include an electronic ink display, configured to display at least one identification (e.g., a name an icon and the like) of a paying card issuer, according to the identity of the selected paying card issuer.

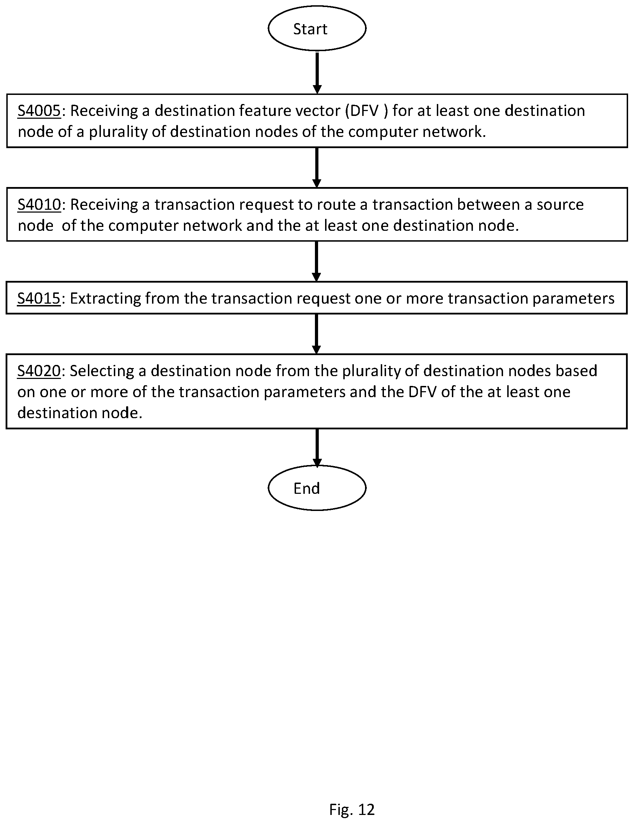

Reference is now made to Fig. 12, which is a flow diagram depicting a method of routing data transfers through a computer network (e.g., element 210 of Fig. 11), by at least one processor (e.g., element 105 of Fig. 1), according to some embodiments of the invention.

As shown in step S4005, the at least one processor may receive a DFV (e.g., element 271 of Fig. 11) for at least one destination node (e.g., element 202-e of Fig. 11) of a plurality of destination nodes of the computer network.

For example, the at least one destination node 202-e may be a computing device associated with a banking server or a credit card issuer and the DFV may include at least one data element pertaining to Credit card details, an Issuer identification, a bank account, an account balance, a credit card clearance date, and the like.

As shown in step S4010, the at least one processor may receive a data transfer request (e.g., element 206 of Fig. 11) to route a data transfer between a source node of the computer network and at least one destination node 202-e.

For example, the data transfer may be a monetary data transfer (e.g., a request to transfer funds and/or purchase a product or service). The source node may be a computing device associated with an acquirer entity (e.g., element 202-c2 of Fig. 11) and/or a merchant's legal entity (e.g., element 202-a2 of Fig. 11), and the destination node 202-e may be a computing device associated with a banking server and/or a credit card issuer.

As shown in step S4015, the at least one processor 105 may extract from the data transfer request one or more data transfer parameters (e.g., data transfer sum, payment conditions, optional data transfer methods such as different credit card and/or debit card entities, etc.), as elaborated herein.

As shown in step S4020, the at least one processor 105 may select a destination node 202-e from the plurality of destination nodes based on one or more of the data transfer parameters and the DFV of the at least one destination node, as elaborated herein.

As elaborated herein in relation to Fig. 7, system 200 may be configured to calculate a route, e.g., the best route, for transferring a requested data transfer 206, such as an ME data transfer, between one of a plurality of source nodes and one of a plurality of destination nodes, e.g., in view of at least one predefined preference (e.g., a source preference weight 251) dictated by a user (e.g., a merchant).

For example, a user may dictate their preference for a minimal cost metric, such as a minimal data transfer fee. System 200 may calculate or determine an optimal path for transferring or routing a data transfer between one or more (e.g., each) node (e.g., 202-a2) associated with a respective LE and a destination node (e.g., 202-e). The route may be optimal in a sense that it may best accommodate the user preference (e.g., produce a minimal data transfer fee).

In some embodiments, system 200 may then calculate or determine the best route among the one or more calculated optimal routes or paths. The route may be referred to as 'best' in a sense that it may best accommodate the user's preference for the data transfer among one or more (e.g., all) 'optimal' routes.

In some embodiments, system 200 may subsequently select a source node (e.g., a computing device associated with a specific LE) corresponding to the best path (as described herein), and route the data transfer from the source node, via the best path, to the destination node.

According to some embodiments of the invention, system 200 may utilize the ability to determine the best routing path for a specific data transfer and route the data transfer through the best path on a network to optimize a plurality of data elements, which may for example describe or represent an OS, as elaborated herein.

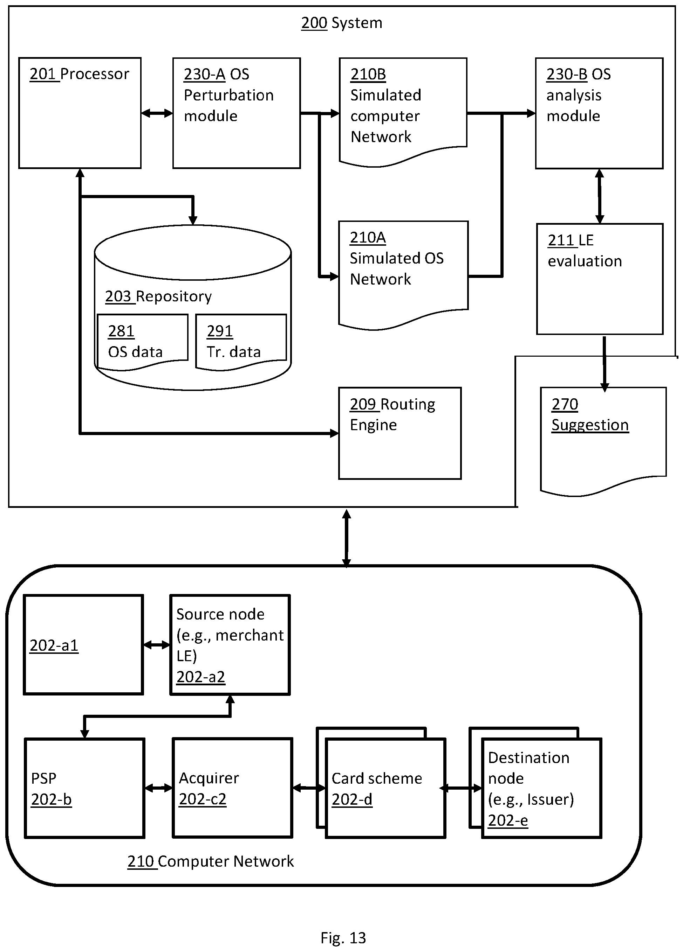

Reference is now made to Fig. 13, which is a block diagram presenting a system 200 for optimizing a plurality of data items which may describe an organizational structure according to some embodiments of the invention. Elements of system 200 and computer network 210 have been discussed herein (e.g., in relation to Fig. 7), and will not be repeated here for the purpose of brevity.

As shown in Fig. 13, embodiments of system 200 may include an OS perturbation module 230-A, an OS analysis module 230-B, and an evaluation module 211. In some embodiments, OS perturbation module 230-A, OS analysis module 230-B, and evaluation module 211 may be implemented as software modules, hardware modules, and/or any combination thereof. For example, OS perturbation module 230-A, OS analysis module 230-B, and evaluation module 211 may be implemented as software processes and may be executed or run by processor 201.

As explained herein, OS perturbation module 230-A, and OS analysis module 230-B may be configured to analyze a performance of at least one OS in view of at least one predefined preference (e.g., a source preference weight 251, as elaborated herein in relation to Fig. 5 and/or Fig. 7) and produce at least one suggestion 270 for improving or optimizing the OS so as to obtain an improvement in the performance.

For example, in a condition where the data transfer is an ME data transfer, a user (e.g., a representative of an organization) may prefer to perform data transfers that would cause a minimal overall data transfer cost (e.g., a minimal overall expected data transfer cost for all data transfer fees, currency conversion rates, cancellation fees, etc.). As elaborated herein, the user may manifest their predefined preference for minimal overall expected data transfer cost by setting an appropriate value to a respective source preference weight 251.

In some embodiments, system 200 may accumulate (e.g., in repository 203) data transfer parameters (e.g., prices, data transfer cancellation fees, data transfer success fees, etc.) pertaining to one or more (e.g., all) data transfers performed by the organization over a given period of time (e.g., over the past week, month, year, etc.).

In some embodiments, system 200 may then calculate an overall expected data transfer cost (e.g., a sum of all expected data transfer costs pertaining to the accumulated data transfer parameters) in view of the current organizational structure, as elaborated herein.

In some embodiments, system 200 may produce one or more data elements that may be or may represent, for example, a simulated OSs of the organization. The produced data elements may be referred to as 'simulated' OSs in a sense that they may be regarded as "what if" simulations or variant versions of the organization's current OS and may include perturbations or changes in relation to the current OS as elaborated herein.

System 200 may, for example, be configured to evaluate at least one parameter (e.g., an overall expected data transfer revenue) of one or more simulated OS, to determine a benefit of changing one or more elements of OS and thus improve or optimize the OS. Such a change may include, for example, adding, omitting and/or modifying one or more OS elements, including for example adding one or more PEs, changing or replacing one or more EE, omitting one or more LEs and the like.

For example, in some embodiments, the one or more data transfers may be ME data transfers, and a user (e.g., a representative of an organization) may prefer to perform data transfers that would provide a minimal overall expected data transfer cost. In some embodiments, the user may manifest their predefined preference for minimal overall expected data transfer cost, e.g., by setting an appropriate value to a respective source preference weight 251 (e.g., as elaborated in table 1). System 200 may be configured to calculate and/or optimize various parameters and/or functions such as for example an expected cost for one or more data transfers. For example, an expected cost of data transfer (or an expected data transfer cost) may include a weighted sum of fees, weighted by respective probabilities (e.g., as elaborated herein, in relation to Eq. 10). Additionally, embodiments of the invention may calculate an overall expected data transfer cost (e.g., a summation of expected data transfer costs for a plurality of accumulated data transfers, e.g., for all the accumulated data transfers), in view of a specific OS (e.g., in relation to a current OS and/or the one or more simulated OSs).

Additionally, or alternatively, system 200 may be configured to calculate an OS parameter such as a minimal overall expected data transfer cost. For example, system 200 may analyze one or more available routing paths in one or more of a current OS and a simulated OS network to obtain a minimal value of an expected data transfer cost for each data transfer. System 200 may subsequently calculate the sum of minimal expected data transfer costs (e.g., the minimal overall expected data transfer cost) for a plurality of data transfers (e.g., historic, accumulated data transfers). In some embodiments, system 200 may produce at least one suggestion 270, e.g., for improving or optimizing the organizational structure, for example, by comparing a performance parameter (e.g., a minimal, overall expected cost of data transfers) between the current OS and the one or more simulated OSs, as elaborated herein.

In another example, in a condition where the data transfer is an ME data transfer, a user (such as e.g., a representative of an organization) may prefer to perform data transfers that would provide a maximal or overall expected data transfer revenue. In some embodiments, the user may manifest their predefined preference for maximal or overall expected data transfer revenue, e.g., by setting an appropriate value to a respective source preference weight 251 (e.g., as elaborated in table 1).

In some embodiments, system 200 may accumulate (e.g., in repository 203) one or more data transfer parameters (e.g., prices, data transfer cancellation fees, data transfer success fees, fraud propensities, cancellation propensities, data transfer success probabilities, data transfer failure probabilities, etc.) pertaining to one or more (e.g., all) data transfers performed by the organization over a given period of time (e.g., over the past week, month, year, etc.).

In some embodiments, system 200 may then calculate a maximal or overall expected data transfer revenue, e.g., in view of the current organizational structure. For example, system 200 may use an expected revenue function (e.g., as elaborated in Eq. 8 herein) for each data transfer and accumulate the expected revenue function for one or more (e.g., all) data transfers to produce a value of a maximal or overall expected data transfer revenue.

In some embodiments, system 200 may produce one or more data elements that may represent or describe a simulated OSs of the organization and calculate the maximal or overall expected data transfer revenue for all the accumulated data transfers in view of the one or more simulated OSs. System 200 may select an OS that may correspond to the maximal or overall expected data transfer revenue among the organization's current or actual OS and the one or more simulated OSs. In some embodiments, system 200 may produce at least one suggestion 270 for improving or optimizing the organizational structure by, e.g., comparing a performance (e.g., the overall expected data transfer revenue) between the current OS and the one or more simulated OSs, as elaborated herein.

In another example, in a condition where the data transfer is an ME data transfer, a user (e.g., a representative of an organization) may prefer to perform data transfers that would have a maximal expected probability of success. In some embodiments, the user may manifest their predefined preference for maximal probability of success, e.g., by setting an appropriate value to a respective source preference weight 251 (e.g., as elaborated in table 1).

In some embodiments, system 200 may accumulate (e.g., in repository 203) one or more data transfer parameters (e.g., data transfer success probabilities, such as elaborated herein in relation to Eq. 3A, data transfer failure probabilities such as elaborated herein in relation to Eq. 3B, etc.) pertaining to one or more (e.g., all) data transfers performed by the organization over a given period of time (e.g., over the past week, month, year, etc.).

In some embodiments, system 200 may then calculate an overall probability of data transfer success in view of the current organizational structure (e.g., as a percentage of successful data transfers from the overall number of data transfers, over a predefined period of time). Additionally, or alternatively, system 200 may generate, based on the calculation, at least one suggestion 270 for improving or optimizing the OS, by for example, increase the overall probability of success, wherein the suggestion comprises at least one perturbated OS element value (e.g., an additional LE, an additional EE, an additional PE, and the like), as elaborated herein.

Additionally, or alternatively, system 200 may receive, e.g., from a user (for example, via an input device such as element 135 of Fig. 1) one or more data elements that are data transfer parameters for predicted data transfers. For example, a user may have knowledge of a predicted ME data transfer, and may provide parameters of the predicted data transfer to system 200. System 200 may thus prepare the OS in advance, for example, by modifying the OS (e.g., by adding one or more OS elements to the OS) in view of the anticipated or predicted future data transfers.

According to some embodiments of the invention, system 200 may receive (e.g., from input device 135 of Fig. 1) a value of at least one OS element 281 pertaining to a current organizational structure (OS) of a specific organization.

System 200 may store OS element 281, for example in repository 203. OS element 281 may be or may include, for example any appropriate data structure as known in the art, such as a table, an entry in a database, a linked list and the like, and may include, for example: one or more first data elements pertaining to nodes of computer network 210; one or more second data elements pertaining to PEs, such as shops, offices and/or warehouses of the organization; one or more third data elements pertaining to LEs such as subsidiaries of the organization; and/or one or more fourth data elements pertaining to enabling entities (e.g., a bank account, a commercial license, an agreement to join a currency exchange, and the like) of the organization.

In some embodiments, system 200 may receive (e.g., from a user, via input device 135 of Fig. 1) one or more data transfer data elements 291. The one or more data transfer data elements 291 may include a value of one or more data transfer parameters of data transfers conducted over nodes of computer network 210. System 200 may store the one or more data transfer data elements 291, for example in repository 203. In some embodiments, data transfer data element 291 may be or may include any appropriate data structure as known in the art, such as a variable, a table, an entry in a database, a linked list and the like, and may include, for example: a value of at least one element of a FV, such as a payload type (e.g., an ME data transfer), an identification (e.g., an IP address) of a source node, an identification (e.g., an IP address) of a destination node, and the like; a value of at least one element of a GC, such as a fraud propensity or likelihood, a decline propensity, a chargeback propensity, a probability of data transfer success, a probability of data transfer failure and the like; and/or a value of at least one cost metric parameter, such as a data transfer fee, a currency conversion spread, an NPV value, a cancellation fee, and the like.

For example, in an embodiment where one or more data transfers are ME data transfers, such as payments, the one or more data transfer data elements 291 may correspond to a value of one or more data transfer parameters that may include, for example: one or more properties of a payment, such as a price, a method of payment (e.g., by a credit card, a debit card, a banking order, etc., an identification of a paying card, an identification of a PSP, a currency used in the payment, a deferral of the payment, etc.); one or more cost metrics; a probability of a data transfer success (e.g., as elaborated herein in relation to Eq. 3A) an identification of one or more source nodes of the first computer network; and/or an identification of a destination node of the first computer network.

According to some embodiments of the invention, OS Perturbation module 230-A may be configured to perturbate or change a value of one or more OS elements 281, so as to produce one or more simulated or alternative values of OS elements 281. The perturbation may include, for example, one or more of: an addition of an EE, a change to an EE, an addition of a LE to the organization, a change in a LE of the organization, an addition of a PE, a change in a PE and/or a combination thereof.

For example, in an embodiment where one or more data transfers are ME data transfers, a global merchant (e.g., "Big_Company") may have a plurality of subsidiary representative commercial LEs around the world (e.g., "Big_Company USA", "Big_Company UK", "Big_Company China", etc.). each of the plurality of subsidiary representative commercial LEs may conduct business and/or serve customers at respective countries and/or territories. OS Perturbation module 230-A may perturbate OS data 281 so as to produce an alternative or additional LE so as to simulate a condition in which the global merchant (e.g., "Big_Company") also has a subsidiary LE in another territory (e.g., "Big_Company Japan").

In another example, at least one LE (e.g., "Big_Company Germany") may include or may be associated with one or more PEs such as shops (e.g., "Big_Company Germany, Munich shop"), representative offices (e.g., "Big_Company Germany, Hamburg office"), warehouses, etc. OS Perturbation module 230-A may perturbate OS data 281 so as to produce an alternative or additional PE (e.g., "Big_company Germany, Berlin shop") and simulate a condition in which the LE has or is associated with the alternative or additional PE.

In another example, at least one organization and/or LE (e.g., "Big_Company Italy") may include or may be associated with one or more enabling entities (EEs). As elaborated herein, the one or more EEs may correspond to one or more assets of the organization (e.g., "Big_Company) and/or to an asset or assets of an LE of the organization (e.g., "Big_Company Italy") that may be required (e.g., by law, by regulation, by an agreement and the like), e.g., to enable the organization and/or LE to perform one or more data transfers. For example, an EE may include: a bank account in a bank (e.g., a first bank), that may be required to perform a monetary data transfer through the respective bank; a license, such as a commercial license that may be required, for example, to sell or ship a specific commodity (e.g., alcohol); a membership in a monetary exchange that may be required, for example, to obtain favorable exchange rates for currency conversion, and the like.

In some embodiments, OS Perturbation module 230-A may perturbate OS data 281 so as to produce an alternative or additional EE (e.g., a bank account in a second bank) so as to simulate a condition in which the organization and/or LE (e.g., "Big_Company Italy") has or is associated with the alternative or additional EE (e.g., has a bank account at a second bank).

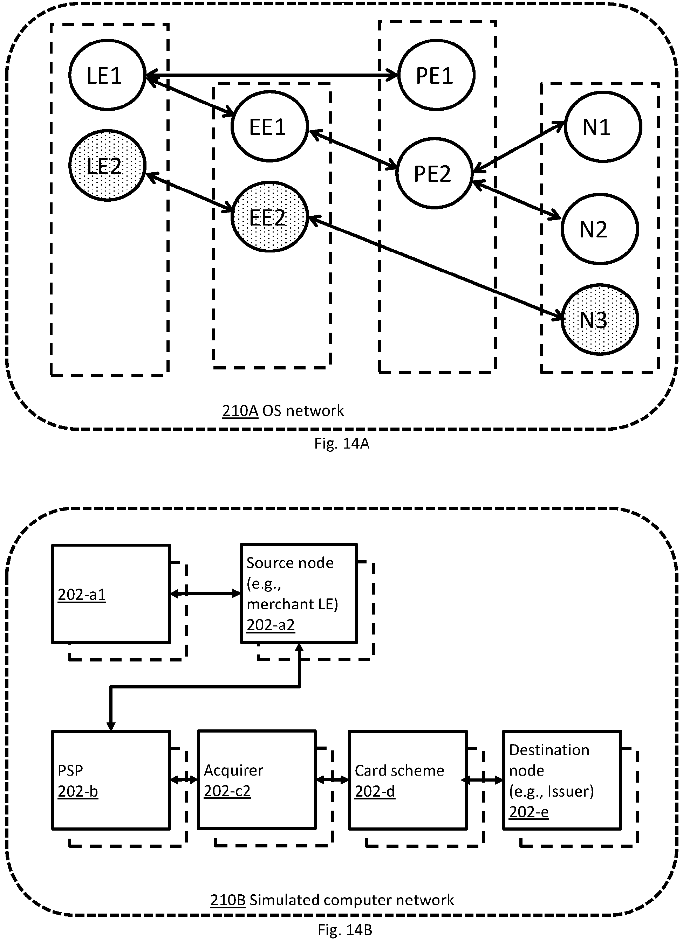

According to some embodiments of the invention, one or more first OS elements 281 may be logically connected to one or more second data elements 281, thus forming a linked OS data structure or OS network 210A. System 200 may maintain an OS network 210A of at least one organization as any appropriate data structure as known in the art, including, for example, a linked list or a relational database, as elaborated in relation to Fig. 14A.

Reference is now made to Fig. 14A which is a block diagram presenting a simplified, non-exhaustive example representation of an of an OS network 210A, according to some embodiments of the invention.

As shown in the example of Fig. 14A, network 210A may include one or more OS elements, each marked as a node or a circle in Fig. 14A. As shown in Fig. 14A, the one or more OS elements may include one or more of: a first data element pertaining to one or more nodes (e.g., N1, N2, N3) of a computer network (e.g., an identification of one or more nodes of computer network 210 of Fig. 13); a second data element (e.g., PE1, PE2) pertaining to a physical entity (PE); a third data element (e.g., LE1, LE2) pertaining to a legal entity (LE); and a fourth data element (e.g., EE1, EE2) pertaining to an enabling entity (EE). The one or more OS elements may be linked, associated or interconnected in a unidirectional or bidirectional logical connection, as displayed by the arrows in Fig. 14A.

It should be noted that a structure or configuration of OS network 210A may affect a structure or configuration of computer network 210, and therefore also affect routing of at least one data transfer over computer network 210.

Pertaining to the example of "Big_company", an LE (e.g., LE1) of "Big_company" (e.g., "Big_company USA") may be associated with a first EE (e.g., EE1) such as a first bank account (e.g., in an American bank), a first PE (e.g., PE1) such as a representative office and a second PE (e.g., PE2) such as a store. In some embodiments, having a store (e.g., PE2) working with a specific bank account (e.g., EE1) may enable LE1 to route an ME data transfer via a first computing node (e.g., N1) such as a first payment service provider (e.g., a PSP such as element 202-b of Fig 13) and/or a second computing node (e.g., N2) such as a first acquirer node (e.g., node 202-c of Fig 13) or a banking server where the bank account of LE1 may be handled.

OS Perturbation module 230-A may perturbate OS data 281 to produce one or more alternative or additional OS elements, as manifested by the textured nodes of Fig. 14A (e.g., LE2, EE2, N3). The one or more alternative or additional OS elements may be added to OS network 210A so as to produce a simulated OS network, simulating a condition in which the organization has or is associated with the one or more alternative or additional OS elements (e.g., in addition to the current or actual OS elements, manifested as white nodes in Fig. 14A).

For example, LE2 may be a virtual or simulated subsidiary legal entity of "Big_company" (e.g., "Big_company France"), EE2 may be a bank account in a French bank and N3 may be a corresponding computing node such as a server corresponding to a second PSP node 202-b and/or a banking server of a second acquirer node 202-c that may correspond to EE2 (e.g., a banking server in the French bank).

As elaborated herein, system 200 may analyze OS network 210A including the current or actual OS (e.g., manifested as white nodes) and/or the simulated OS elements (e.g., manifested as textured nodes), to produce suggestion 270 for improvement of the OS.

According to some embodiments of the invention, one or more OS elements (e.g., nodes of Fig. 14A) of OS network 210A may produce a benefit for the OS, such as a reduction of a value of at least one cost metric and/or increase of an overall expected data transfer revenue and the like. Additionally, or alternatively, one or more OS elements may have or may be characterized by an OS element cost, that may correspond to a cost of purchase and/or maintenance of the respective OS element (e.g., a cost of opening a banking account, a cost of maintaining a representative office, and the like). The benefit and/or the OS element cost may be considered by system 200 in a process of evaluating and or improving the OS, as elaborated herein.

For example, in some embodiments, a first EE may be a license or a permit to import and/or sell goods at a specific country or territory. On one hand, the first EE may be a prerequisite for establishing an LE such as a subsidiary company at that country or territory, and may provide a benefit for reduced data transfer fees, as elaborated herein in relation to Fig. 7. On the other hand, the license or permit may cause a cost or a fee to the organization. Therefore, the cost of the first EE may be considered by system 200 in view of the provided benefit as part of an overall evaluation of the OS.

In another example, a second EE may be a local representative office that may be a prerequisite for opening a bank account in a specific country or territory. A tradeoff may exist between a cost or a fee that the local representative office may cause the organization and a benefit that may be provided by the new bank account (e.g., by reduction of data transfer fees and/or currency conversion rates). Therefore, system 200 may consider a cost incurred by second EE (e.g., a cost caused by the local representative office and incurred by the organization) in relation to a benefit or advantage of transferring ME data transfers via the newly opened bank account.

Reference is now made to Fig. 14B which is a block diagram, presenting an example simulated computer network 210B, according to some embodiments of the invention.

As explained herein in relation to Fig. 14A, OS perturbation module 230-A may be configured to perturbate or change a value of one or more OS elements 281, so as to create one or more simulated OS elements 281, such as one or more EEs (e.g., EE2, such as a banking account). In some embodiments, OS perturbation module 230-A may also create one or more simulated, computing nodes that may correspond to the one or more simulated OS elements. Pertaining to the example in which the one or more EEs (e.g., EE2, of Fig 14A) represent respective one or more banking accounts, OS perturbation module 230-A may create one or more simulated, computing nodes (e.g., N3, of Fig 14A) which are banking servers corresponding to the one or more created banking accounts.

According to some embodiments of the invention, OS perturbation module 230-A may be configured to create one or more simulated computer networks 210B, e.g., based on the one or more perturbated values of OS elements 281. The one or more simulated computer networks 210B may include, for example, the one or more computer nodes of computer network 210 (e.g., as depicted in Fig. 11 and/or Fig. 13) and/or additional or alternative simulated computing nodes, such as simulated computing nodes of OS network 210A.

Pertaining to the same example in which simulated OS network 210A includes a simulated EE node (e.g., EE2) that is a banking account and a simulated computing device node (e.g., N3) that is a computing device (e.g., a banking server) corresponding to the banking account, OS perturbation module 230-A may create a simulated computer network 210B that may include or manifest simulated computing device node N3 as a simulated acquirer node 202-c2 (e.g., marked in a dashed line in Fig 14B) that may be a banking server that may handle a banking account of the organization.

Pertaining to the "Big_company" example, OS perturbation module 230-A may produce or generate a simulated computer network 210B that may include nodes of computer network 210, in addition to nodes that correspond with one or more alternative or additional OS elements of OS network 210A. For example, simulated computer network 210B may include (e.g., in addition to nodes of the original computer network as illustrated in Fig. 13): a first simulated computing node 202-a2, corresponding to LE2 (e.g., "Big_company France"); one or more second simulated computing nodes (e.g., corresponding to N3 of Fig 14A), such as a simulated PSP node (e.g., a PSP server) 202-b; one or more third simulated computing nodes (e.g., corresponding to N3 of Fig 14A), such as a simulated acquirer node (e.g., an acquirer server) 202-c, and the like.

As elaborated herein, system 200 may analyze computer network 210 (e.g., the current or actual computer network) and/or simulated computer network 210B to generate at least one suggestion for improving or optimizing the OS.

According to some embodiments of the invention, OS analysis module (e.g., element 230-B of Fig. 13) may calculate a value of at least one OS performance parameter for one or more (e.g., each) network of computer network 210 and the simulated computer network 210B, as elaborated herein. OS analysis module 230-B may subsequently generate, based on the calculation, one or more suggestions 270 for improving or optimizing the OS. The one or more suggestions 270 may include, for example, at least one value of a perturbated OS element 281.

According to some embodiments, the at least one OS performance parameter may be dictated or determined according to a predefined user preference and may be manifested by a respective preference weight 251.

For example, the at least one OS performance parameter may be a maximal, overall, expected data transfer revenue. A user may indicate their preference for optimization of the OS according to a maximal, overall, expected data transfer revenue (e.g., by setting a high value to a respective preference weight 251). OS analysis module 230-B may calculate the overall, expected data transfer revenue for one or more networks of computer network 210 and the one or more simulated computer networks 210B, and may select the network that may provide the maximal overall, expected data transfer revenue. OS analysis module 230-B may subsequently produce one or more suggestions 270 that may include at least one OS element. The at least one OS element may correspond to the selected computer network (e.g., 210B). Pertaining to the example above, a selected simulated computer network 210B may include, for example, a simulated acquirer node 202-c2, and the simulated acquirer node 202-c2 may correspond to a simulated OS element 281 (e.g., element EE2 of Fig. 14A). OS analysis module 230-B may thus produce a suggestion 270 that may include the corresponding simulated OS element 281 (e.g., element EE2 of Fig. 14A).

In another example, the at least one OS performance parameter may be a minimal, overall, expected data transfer cost. A user may indicate their preference for optimization of the OS according to a minimal, overall, expected data transfer cost (e.g., by setting a high value to a respective preference weight 251). OS analysis module 230-B may calculate the overall, expected data transfer cost for one or more networks of computer network 210 and the one or more simulated computer networks 210B and may select the network that may provide the minimal overall, expected data transfer cost.

In yet another example, the OS performance parameter may be a combination (e.g., a weighted combination) of a minimal overall expected data transfer cost, a maximal overall expected data transfer revenue and a maximal probability of data transfer success.

OS analysis module 230-B may subsequently produce one or more suggestions 270 that may include at least one corresponding value of a perturbated OS element 281. For example, the perturbated OS element 281 may include an addition of an OS element (e.g., an addition of an EE element) that may correspond to the selected computer network (e.g., 210B).

As elaborated herein, in some embodiments, the one or more suggestions 270 may include a suggestion to add at least one OS element (e.g., manifested as a node in OS network 210A of Fig 14A). The added OS element may correspond to one or more simulated computing devices (e.g., manifested as nodes in network 210B of Fig 14B). For example, the one or more suggestions 270 may include an addition of one or more of: an LE (e.g., a subsidiary of the organization), a PE (e.g., a local representative office) and/or an EE (e.g., a banking account), that may be manifested as additional nodes 202 (e.g., an LE server, a PSP server, a banking server, an issuer server and the like) to computer network 210.

The one or more nodes 202 may be added so as to provide an improvement of computer network 210 in view of at least one OS performance parameter (e.g., as manifested by at least one preference weight 251). For example, one or more nodes 202 may be added so as to reduce a value of an overall expected data transfer cost (e.g., by reducing at least one value of a cost metric for transferring data transfers) In another example, one or more nodes 202 may be added so as to increase a value of an overall expected data transfer revenue. In yet another example, one or more nodes 202 may be added so as to increase a probability of data transfer success (e.g., as elaborated herein in relation to Eq. 3A).

As elaborated herein in relation to Fig. 7, LE evaluation module (e.g., element 211 of Fig. 13) may determine the best routing path among a plurality of possible routing paths 208' of a computer network (e.g., computer network 210 of Fig. 13 and/or simulated computer network 210B of Fig. 14B) in view of one or more received source preference weights 251.

According to some embodiments of the invention, LE evaluation module 211 may be further configured to calculate an overall performance for one or more (e.g., each) network of network 210 and one or more simulated networks 210B in view of the one or more received source preference weights 251.

For example, the OS performance parameter may be a maximal expected data transfer revenue (e.g., a maximal value of an expected revenue for an ME data transfer among a plurality of optimal routing paths, as explained herein).

A user may dictate their preference to obtain a maximal expected data transfer revenue by setting a high value to a respective preference weight 251. LE evaluation module 211 may use an expected revenue function (e.g., as elaborated herein in relation to Eq. 8) to calculate the expected data transfer revenue per each data transfer and per each routing path.

As elaborated herein in relation to Fig. 7, an organization may be associated with one or more first nodes of a computer network (e.g., element 210). For example, an organization may be associated with or may have or include one or more LEs and each of the LEs may in turn be associated with a respective first node (e.g., a computer belonging to or installed at the respective LE).

Additionally, or alternatively, each data transfer (e.g., an ME transaction) may be performed between one or more first node of the computer network and a second node of the computer network. For example, the one or more first nodes may be associated with one or more first computers, associated with an LE of the organization and the second node may be a second computer that may be associated with a second entity (e.g., a banking server that may manage a banking account of an individual who may be a customer of the organization).

For example, a data transfer may be an ME data transfer, where a monetary sum may be transferred from a first node of the one or more nodes to a second node of the one or more second nodes. The ME data transfer may, for example, be performed between one of a plurality of first computing nodes that are source nodes 202-a2 and one of a plurality of second computing nodes that are destination nodes 202-e. In a complementary example, a data transfer may be an ME data transfer, where a monetary sum may be transferred from a second node of the one or more second nodes to a first node of the one or more first nodes.

For each data transfer of stored data transfer data elements 291, LE evaluation module 211 may determine: (a) an optimal routing path that may provide a maximal expected data transfer revenue and (b) a maximal expected data transfer revenue value corresponding to the determined optimal routing path.

For example, as elaborated herein in relation to Fig. 7, for each data transfer of stored data transfer data elements 291, LE evaluation module 211 may: identify, for each node of the plurality of first nodes (e.g., 202-a2) one or more (e.g., a plurality) of available routing paths for propagating the data transfer between the first node and a second node (e.g., one of destination nodes 202-e); obtain, for each node of the plurality of first nodes 202-a2, a value of at least one cost metric (e.g., a data transfer success fee or value, a data transfer failure fee, an NPV value, etc.) for each available routing path; calculate, for each node of the plurality of first nodes (e.g., 202-a2) and each associated, identified available routing path, the expected data transfer value. For example, LE evaluation module 211 may obtain a value of at least one data transfer parameter for at least one available routing path and applying an expected data transfer revenue function (e.g., as elaborated herein according to Eq. 8) on the at least one data transfer parameter value to produce an expected data transfer revenue pertaining to the at least one available routing path; select, for each node of the plurality of first nodes 202-a2, a routing path from the plurality of available routing paths as optimal, based on the obtained at least one cost metric value. For example, LE evaluation module 211 may select a routing path that may be optimal in a sense that it may correspond to a predefined user preference, such as a minimal data transfer cost and/or a maximal data transfer revenue; and/or determine the best routing path among the one or more optimal routing paths based on the obtained value of the at least one cost metric.

According to some embodiments, LE evaluation module 211 may determine: (a) an optimal routing path that may provide a maximal expected data transfer revenue and (b) a maximal expected data transfer revenue value corresponding to the optimal routing path. Additionally, or alternatively, LE evaluation module 211 may determine: (a) the best routing path that would provide the maximal expected data transfer revenue and (b) a maximal expected data transfer revenue value corresponding to the best routing path.

In another example, the OS performance parameter may be a maximal, overall expected data transfer revenue (e.g., an overall summation value of maximal expected data transfer revenues for a plurality (e.g., all) ME data transfers). A user may dictate their preference to obtain a maximal, overall expected data transfer revenue by, for example, setting a high value to a respective preference weight 251 (e.g., setting a high value to a preference weight 251 associated with a maximal, overall expected data transfer revenue). As elaborated herein, for each data transfer of stored data transfer data elements 291, LE evaluation module 211 may determine: (a) a maximal expected revenue value; and (b) an optimal routing path corresponding to the maximal expected data transfer revenue. LE evaluation module 211 may subsequently accumulate the maximal data transfer revenue values of all data transfers of stored data transfer data elements 291 to obtain the maximal, overall expected data transfer revenue.

In this example, if a maximal overall expected data transfer revenue of one or more simulated computer network 210B exceeds the maximal overall expected data transfer revenue of network 210, then LE evaluation module 211 may produce or generate at least one suggestion 270 that may include at least one OS element (e.g., LE, PE and/or EE) of respective simulated OS network 210A.

Additionally, or alternatively, OS analysis module 230-B may take into consideration a cost that may be associated with at least one OS element. For example, OS analysis module 230-B may evaluate a benefit that may be provided by adding an OS element in relation to a cost that may be caused by that element.

For example, if adding an EE (e.g., opening a new bank account) provides a benefit (e.g., provides an improvement of the maximal overall expected data transfer revenue) that exceeds a cost associated with the addition of the EE (e.g., exceeds a cost of maintaining the bank account) then suggestion 270 may include the addition of the at least one OS element. Otherwise, suggestion 270 may not include the addition of the at least one OS element.

In another example, the OS performance parameter may be a minimal, overall expected data transfer cost. A user may dictate a preference for a minimal overall expected data transfer cost (e.g., by setting a high value to a respective preference weight 251).

For each data transfer of stored data transfer data elements 291, LE evaluation module 211 may determine: (a) a minimal data transfer cost value and (b) an optimal routing path corresponding to the minimal data transfer cost value. LE evaluation module 211 may subsequently accumulate the minimal data transfer cost values of all data transfers of stored data transfer data elements 291 to obtain the expected overall data transfer cost.

In this example, if an overall expected data transfer cost of one or more simulated computer network 210B is below the overall expected data transfer cost of network 210, then LE evaluation module 211 may produce or generate at least one suggestion 270 that may include a perturbation (e.g., an addition) of at least one OS element (e.g., LE, PE and/or EE) of respective simulated OS network 210A.

Additionally, or alternatively, suggestion 270 may include the perturbation (e.g., addition) of the at least one OS element if a cost associated with the perturbation (e.g., addition) of the at least one OS element does not exceed its benefit in reducing the overall expected data transfer cost. For example, suggestion 270 may include addition of a PE (e.g., opening of a local office) and/or addition of an EE (e.g., opening of a bank account) if a cost related to the new OS element (e.g., a monthly cost incurred by the opening of the local office, a monthly cost of maintaining the bank account) does not exceed a respective benefit (e.g., a reduction of a monthly, overall expected data transfer cost).

As elaborated herein, each data transfer may be performed between one or more first nodes (e.g., source node elements 202-a2 of Fig. 13) associated with respective one or more first legal entities (LEs) of an organization and at least one second node (e.g., destination node 202-e) associated with a second entity (e.g., a computing system of a client's bank account and/or paying card issuer).

As elaborated herein, LE evaluation module 211 may identify one or more optimal routing paths corresponding the plurality of first nodes and at least one destination node, and subsequently choose or determine the best routing path among the plurality of optimal routing paths.

For example, LE evaluation module 211 may: identify, for one or more (e.g., each) first node, one or more available routing paths for propagating the data transfer between the first node and the at least one second node; calculate, for one or more (e.g., each) first node and for one or more (e.g., each) associated available routing path a value of the expected data transfer cost; select, for one or more (e.g., each) first node, a routing path from the plurality of available routing paths as optimal, based on the calculation of the expected data transfer cost value (e.g., having the minimal expected data transfer cost); and/or determine the best routing path (e.g., among all first nodes) among the one or more optimal routing paths (e.g., per each first node) based on the calculated expected data transfer cost value obtained value.

According to some embodiments, LE evaluation module 211 may calculate and/or obtain an expected data transfer cost value by: obtaining at least one data transfer parameter for at least one available routing path; and applying an expected data transfer cost function on the at least one data transfer parameter value to produce an expected data transfer cost pertaining to the at least one available routing path.

For example, the expected data transfer cost may be calculated according to Eq. 10 below:

$$\text{Expected data transfer cost} = P_{\text{success}} \text{ x TransactionFee} + P_{\text{Failure}} \text{ x FailureFee}$$

**Eq. 10**

where:

TransactionFee may be calculated as elaborated above in relation to Eq. 6;

$P_{success}$ may be calculated as elaborated above in relation to Eq. 3A;

$P_{Failure}$ may be calculated as elaborated above in relation to Eq. 3B; and

FailureFee may be a fee that may be caused to the organization in case of a failed data transfer.

According to some embodiments of the invention, the one or more cost metrics may include, for example: a data transfer success value or fee, a data transfer failure fee, a data transfer cancellation fee, a currency conversion spread, a currency conversion markup, a net present value (NPV) of a data transfer, a cost associated with a legal entity (e.g., a cost of registering a subsidiary of "Big_Company" in a new country), a cost associated with a physical entity (e.g., a cost associated with maintaining a representative office), and/or a cost associated with an enabling entity (e.g., a cost of opening and maintaining a bank account), as well as additional examples provided herein.

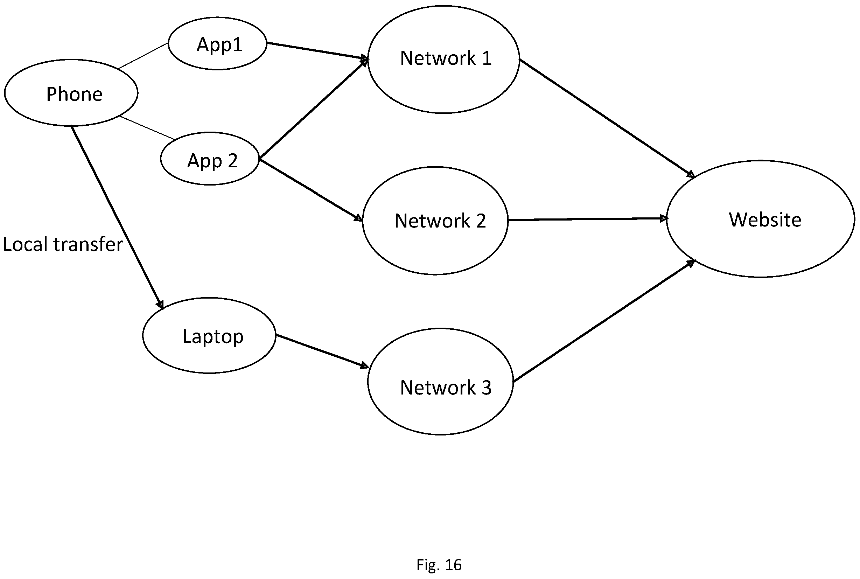

In one example use case, transferring a video file, a user X has a laptop computer and a phone. Both are connected to cellular network providers. The laptop computer is connected to one provider and the phone to two providers (cell, and data). User X would like to upload a video file, currently stored on the phone, to a website. Embodiments of the invention (which may be implemented on, e.g., the phone, computer, or both) may determine that user X has the following options (which may be illustrated in Fig. 16, depicting possible routing paths for Example 1 using some embodiments of the invention):

1) Upload using app 1 (e.g., an application executing on the phone) using network 1.
2) Upload using app 2 using network 1.
3) Upload using app 2 using network 2 (which may be a cellular network).
4) Transfer the file from phone to computer (e.g., via USB) and upload using network 3.

Each option has multiple costs (in electricity, time, storage, network load, etc.) and different probabilities of success. In some embodiments, corresponding cost metrics may be calculated using various multi-parameter functions or objective functions as discussed herein. Embodiments may calculate or estimate cost values, metrics or parameters for the available options using such functions, and choose the option for which, for example, one or a plurality of cost metrics are minimal. Additional parameters in the cost function may, for example, vary over time and depending on various factors, e.g., during an electricity shortage and when using phone battery power, where phone power may be considered more valuable or important compared to times where electricity is available to charge the laptop or phone. Thus option 4 may be chosen by embodiments of the invention even in case uploading using the laptop computer might prove slower, in case the cost associated with using phone power is higher.

In accordance with some of the example scenarios including for example options 1-4 as discussed herein, the phone may be informed by the phone company of electric shortage, and/or by a smart home appliance, and/or by the computer to which it may be connected, and/or by means of automatic detection depending, for example on being connected to a power source but receiving no power, although one skilled in the art would recognize many other sources of information may be used in different embodiments of the invention. A decision tree relating to power usage may be, for example:

```
If(connected to power)
        use phone
If (power outage)
        If(computer has power)
                use computer
        Else(use phone)
Else(not connected to power but no power outage)
        If(phone batter > 60%)
                use phone
        Else_if (computer has power)
                use computer
        Else(use phone)
```

Other workflows and decision trees may be used in different embodiments.

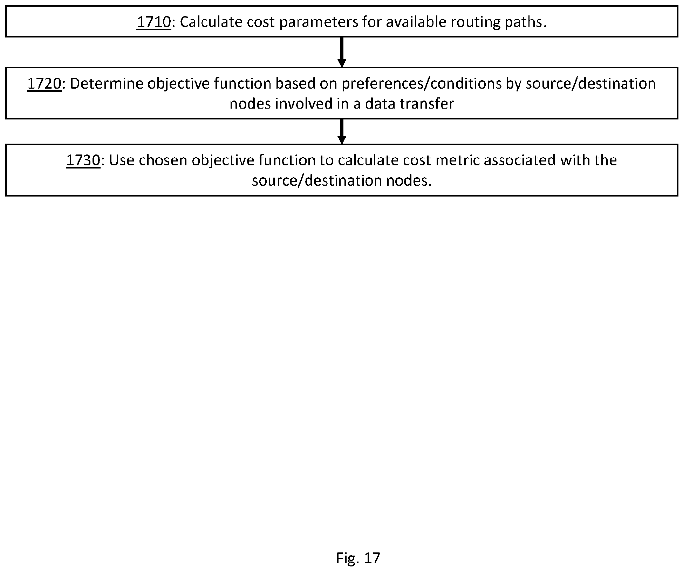

Fig. 17 is a flowchart describing an example calculation of a cost metric according to some embodiments of the invention. In step 1710, cost parameters (associated with different factors such as network or electricity usage as described herein) may be evaluated or calculated by embodiments of the invention for each available routing path. Embodiments may then check preferences or conditions associated with one or more source or destination nodes and determine an appropriate objective function which may be associated with relevant nodes (e.g., describing the cost associated with phone power, given there's a general power outage in the user's neighborhood; step 1720). Embodiments may then use the chosen objective function to calculate the cost or cost metric associated with a particular routing path and the preferences or nodes involved in the relevant data transfer as described herein (step 1730). In some embodiments, the order of steps 1720-1730 may be reversed. Different and more complex cost metric calculation procedures may be used in different embodiments of the invention.

An example evaluation or calculation result or output of step XX may be for example be organized or formatted as a table such as, e.g., shown in Table 3:

Table 3.

| Route | Electricity cost (E) | Time (t) | Monetary cost (M) |
|---|---|---|---|
| App 1, network 1 | 3 | 51 | 0 |
| App 2, network 1 | 3 | 57 | 0$ |
| App 2, network 2 | 4 | 10 | .3$ |
| Phone to computer, network 3 | 1 for phone, 3 for computer | 150 | 0 |

One example objective function according to which cost metrics may be calculated for example be $Cost_1=10M+(0.1)E+t$ (see parameter notation in Table 3 above). Accordingly, the calculated Cost values for the four options in Table 3 may be, e.g.: ~51, ~57, ~13, and ~150 respectively, and thus option 3 may be chosen as optimal. Another example objective function may be, e.g., $Cost_2=10M+50E+(0.1)t$; the corresponding Cost values may accordingly be ~155, ~156, ~204, ~215, respectively, and option 1 may thus be chosen as optimal.

In some embodiments, step XX may include or involve decision trees or similar algorithmic structures for choosing an objective function, for example in order to calculate cost metrics as described herein. An example such algorithm or decision tree relating to phone or computer power and to user preferences as to the urgency or priority of the requested data transfer may be, for example:

```
Start
If phone has electricity connection
        If priority = low
                Choose function A
        Else If priority = high
                Choose function B

Else if phone_power > 50%
        If computer_power > 50%
                If priority = low
                        Choose function D
                Else If priority = high
                        Choose function E
        Else If computer power < 50%
                If priority = low
                        Choose function F
                Else If priority = high
                        Choose function G

Else if phone power < 50%
        If computer power is > 50%
                If priority = low
                        Choose function H
                Else If priority = high
                        Choose function I
        Else If computer power < 50%
                If priority = low
                        Choose function J
                Else If priority = high
                        Choose function K
        End
```

Additional or alternative algorithms and relevant decision trees, involving additional parameters (such as for example the time required for a data transfer, and/or probability of success of the data transfer based on information describing past data transfer) may be used in different embodiments of the invention. A dependent probability of success, as described herein, may be used. For example, in some embodiments, the cost calculated (using, e.g., an objective function as described herein) per routing path may be normalized using a probability of success to determine an additional or updated cost metric. In the above example, probabilities of success for the four available paths may be, e.g., 78%, 91% 87%, and 98% respectively. Accordingly, using, for example, $Cost_1$ herein as an objective function, and using such probabilities of success as normalizing factors on the resulting Cost values, e.g., in the form of (1-P) where P is the probability of success for a given path - the normalized Cost values for the four options may be, e.g.: ~11, ~5.3, ~2, and ~3, respectively, and option 3 may still be chosen as optimal. In another example, a probability of success may be further multiplied or scaled by a data transfer value which may for example quantify the urgency of the data transfer under consideration. For example, a given data transfer value may be v=500 for a given data transfer; then an objective function which may be a reward function such as $Reward_1 = v(P) - Cost_1 = 500(P) - Cost_1$ may be used for choosing an optimal routing path. Again given results obtained using $Cost_1$, Reward values for each of the four routing options may be ~44,949; ~44,943; ~44,987; and ~44,850, respectively - and thus option 3, for which a maximum reward value is calculated, may once more be chosen as optimal.

In another example, there may be a time limit constraint, or a benefit or reward function or factor relating to the time for executing or performing the data transfer. Such function may for example be monotonic, associating higher reward with shorter execution times, but alternative functions may be used in different embodiments. In some embodiments, cost or reward functions and relevant parameters may be updated, for example in real time based on, e.g., successful or failed data transfer execution attempts.

In another example, embodiments may analyze or make assumptions relating to, for example, past failed attempts of performing data transfers. A probability of success or of failure, which may generally be used in different embodiments as demonstrated herein, may be updated, for example, based on information indicating that a particular channel is down, or a posteriori, for example after a threshold number of execution attempts (which may for example change a probability of success to 0%, or a probability of failure to 100%). In some embodiments channels may be ranked according to, e.g., cost values, probabilities of success, and the like, and routing paths may be chosen as optimal and used serially or in parallel, for example, if the first ranked routing paths does not lead to success, then the next ranked path may subsequently be used, etc. Other procedures for updating probabilities of success or of failure may be used in different embodiments of the invention, and such probabilities may accordingly be considered in combination with, e.g., additional or alternative parameters such as preferences and cost metrics in corresponding objective functions as described herein. Dependent probability of success may be used in such embodiments.

In another example, preferences or weights associated with receiver or destination nodes may be sent to and received by a sender or source node, e.g., as DFVs, for example in order to change or update an objective function of the sender node, such as a cost or reward function and related parameters. In such manner, nodes may send FVs to each other such that a relevant sender or source node may determine an optimal routing path which may be preferred or may represent an average of the preferences of a plurality of nodes within the network.

In another example, a user or organization includes a plurality of computer systems being nodes within a communication network or a plurality of networks. Nodes within such networks may include, for example, computer systems operated by the organization's agents, as well as systems operated by customers, suppliers, and the like - as well as various additional systems such as sensors and measurements tools, storage facilities, etc.- which may all communicate by means of various data transfers as demonstrated herein and may for example include or involve different technologies such as phone lines, and dedicated communication apps such as for example WhatsApp, Zoom, and the like. The user or organization may have access or store data describing, e.g., past communication activities (for example, describing all data transfers performed within a given year) and/or operating procedures and costs (which may be associated for example with particulars SLA in contracts or agreements with suppliers or vendors), and/or have predictions for expected trends or events in the upcoming year (which may include, for example, disaster scenarios, such as for example including outage of certain devices, channels or networks in specific geographic areas and under specific weather conditions), and/or consider or options for equipment and/or hardware and/or software changes or renewal (such as for example replacing storage devices, routers, optical fibers, satellite links, power supplies, and the like, to ones having different technical specifications, or changing the connectivity between computer systems within the network, or changing the types or number of networks or communication protocols associated with particular computer systems, and the like). Predictions, potential changes, and additional data and/or information may be fed or incorporated into cost and/or reward functions, which may be used to calculate the corresponding cost or reward metrics associated, for example, with electricity use, network load balancing, battery wear, data transfer times using a given communication protocol, and the like. In this context, embodiments may create a simulated network, for example, by perturbating a value of one or more data elements or structures (such as, e.g., FVs) describing nodes and/or links in the network, or by adding or deleting nodes and/or links in the network - and then calculate or predict performance statistics and/or parameters relating to possible routing paths in the simulated network as described herein. For example some embodiments of the invention may choose an optimal routing path, e.g., during a hurricane based on stored data and information describing network outage and equipment failure during similar past scenarios.

In some embodiments, predictions and associated data and/or information may for example be automatically fetched or collected from, e.g., corresponding data repositories describing for example weather and/or power outage data. In addition, some embodiments may include for example performing inferences on collected data, e.g., using a model such as for example a NN-based or other machine learning based inference model.

In some embodiments, additional variables which may be considered are, for example, service level agreements with suppliers, operation and customer management, and possibly even legal-entity related costs and rewards, although those skilled in the art would recognize that embodiments of the invention are by no means limited or essentially linked with such quantities.

In some embodiments, a given user or node such as a destination node or a source node may be associated with multiple identifiers, or "legal-names" for example where such node is associated with multiple phone numbers, and with a single communication channel. Each number may have a different contract with different networks providers, which could impact everything from SLA to the availability of networks. The first number, for example, may be registered in some networks, the second in other networks, and there may be an overlap between them. Even in the same network, the first may for example be a priority number (better SLA) while the second a regular.

Some embodiments of the invention may route and/or perform a plurality of data transfers for example based on properties and/or features and/or routing paths calculated or determined for simulated networks as described herein. Based on an optimal routing path (which may, for example be selected by NN 214), and based on corresponding cost and/or reward and/or performance metrics or values determined for a simulated network describing a change in one or more entities (such as for example a change in communication protocols or hardware components), embodiments may determine a routing path for a data transfer in the "real", non-simulated network.

In another example in which a user or organization including a plurality of computer systems being nodes within a communication network or a plurality of networks is considered, a simulated network may describe a future, scheduled change of communication protocol between a pair of computer systems or nodes. Embodiments may accordingly calculate or predict that network usage using the future protocol will increase overall yearly network usage X (as manifested in, e.g., the overall number of data packets transferred between any pair of nodes within the network) by an amount Y. Given that the user or organization are constrained to a maximum yearly network usage threshold of Z, and that X+Y>Z, embodiments may automatically route and perform data transfers before the future changing of communication protocol using routing paths that save network usage by an amount of D requiring that (X-D)+Y=Z - even if, e.g., such routing paths offer a lesser likelihood of success. In this context, appropriate cost and/or reward and/or performance parameters or functions may be determined or updated based on for example the properties or attributes calculated using the simulated network, such as, e.g., the increase in overall yearly network usage which must not lead to excess usage over threshold Z. Alternative operations such as routing and/or performing data transfers based on calculated and/or simulated parameters and/or networks may be included or performed by different embodiments of the invention.

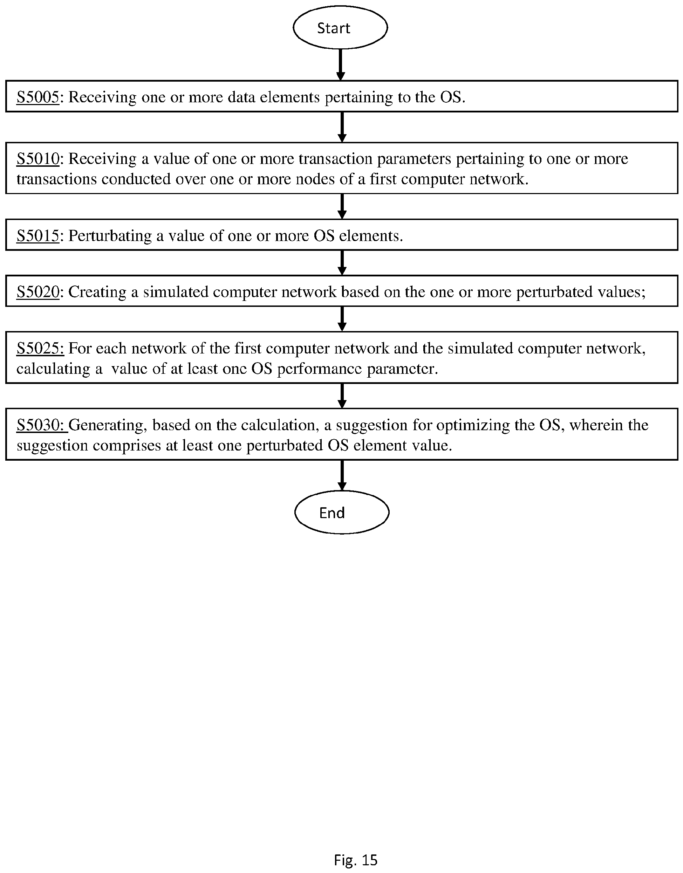

Reference is now made to Fig. 15 which is a flow diagram depicting a method of optimizing a plurality of data items which may, for example, describe or represent an OS by at least one processor, according to some embodiments of the invention.

As shown in step S5005, in some embodiments, the at least one processor (e.g., element 105 of Fig 1 and/or element 201 of Fig. 13) may receive one or more data elements pertaining to the OS. For example, as elaborated herein (e.g., in relation to Fig 14A), the one or more OS data elements may include at least one of: a first data element pertaining to one or more nodes of the first computer network, a second data element pertaining to a physical entity; a third data element pertaining to a legal entity; and a fourth data element pertaining to an enabling entity.

As shown in step S5010, in some embodiments, the at least one processor 210 may receive a value of one or more data transfer parameters pertaining to one or more data transfers conducted over one or more nodes of a first computer network. For example, as elaborated herein (e.g., in relation to Fig. 13), the one or more data transfer parameters may include, for example: one or more properties of a payment, one or more values pertaining to cost metrics, a probability of data transfer success, an identification of one or more source nodes of the first computer network, an identification of a destination node of the first computer network, and the like.

As shown in step S5015, in some embodiments, the at least one processor 210 may perform a perturbation of a value of one or more OS elements. For example, the perturbation may include: addition of an enabling entity, a change to an enabling entity, addition of a legal entity to the organization, a change in a legal entity of the organization, addition of a physical entity, and a change in a physical entity.

As shown in step S5020, in some embodiments, the at least one processor 210 may create a simulated computer network (e.g., element 210B of Fig. 14B), based on the one or more perturbated values, as elaborated herein (e.g., in relation to Fig. 14B).

As shown in step S5025, in some embodiments, for each network of the first computer network and the simulated computer network, the at least one processor 210 may calculate a value of at least one OS performance parameter. For example, the at least one OS performance parameter may include at least one of: a minimal overall expected data transfer cost; a maximal overall expected data transfer revenue; a maximal expected data transfer success probability and a weighted combination of the minimal overall expected data transfer cost an overall expected data transfer revenue and a maximal data transfer success probability.

As shown in step S5030, in some embodiments, the at least one processor 210 may generate a suggestion for optimizing the OS, based on, e.g., the calculation of the value of the at least one OS performance parameter. The suggestion may include at least one perturbated OS element value. For example, if a simulated computer network has or displays an improved value of at least one OS performance parameter in relation to the first computer network, processor 210 may generate a suggestion for optimizing the OS that may include at least one OS data elements (e.g., a computing device or node, a physical entity, a legal entity and/or an enabling entity) associated with the simulated network.

Prior methods and systems for routing data transfers via a computer network may include receiving an identification or indication of a predefined source node and target node and employing a network routing protocol for selecting a path between the given source node and target node. This selection may provide a route that may have technical merits such as a minimal routing time and an optimal load balance among nodes of the network.

Embodiments of the present invention may provide a number of practically applicable improvements of routing data transfers through a computer network, as known in the art of computer networking.

For example, embodiments may include selection of an optimal routing path for a requested data transfer, according to a plurality of data transfer parameters, as elaborated herein, and according to at least one user preference.

Embodiments of the invention may include a dynamic selection of an ordered group of routing paths, and a respective sequence of routing attempts (e.g., a serial sequence, a parallel sequence, and/or a combination thereof). The combination of the selection of routing paths, their order and the sequence of respective routing attempts, as explained herein, may provide an improvement over merely selecting a single routing path, as known in the art.

Embodiments of the present invention may be practically applied for routing data such as data transfers, or choosing a routing path, via computer networks. A practical application of the present invention may include an enhancement of routing path selection as known in the art, by enabling a user to define a set of weighted preferences and optimizing the routing between a source node and a destination node in a communication network according to the personal, predefined preferences.

In contrast to prior routing algorithms, the set of weighted preferences may not be restricted to general, physical properties of the network alone, but may include complex preferences and considerations reserved to each user. For example, in the field of financial data transfers, where the weighted preferences may correspond with a variety of financial, regulatory and practical regional considerations, as elaborated herein, embodiments of the present invention may learn an optimal routing path that may accommodate the preference of specific merchants and clients.

Moreover, in contrast to prior routing algorithms that may select a path between a given source node and target node, embodiments may include an online selection, in real time or near real time, of a source node of a plurality of source nodes.

Thus, embodiments of the system may not just optimize the route between a source node and a destination node, but also find the correct or optimal source node to begin with, taking into consideration the personal definition of source preference weights

Moreover, in contrast to prior routing algorithms that may select a path between a given source node and target node, embodiments may include an online selection, in real time or near real time, of a destination node of a plurality of destination nodes.

Thus, embodiment of the system may not just optimize the route between a source node and a destination node, but also find the correct or optimal destination node, taking into consideration one or more definitions of destination preference weights.

As discussed herein, in some non-limiting example embodiments of the invention relating to ME data transfers, each destination node may be pertinent or corresponding to a respective paying card issuer or banking server. This quality may facilitate an optimization of the financial data transfer from the customer's point of view, and also facilitate negotiation between the merchant and the client, for their mutual benefit, as explained herein.

Embodiments may provide a practical application for client-side optimization of data transfers (e.g., financial data transfers including selection of a paying card and/or method) based on at least one of the client's preferences, data transfer data and environmental data. For example, embodiments may configure a user's smartphone to select a method of payment (e.g., select a specific paying card and/or a number of payments) based on data transfer data (e.g., a price of a product) a predefined preference (e.g., divide the cost to as many payments as possible) and/or environmental data (e.g., a time and location of the user's smartphone).

Furthermore, in embodiments that include a multiple entity paying card, embodiments may automatically, in real time or in near real time configure the multiple entity paying card to represent an optimally selected paying card entity and a respective issuer node.

As elaborated herein, embodiments of the present invention may include a practical application for optimizing the transfer of one or more data transfers via available nodes of a computer network.

For example, embodiments of the invention may provide an improvement over prior systems for transferring computer data transfers by enabling a user (e.g., a member of an organization) to provide one or more preferences (e.g., via preference weights 251) in relation to a data transfer (e.g., an ME data transfer) and selecting an optimal routing path to route or transfer the one or more data transfers using assets (e.g., LEs, EEs and PEs) of the organization and/or nodes of the computer network. The path may be optimal in a sense that it may be selected to best match the user's preferences.

Moreover, embodiments of the invention may provide an improvement over prior systems for transferring computer data transfers by analyzing the OS network (e.g., organizational assets such as LEs, PEs and EEs) and providing a suggestion for improving or changing the organization based on the predefined preferences and data accumulated in relation to previous (e.g., historic) data transfers.

In some of the examples considered herein, an entity initiating communication such as a source node may have multiple options for channels or networks, such as for example VoIP, cellular network, WiFi, satellite, peer-to-peer communication, and, e.g., multiple channels of a given type such as for example three VoIP networks, and so forth. There may be multiple networks of each, multiple providers, and multiple ways to send information over the channel. The receiving entity such as for example a destination node may also have many options as to receiving communications. For example a user may want to send some information and it could go through all of its options or possibly another user's options. If the sender is for example an office there could be many options. It may also be possible that, e.g., communication is not symmetrical, as in sending back uses a different route including different channels, etc..

In such manner, and given N options under the control of the sender and M options under the control of the receiver, there may be at most N*M options for the communication, and multiple options may be tried in parallel or can be tried one after the other to increase the likelihood of success.

Unless explicitly stated, the method embodiments described herein are not constrained to a particular order or sequence. Furthermore, all formulas described herein are intended as examples only and other or different formulas may be used. Additionally, some of the described method embodiments or elements thereof may occur or be performed at the same point in time.

While certain features of the invention have been illustrated and described herein, many modifications, substitutions, changes, and equivalents may occur to those skilled in the art. It is, therefore, to be understood that the appended claims are intended to cover all such modifications and changes as fall within the true spirit of the invention.

Various embodiments have been presented. Each of these embodiments may of course include features from other embodiments presented, and embodiments not specifically described may include various features described herein.

The subject matter of the following clauses also forms part of the present disclosure:

**CLAUSES**

1. A system for routing data transfers between nodes of a computer network, each node connected to at least one other node via one or more links, the system comprising:

   a clustering model;
   at least one neural network;
   a routing engine; and
   at least one processor,

   wherein the at least one processor is configured to:

   receive a request to route a data transfer between two nodes of the computer network;
   extract from the data transfer request, a feature vector (FV), comprising at least one feature; and
   associate the requested data transfer with a cluster of data transfers in the clustering model based on the extracted FV,

      and wherein the neural network is configured to produce a selection of an optimal route for the requested data transfer from a plurality of available routes, based on the FV,
      and wherein the routing engine is configured to route the requested data transfer according to the selection.

2. The system of claim 1, wherein the clustering model is configured to:

   accumulate a plurality of FVs, each comprising at least one feature associated with a respective received data transfer;
   cluster the plurality of FVs to clusters, according to the at least one feature; and
   associate at least one other requested data transfer with a cluster, according to a maximum-likelihood best fit of the at least one other requested data transfer's FV.

3. The system of claim 2, wherein the at least one processor is further configured to attribute at least one group characteristic (GC) to the requested data transfer, based on the association of the requested data transfer with the cluster, and wherein the neural network is configured to produce a selection of an optimal route for the requested data transfer from a plurality of available routes, based on at least one of the FV and GC.

4. The system of claim 3, wherein the GC is selected from a list consisting of: decline propensity, fraud propensity, and expected service time.

5. The system of claim 3, wherein the neural network is configured to select an optimal route for the requested data transfer from a plurality of available routes, based on at least one of the FV and GC and at least one weighted user preference.

6. The system of claim 3, wherein the at least one processor is configured to calculate at least one cost metric, and wherein the neural network is configured to select an optimal route for the requested data transfer from a plurality of available routes, based on at least one of the FV and GC, at least one weighted user preference, and the at least one calculated cost metric.

7. The system of claim 2, wherein each cluster of the clustering model is associated with a respective neural network module, and wherein each neural network module is configured to select at least one routing path for at least one specific data transfer associated with the respective cluster.

8. The system of claim 6, wherein the cost metric includes a calculated network load for one or more data transfers.

9. The system of claim 1, wherein the processor is to:

produce a routing scheme, the scheme including an ordered list of routing paths;
calculate a dependent success probability between two or more of the routing paths; and
if the routing of the requested data transfer fails, amend the routing scheme according to the dependent success probability.

10. A method of routing data transfers within a computer network, method comprising:

receiving, by a processor, a request to route a data transfer between two nodes of the computer network, each node connected to at least one other node via one or more links;
extracting, by the processor, from the data transfer request, a feature vector (FV), comprising at least one feature associated with the requested data transfer;
associating the requested data transfer with a cluster of data transfers in a clustering model based on the extracted FV;
selecting an optimal route for the requested data transfer from a plurality of available routes, based on the FV; and
routing the requested data transfer according to the selection.

11. The method of claim 10, further comprising:

attributing, by the processor, at least one group characteristic (GC) to the requested data transfer, based on the association of the requested data transfer with the cluster;
selecting, by the processor, an optimal route for the requested data transfer from a plurality of available routes based on at least one of the FV and GC.

12. The method of claim 11, further comprising:

receiving, by the processor, at least one at least one weighted user preference to the requested data transfer;
selecting, by the processor, an optimal route for the requested data transfer from a plurality of available routes based on at least one of the FV, GC and at least one weighted user preference.

13. The method of claim 10, wherein associating the requested data transfer with a cluster comprises:

accumulating, by the processor, a plurality of FVs, each comprising at least one feature associated with a respective received data transfer;
clustering the plurality of FVs to clusters in the clustering model, according to the at least one feature; and

associating at least one other requested data transfer with a cluster according to a maximum-likelihood best fit of the at least one other requested data transfer's FV.

14. The method of claim 11, wherein attributing at least one GC to the requested data transfer comprises:

calculating at least one GC for each cluster; and
attributing the received request at least one calculated GC based on the association of the requested data transfer with the cluster.

15. The method of claim 14, wherein the GC is selected from a list consisting of decline propensity, fraud propensity, and expected service time.

16. The method of claim 10, wherein selecting an optimal route for the requested data transfer from a plurality of available routes comprises:

providing at least one of an FV and a GC as a first input to a neural-network;
providing at least one cost metric as a second input to the neural-network;
providing the plurality of available routes as a third input to the neural-network; and
obtaining, from the neural-network a selection of an optimal route based on at least one of the first, second and third inputs.

17. The method of claim 16, further comprising: associating each cluster of the clustering model with a respective neural network module; and configuring each neural network to select at least one routing path for at least one specific data transfer associated with the respective cluster.

18. The method of claim 16, wherein providing at least one cost metric further comprises receiving at least one weight value and determining the cost metric per the at least one available route based on the calculations and the at least one weight value.

19. The method of claim 16, wherein the cost metric includes a calculated network load for one or more data transfers.

20. The method of claim 10, comprising:

producing, by the processor, a routing scheme, the scheme including an ordered list of routing paths;
calculating, by the processor, a dependent success probability between two or more of the routing paths; and
if the routing of the requested data transfer fails, amending, by the processor, the routing scheme according to the dependent success probability.

**Claims**

1. A system for routing data transfers between nodes of a computer network, each node connected to at least one other node via one or more links, the system comprising:

a clustering model;
at least one neural network;
a routing engine; and
at least one processor, wherein the at least one processor is configured to:

receive a request to route a data transfer between two nodes of the computer network;
extract from the data transfer request, a feature vector (FV), comprising at least one feature; and
associate the requested data transfer with a cluster of data transfers by the clustering model based on the extracted FV; and
wherein the neural network is configured to produce a selection of an optimal route for the requested data transfer from a plurality of available routes, based on the FV and based on a cost metric or a reward function which is calculated using at least one of: an objective function, one or more decision trees, a node associated with multiple identifiers, and an update in real time; and
wherein the routing engine is configured to route the requested data transfer according to the selection.

2. The system of claim 1, wherein the clustering model is configured to:

   accumulate a plurality of FVs, each comprising at least one feature associated with a respective received data transfer;
   cluster the plurality of FVs to clusters, according to the at least one feature; and
   associate at least one other requested data transfer with a cluster, according to a maximum-likelihood best fit of the at least one other requested data transfer's FV.

3. The system of claim 2, wherein the at least one processor is further configured to attribute at least one group characteristic (GC) to the requested data transfer, based on the association of the requested data transfer with the cluster, and wherein the neural network is configured to produce a selection of an optimal route for the requested data transfer from a plurality of available routes, based on at least one of the FV and GC.

4. The system of claim 2, wherein each cluster of the clustering model is associated with a respective neural network module, and wherein each neural network module is configured to select at least one routing path for at least one specific data transfer associated with the respective cluster, and wherein each of the neural networks is trained on data derived from one or more transfers similar to the at least one specific data transfer associated with the respective cluster.

5. The system of claim 1, wherein the cost metric includes one or more of: a calculated network load for one or more data transfers, an electricity availability, and a dependent probability of success for one or more of the available routes.

6. The system of claim 1, wherein the processor is to:

   produce a routing scheme, the scheme including an ordered list of routing paths;
   calculate a dependent success probability between two or more of the routing paths; and
   if the routing of the requested data transfer fails, amend the routing scheme according to the dependent success probability.

7. The system of claim 2, wherein the clustering of the plurality of FVs comprises applying an unsupervised machine learning expectation-maximization (EM) algorithm to the plurality of FVs.

8. A computer implemented method of routing data transfers within a computer network, method comprising:

   receiving, by a processor, a request to route a data transfer between two nodes of the computer network, each node connected to at least one other node via one or more links;
   extracting, by the processor, from the data transfer request, a feature vector (FV), comprising at least one feature associated with the requested data transfer;
   associating the requested data transfer with a cluster of data transfers in a clustering model based on the extracted FV;
   selecting, by a neural network, an optimal route for the requested data transfer from a plurality of available routes, based on the FV and based on a cost metric or a reward function which is calculated using at least one of: an objective function, one or more decision trees, a node associated with multiple identifiers, and an update in real time; and
   routing the requested data transfer according to the selection.

9. The method of claim 8, wherein associating the requested data transfer with a cluster comprises:

   accumulating, by the processor, a plurality of FVs, each comprising at least one feature associated with a respective received data transfer;
   clustering, by the clustering model, the plurality of FVs to clusters according to the at least one feature; and
   associating at least one other requested data transfer with a cluster according to a maximum-likelihood best fit of the at least one other requested data transfer's FV.

10. The method of claim 9, further comprising:

    attributing, by the processor, at least one group characteristic (GC) to the requested data transfer, based on the association of the requested data transfer with the cluster;

selecting, by the neural network, an optimal route for the requested data transfer from a plurality of available routes based on at least one of the FV and GC.

11. The method of claim 9, further comprising: associating each cluster of the clustering model with a respective neural network module; and configuring each neural network to select at least one routing path for at least one specific data transfer associated with the respective cluster, wherein each of the neural networks is trained on data derived from one or more transfers similar to the at least one specific data transfer associated with the respective cluster.

12. The method of claim 8, wherein the cost metric includes one or more of: a calculated network load for one or more data transfers, an electricity availability, and a dependent probability of success for one or more of the available routes.

13. The method of claim 8, comprising:

producing, by the processor, a routing scheme, the scheme including an ordered list of routing paths; calculating, by the processor, a dependent success probability between two or more of the routing paths; and if the routing of the requested data transfer fails, amending, by the processor, the routing scheme according to the dependent success probability.

14. The method of claim 9, wherein the clustering of the plurality of FVs comprises applying an unsupervised machine learning expectation-maximization (EM) algorithm to the plurality of FVs.

15. The method of claim 8, wherein the routing is performed using one or more routing protocols selected from the group of: an interior gateway routing protocol (IGRP), an enhanced interior gateway routing protocol (EIGRP), a routing information protocol (RIP), a border gateway protocol (BGP), and an exterior gateway protocol (EGP), wherein the routing comprises including metadata in a transmission control protocol/internet protocol (TCP/IP) packet, and wherein the data transfer comprises sending the TCP/IP packet over a TCP connection.

100

CONTROLLER

105

OPERATING SYSTEM

115

MEMORY

125

EXECUTABLE CODE

120

STORAGE
SYSTEM

130

INPUT
DEVICES

135

OUTPUT DEVICES

140

Fig. 1

Fig. 2

| Merchant<br>202-a | | PSP<br>202-b | | Acquirer<br>202-c | | Card scheme<br>202-d | | Issuer<br>202-e |
|---|---|---|---|---|---|---|---|---|
| | ↔ | | ↔ | | ↔ | | ↔ | |

Fig. 3A

| Merchant<br>202-a | | PSP<br>202-b | | Acquirer<br>202-c | | Card scheme<br>202-d | | Issuer<br>202-e |
|---|---|---|---|---|---|---|---|---|
| | ↔ | | ↔ | | | | ↔ | |

3rd party
202-f

Fig. 3B

Fig. 4

251-b

251-a:
Source
preferences

252: Cost
metric

255 Ext.
conditions

253 FV

220 Clust. model

254 GC

214 N.N.

Input
layer

a    b    c

Output
layer

208 Available
Routes

209 Routing Engine

Fig. 5

Start

S1005: Receiving, by a processor, a request to perform a transaction between two nodes of the computer network, each node connected to at least one other node via one or more link

S1010: Extracting, by the processor, from the transaction request, an FV comprising at least one feature associated with the requested transaction

S1015: Associating the requested transaction with a cluster of transactions in a cluster model based on the extracted FV

S1020: Attributing at least one GC to the requested transaction, based on the association of the requested transaction with the cluster

S1025: Selecting an optimal route for the requested transaction from a plurality of available routes, based on at least one of the FV and GC

S1030: Routing the requested transaction according to the selection

End

Fig. 6

Fig. 7

```
                          ╭───────────╮
                          │   Start   │
                          ╰─────┬─────╯
                                │
                                ▼
┌───────────────────────────────────────────────────────────────────┐
│ S2005: Receiving a transaction request to route a transaction       │
│ between one of a plurality of source nodes and a destination node   │
│ of the computer network.                                            │
└───────────────────────────────────────────────────────────────────┘
                                │
                                ▼
┌───────────────────────────────────────────────────────────────────┐
│ S2010: Extracting from the transaction request one or more          │
│ transaction parameters pertaining to the destination node.          │
└───────────────────────────────────────────────────────────────────┘
                                │
                                ▼
┌───────────────────────────────────────────────────────────────────┐
│ S2015: Receiving a set of preference weights wherein each           │
│ preference weight corresponds to a transaction parameter.           │
└───────────────────────────────────────────────────────────────────┘
                                │
                                ▼
┌───────────────────────────────────────────────────────────────────┐
│ S2020: Selecting a source node from the plurality of source nodes   │
│ based on at least one received preference weight and at least one   │
│ corresponding transaction parameter.                                │
└───────────────────────────────────────────────────────────────────┘
                                │
                                ▼
┌───────────────────────────────────────────────────────────────────┐
│ S2025: Routing the requested transaction through nodes of the       │
│ computer network between the selected source node and the           │
│ destination node.                                                   │
└───────────────────────────────────────────────────────────────────┘
                                │
                                ▼
                          ╭───────────╮
                          │    End    │
                          ╰───────────╯
```

Fig. 8

Fig. 9

```
                              ( Start )
                                  |
                                  v
+-----------------------------------------------------------------+
| S3005: Receiving a transaction request to route a transaction   |
| between a source node and destination node of the computer      |
| network;                                                        |
+-----------------------------------------------------------------+
                                  |
                                  v
+-----------------------------------------------------------------+
| S3010: Identifying a plurality of available routing paths for   |
| propagating the transaction between the source node and         |
| destination node based on the transaction request              |
+-----------------------------------------------------------------+
                                  |
                                  v
+-----------------------------------------------------------------+
| S3015: Obtaining one or more transaction parameters for each    |
| available routing path, based on the transaction request.       |
+-----------------------------------------------------------------+
                                  |
                                  v
+-----------------------------------------------------------------+
| S3020: Receiving a set of preference weights comprising one or  |
| more preference weights, wherein each preference weight of the  |
| received set of preference weights corresponds to a transaction |
| parameter.                                                      |
+-----------------------------------------------------------------+
                                  |
                                  v
+-----------------------------------------------------------------+
| S3025: Selecting one or more routing paths from the plurality   |
| of available routing paths, based on the one or more transaction|
| parameters and respective preference weights.                   |
+-----------------------------------------------------------------+
                                  |
                                  v
+-----------------------------------------------------------------+
| S3030: Producing a routing scheme, comprising an ordered list   |
| of the one or more selected routing paths, according to the     |
| received set of preference weights.                             |
+-----------------------------------------------------------------+
                                  |
                                  v
+-----------------------------------------------------------------+
| S3035: Routing the requested transaction through nodes of the   |
| computer network according to the routing scheme.               |
+-----------------------------------------------------------------+
                                  |
                                  v
                               ( End )
```

Fig. 10

## 200 System

201 Processor

209 Routing Engine

203 Repository

203-d

203-a    203-b    203-c

206

261

271

**210 Computer Network**

202-a1

202-h

202-h2    202-h1

202-h3

202-g

Source node (e.g., merchant LE) 202-a2

PSP 202-b

Acquirer 202-c2

Card scheme 202-d

Destination node (e.g., Issuer) 202-e

Fig. 11

Start

S4005: Receiving a destination feature vector (DFV ) for at least one destination node of a plurality of destination nodes of the computer network.

S4010: Receiving a transaction request to route a transaction between a source node of the computer network and the at least one destination node.

S4015: Extracting from the transaction request one or more transaction parameters

S4020: Selecting a destination node from the plurality of destination nodes based on one or more of the transaction parameters and the DFV of the at least one destination node.

End

Fig. 12

200 System

201 Processor

230-A OS Perturbation module

210B Simulated computer Network

230-B OS analysis module

203 Repository

281 OS data

291 Tr. data

210A Simulated OS Network

211 LE evaluation

209 Routing Engine

270 Suggestion

202-a1

Source node (e.g., merchant LE) 202-a2

PSP 202-b

Acquirer 202-c2

Card scheme 202-d

Destination node (e.g., Issuer) 202-e

210 Computer Network

Fig. 13

210A OS network

Fig. 14A

210B Simulated computer network

Fig. 14B

Start

S5005: Receiving one or more data elements pertaining to the OS.

S5010: Receiving a value of one or more transaction parameters pertaining to one or more transactions conducted over one or more nodes of a first computer network.

S5015: Perturbating a value of one or more OS elements.

S5020: Creating a simulated computer network based on the one or more perturbated values;

S5025: For each network of the first computer network and the simulated computer network, calculating a value of at least one OS performance parameter.

S5030: Generating, based on the calculation, a suggestion for optimizing the OS, wherein the suggestion comprises at least one perturbated OS element value.

End

Fig. 15

Fig. 16

1710: Calculate cost parameters for available routing paths.

1720: Determine objective function based on preferences/conditions by source/destination nodes involved in a data transfer

1730: Use chosen objective function to calculate cost metric associated with the source/destination nodes.

Fig. 17

Europäisches
Patentamt

European
Patent Office

Office européen
des brevets

# EUROPEAN SEARCH REPORT

Application Number

EP 24 18 7535

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/342203 A1 (SELFIN MOSHE [IL] ET AL) 7 November 2019 (2019-11-07)<br>* paragraph [0003] - paragraph [0014] *<br>* paragraph [0051] *<br>* paragraph [0092] *<br>* paragraph [0093] *<br>* paragraph [0099] * | 1-15 | INV.<br>H04L45/02<br>H04L45/12<br><br>ADD.<br>H04L45/00 |
| X | US 2019/340589 A1 (LEVY DANA [IL] ET AL) 7 November 2019 (2019-11-07)<br>* paragraph [0004] - paragraph [0016] *<br>* paragraph [0117] *<br>* paragraph [0157] *<br>* paragraph [0158] *<br>* paragraph [0267] * | 1-15 | |
| X<br>A | US 2016/359740 A1 (PARANDEHGHEIBI ALI [US] ET AL) 8 December 2016 (2016-12-08)<br>* paragraph [0083] - paragraph [0091] * | 1,8<br>2-7,9-15 | |
| X<br>A | US 2022/067046 A1 (KATROULIS ANGELO [US]) 3 March 2022 (2022-03-03)<br>* paragraph [0061] - paragraph [0069] * | 1,8<br>2-7,9-15 | TECHNICAL FIELDS SEARCHED (IPC)<br>H04L<br>H04W |

The present search report has been drawn up for all claims

| Place of search | Date of completion of the search | Examiner |
|---|---|---|
| The Hague | 20 November 2024 | Ciurel, Cristian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

....................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 18 7535

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2024

| Patent document cited in search report | Publication date | Patent family member(s) | | Publication date |
|---|---|---|---|---|
| US 2019342203 A1 | 07-11-2019 | CN | 114641787 A | 17-06-2022 |
| | | EP | 4018402 A1 | 29-06-2022 |
| | | US | 2019342203 A1 | 07-11-2019 |
| | | US | 2019379595 A1 | 12-12-2019 |
| | | WO | 2021033184 A1 | 25-02-2021 |
| US 2019340589 A1 | 07-11-2019 | NONE | | |
| US 2016359740 A1 | 08-12-2016 | US | 2016357424 A1 | 08-12-2016 |
| | | US | 2016357587 A1 | 08-12-2016 |
| | | US | 2016357957 A1 | 08-12-2016 |
| | | US | 2016359592 A1 | 08-12-2016 |
| | | US | 2016359628 A1 | 08-12-2016 |
| | | US | 2016359658 A1 | 08-12-2016 |
| | | US | 2016359673 A1 | 08-12-2016 |
| | | US | 2016359677 A1 | 08-12-2016 |
| | | US | 2016359678 A1 | 08-12-2016 |
| | | US | 2016359679 A1 | 08-12-2016 |
| | | US | 2016359680 A1 | 08-12-2016 |
| | | US | 2016359686 A1 | 08-12-2016 |
| | | US | 2016359696 A1 | 08-12-2016 |
| | | US | 2016359697 A1 | 08-12-2016 |
| | | US | 2016359698 A1 | 08-12-2016 |
| | | US | 2016359699 A1 | 08-12-2016 |
| | | US | 2016359701 A1 | 08-12-2016 |
| | | US | 2016359703 A1 | 08-12-2016 |
| | | US | 2016359704 A1 | 08-12-2016 |
| | | US | 2016359705 A1 | 08-12-2016 |
| | | US | 2016359708 A1 | 08-12-2016 |
| | | US | 2016359709 A1 | 08-12-2016 |
| | | US | 2016359711 A1 | 08-12-2016 |
| | | US | 2016359712 A1 | 08-12-2016 |
| | | US | 2016359740 A1 | 08-12-2016 |
| | | US | 2016359759 A1 | 08-12-2016 |
| | | US | 2016359877 A1 | 08-12-2016 |
| | | US | 2016359878 A1 | 08-12-2016 |
| | | US | 2016359879 A1 | 08-12-2016 |
| | | US | 2016359880 A1 | 08-12-2016 |
| | | US | 2016359881 A1 | 08-12-2016 |
| | | US | 2016359888 A1 | 08-12-2016 |
| | | US | 2016359889 A1 | 08-12-2016 |
| | | US | 2016359890 A1 | 08-12-2016 |
| | | US | 2016359891 A1 | 08-12-2016 |
| | | US | 2016359897 A1 | 08-12-2016 |
| | | US | 2016359912 A1 | 08-12-2016 |
| | | US | 2016359913 A1 | 08-12-2016 |

EPO FORM P0459

For more details about this annex : see Official Journal of the European Patent Office, No. 12/82

page 1 of 3

## ANNEX TO THE EUROPEAN SEARCH REPORT
## ON EUROPEAN PATENT APPLICATION NO.

EP 24 18 7535

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2024

| Patent document cited in search report | Publication date | Patent family member(s) | Publication date |
|---|---|---|---|
| | | US 2016359914 A1 | 08-12-2016 |
| | | US 2016359917 A1 | 08-12-2016 |
| | | US 2017034018 A1 | 02-02-2017 |
| | | US 2018270129 A1 | 20-09-2018 |
| | | US 2019182132 A1 | 13-06-2019 |
| | | US 2019215253 A1 | 11-07-2019 |
| | | US 2019253330 A1 | 15-08-2019 |
| | | US 2019260653 A1 | 22-08-2019 |
| | | US 2019306035 A1 | 03-10-2019 |
| | | US 2019334790 A1 | 31-10-2019 |
| | | US 2020052984 A1 | 13-02-2020 |
| | | US 2020112493 A1 | 09-04-2020 |
| | | US 2020112494 A1 | 09-04-2020 |
| | | US 2020136940 A1 | 30-04-2020 |
| | | US 2020228426 A1 | 16-07-2020 |
| | | US 2020244554 A1 | 30-07-2020 |
| | | US 2020267066 A1 | 20-08-2020 |
| | | US 2020304390 A1 | 24-09-2020 |
| | | US 2020313986 A1 | 01-10-2020 |
| | | US 2020351184 A1 | 05-11-2020 |
| | | US 2020358676 A1 | 12-11-2020 |
| | | US 2021144073 A1 | 13-05-2021 |
| | | US 2021152443 A1 | 20-05-2021 |
| | | US 2021160157 A1 | 27-05-2021 |
| | | US 2021176145 A1 | 10-06-2021 |
| | | US 2021243093 A1 | 05-08-2021 |
| | | US 2021377136 A1 | 02-12-2021 |
| | | US 2021392059 A1 | 16-12-2021 |
| | | US 2022038353 A1 | 03-02-2022 |
| | | US 2022116292 A1 | 14-04-2022 |
| | | US 2022131773 A1 | 28-04-2022 |
| | | US 2022141103 A1 | 05-05-2022 |
| | | US 2022407787 A1 | 22-12-2022 |
| | | US 2023014842 A1 | 19-01-2023 |
| | | US 2023040556 A1 | 09-02-2023 |
| | | US 2023079606 A1 | 16-03-2023 |
| | | US 2023123258 A1 | 20-04-2023 |
| | | US 2023300044 A1 | 21-09-2023 |
| | | US 2024015083 A1 | 11-01-2024 |
| | | US 2024015084 A1 | 11-01-2024 |
| | | US 2024163188 A1 | 16-05-2024 |
| | | US 2024205118 A1 | 20-06-2024 |
| | | US 2024214285 A1 | 27-06-2024 |
| | | US 2024380680 A1 | 14-11-2024 |
| US 2022067046 A1 | 03-03-2022 | US 2022067046 A1 | 03-03-2022 |

EPO FORM P0459

For more details about this annex : see Official Journal of the European Patent Office, No. 12/82

page 2 of 3

**ANNEX TO THE EUROPEAN SEARCH REPORT
ON EUROPEAN PATENT APPLICATION NO.**

EP 24 18 7535

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2024

| Patent document cited in search report | Publication date | Patent family member(s) | Publication date |
|---|---|---|---|
| | | WO 2022047335 A1 | 03-03-2022 |

For more details about this annex : see Official Journal of the European Patent Office, No. 12/82

page 3 of 3